(19) Europäisches Patentamt
European Patent Office
Office européen des brevets

(11) **EP 3 455 932 B1**

(12) **EUROPÄISCHE PATENTSCHRIFT**

(45) Veröffentlichungstag und Bekanntmachung des Hinweises auf die Patenterteilung:
**19.07.2023  Patentblatt 2023/29**

(21) Anmeldenummer: **17721721.3**

(22) Anmeldetag: **08.05.2017**

(51) Internationale Patentklassifikation (IPC):
*H02M 3/158* (2006.01)    *H02M 7/537* (2006.01)
*H02M 3/155* (2006.01)    *H02M 7/48* (2007.01)
*B60L 15/00* (2006.01)

(52) Gemeinsame Patentklassifikation (CPC):
**H02M 3/1582; B60L 15/007; H02M 7/48;**
H02M 1/0095; H02M 3/1557; Y02T 10/64

(86) Internationale Anmeldenummer:
**PCT/EP2017/060938**

(87) Internationale Veröffentlichungsnummer:
**WO 2017/194477 (16.11.2017 Gazette 2017/46)**

(54) **VORRICHTUNG UND VERFAHREN ZUR ERZEUGUNG EINER WECHSELSPANNUNG**

DEVICE AND METHOD FOR GENERATING AN AC VOLTAGE

DISPOSITIF ET PROCÉDÉ POUR PRODUIRE UNE TENSION ALTERNATIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.05.2016  DE 102016207941**

(43) Veröffentlichungstag der Anmeldung:
**20.03.2019  Patentblatt 2019/12**

(73) Patentinhaber:
• **Fraunhofer-Gesellschaft zur Förderung der angewandten Forschung e.V.**
**80686 München (DE)**
• **Hochschule für angewandte Wissenschaften Hamburg**
**20099 Hamburg (DE)**

(72) Erfinder:
• **KAPELS, Holger**
**23843 Bad Oldesloe (DE)**
• **YU, Zhe**
**24558 Henstedt-Ulzburg (DE)**

(74) Vertreter: **Burger, Markus et al**
**Schoppe, Zimmermann, Stöckeler**
**Zinkler, Schenk & Partner mbB**
**Patentanwälte**
**Radlkoferstraße 2**
**81373 München (DE)**

(56) Entgegenhaltungen:
**EP-A2- 1 168 593        EP-A2- 2 048 774**
**WO-A1-2010/051812     WO-A1-2015/193003**
**CH-B1- 699 364          CN-U- 203 674 732**
**DE-A1-102005 015 658  DE-A1-102005 024 465**
**JP-A- 2011 130 571      US-A1- 2010 019 705**
**US-A1- 2014 078 802    US-A1- 2014 334 213**
**US-A1- 2015 372 615**

• **MYRZIK JOHANNA: "Topologische Untersuchungen zur Anwendung von tief-hochsetzenden Stellern für Wechselrichter", TOPOLOGISCHE UNTERSUCHUNGEN ZUR ANWENDUNG VON TIEF-, HOCHSETZENDEN STELLERN FÜR WECHSELRICHTER, KASSEL UNIV. PRESS, KASSEL, 1 January 2001 (2001-01-01), pages 1-175, XP008103662, ISBN: 978-3-933146-62-5**

**Beschreibung**

Ein Ausführungsbeispiel der vorliegenden Erfindung bezieht sich auf eine dreiphasige Wechselrichtervorrichtung. Ein weiteres Ausführungsbeispiel bezieht sich auf eine Dreiphasen-Gleichrichterschaltung. Ein Ausführungsbeispiel bezieht sich auf die Erzeugung einer Wechselspannung mittels DC/DC-Wandlern ohne galvanische Trennung mit hochsetz- und tiefsetzenden Funktion.

Hintergrund der Erfindung

Die dezentrale Erzeugung, Verteilung, Umwandlung und Bereitstellung von elektrischer Energie gewinnt seit geraumer Zeit immer mehr an Bedeutung. Verschiedene Anwendungsszenarien erfordern dabei eine Vielzahl an unterschiedlichen Formen der Umwandlung der elektrischen Energie. Dabei besitzen einfache Gleichspannungswandler ebenso Anwendungsgebiete wie drei- oder mehrphasige Wechselrichter. Sehr wichtig sind unter anderem Wechselrichter, die als einphasige Wechselrichter oder mehrphasige Wechselrichter betrieben werden können, aber auch Wechselrichter für die unterbrechungsfreie Stromversorgung, für Energiespeicher-Vorrichtungen oder für Energiespeicher-Anbindungen. Im Bereich der Wechselrichter werden heute vier Schaltungen bzw. Topologien vielfach eingesetzt. Die Vollbrücke, die "HERIC-Schaltung" ("Hocheffiziente und zuverlässige Wechselrichter-Schaltung", engl.: "High Efficient and Reliable Inverter Concept"), die "H5-Schaltung" ("Vollbrücke mit zusätzlichem Blockierschalter-Schaltung") und die NPC1-Schaltung ("Neutralpunktverschaltete-Schaltung", engl.: "neutral point clamped"). In den vorgenannten Schaltungstopologien werden die Leistungshalbleiter hart ein- und ausgeschaltet. Vollbrücken- oder Halbbrücken-Wechselrichter-Topologien können daher bei einigen Arbeitspunkten einen guten Wirkungsgrad erreichen, jedoch diesen nicht über den gesamten Arbeitsbereich erzielen. Die Vollbrücke, die HERIC- und die H5-Topologie werden so betrieben, dass die tiefliegenden (tiefseitigen/"Low-Side"-)Schalter bei der Grundfrequenz der Ausgangswechselspannung betrieben werden und die hochliegenden (hochseitigen/"High-Side"-)Schalter bei höherer Schaltfrequenz. Die NPC1-Topologie wird so betrieben, dass die inneren Schalter ebenfalls bei der Grundfrequenz der Ausgangswechselspannung betrieben werden und die äußeren Schalter bei höherer Schaltfrequenz betrieben werden.

US 2015/372615 beschreibt Schaltungen und Verfahren für photovoltaische Inverter. Ein Leistungsinverter wird beschrieben. Der Inverter umfasst einen Eingangsanschluss für eine Gleichstromquelle, die mit einem ersten Leiter gekoppelt ist. Eine erste Seite eines Kondensators ist mit dem Eingangsanschluss gekoppelt. Ein zweiter Eingangsanschluss für die Gleichstromquelle ist mit den ersten Seiten eines ersten Schalters und eines zweiten Schalters gekoppelt. Eine zweite Seite des Kondensators ist mit (den) ersten Seiten eines dritten Schalters und eines vierten Schalters gekoppelt. Eine erste Seite einer ersten Induktivität ist mit dem ersten Eingangsanschluss, der ersten Seite des Kondensators und dem ersten Leiter gekoppelt. Eine zweite Seite der ersten Induktivität ist mit den zweiten Seiten des ersten Schalters und des dritten Schalters gekoppelt. Eine erste Seite einer zweiten Induktivität ist mit einem zweiten Leiter gekoppelt.

Die JP 2011/130571 A beschreibt eine Steuerung für eine Leistungskonverterschaltung.

Die US 2010/019705 A1 beschreibt eine elektrische Leistungskonverterschaltung und eine Steuereinrichtung für eine elektrische Mehrphasenrotationsmaschine. Eine elektrische Leistungskonverterschaltung, die zwischen einem 3-Phasen-Motor und einer Batterie geschaltet ist, fixiert eine Spannung einer V-Phase des 3-Phasen-Motors auf ein Spannungspotential einer positiven Elektrode der Batterie. Eine Konvertereinheit ist für jede der U- und W-Phasen des 3-Phasen-Motors vorgesehen. Jede der Konvertereinheiten umfasst einen Chopper-Schaltungsteil und einen Kondensator. Jede der Konvertereinheiten wandelt eine Spannung der Batterie in eine gewünschte Spannung. Die Spannung von jeder der U- und W-Phasen wird eingestellt, bis die Spannung zweimal so hoch ist wie die Spannung an der Batterie.

Die WO 2010 051812 A1 beschreibt eine photovoltaische Energiequelle mit einer Offset-Spannungsquelle, die ein Gleichspannungspotential an dem Inverterausgang steuert. Die Energiequelle umfasst eine Offset-Spannungsquelle, die ein Gleichspannungspotenzial an den AC-Ausgängen steuert. Dadurch wird indirekt ein Großteil des AC-Potentials an den DC-Eingängen kontrolliert, und es wird erreicht, dass die Potenziale an den Anschlüssen der Photovoltaik-Module alle nicht negativ oder alle nicht positiv sind.

Die Veröffentlichung "Topologische Untersuchungen zur Anwendung von tief- hochsetzenden Stellern für Wechselrichter" von J. Myrzik beschreibt verschiedene Topologien von Leistungskonvertern.

Die US 2014/334213 A1 beschreibt eine Schalteranordnung für einen Inverter und einen Inverter. Der Inverter umfasst einen positiven Gleichstromanschluss, einen negativen Gleichstromanschluss und einen neutralen Gleichstromanschluss. Die Anordnung umfasst einen ersten steuerbaren Schalter, der zwischen den neutralen Gleichstromanschluss des Inverters und einen virtuellen Neutralpunkt eines Wechselstromnetzwerks geschaltet ist. Alternativ oder zusätzlich umfasst die Anordnung einen zweiten steuerbaren Schalter, der zwischen den neutralen Gleichstromanschluss des Inverters und ein Erdpotential eines Wechselstromnetzwerks, das durch den Inverter gespeist wird, geschaltet ist.

Die DE 10 205 024 465 A1 beschreibt eine Schaltungsanordnung und ein Steuerungsverfahren für einen Umrichter. Die Brückenschaltung ist als Schaltbrücke mit zwei in Reihe miteinander verbundenen Schaltereinheiten ausgeführt, zu denen jeweils eine Freilaufdiode antiparallel geschaltet ist. Im Mittelabgriff der Brückenschaltung ist über eine Verbindungsleitung, die eine Speicherdrossel enthält, mit einem ersten Wechselspannungsanschluss verbunden, während der Neutralleiter mit einem zweiten Wechselspannungsanschluss verbunden ist. Zwischen der Verbindungsleitung und dem Neutralleiter ist eine Weichenschaltung mit Schalterelementen angeordnet. Eine Steuerungseinrichtung steuert die Weichenschaltung in Abhängigkeit von erfassten Betriebsbedingungen oder gemäß einem festgelegten Taktschema an, um bedarfsweise eine Kommutierung des im Freilaufzustand durch die Speicherdrossel fließenden Stroms zu den Zwischenspeichern zu verhindern und/oder eine Leistungskombination zwischen den Gleichspannungszweigen zu erreichen.

Die US 2014/0078802 A1 beschreibt einen Gleichspannungs-/Wechselspannungskonverter. Der Gleichspannungs-/Wechselspannungskonverter hat zwei Gleichspannungseingangsanschlüsse, zwischen die ein Energie-Puffer-Kondensator geschaltet ist. Der Konverter umfasst zwei Ausgangsspannungsanschlüsse, die mit einem Filter-Abschnitt verbunden sind. Ferner gibt es eine Schaltanordnung, die aktive Schalter und Freilaufdioden umfasst.

WO2015/193003 A1 beschreibt einen Hoch/Tiefsetzsteller als Phasenumrichter für eine elektrische Maschine.

EP1168593A2 beschreibt eine Vorrichtung zur mechanischen Krafterzeugung und einen Wechselrichter.

EP2048774A2 beschreibt ein elektrisches Drehsystem mit sterngeschalteten Mehrphasen-Ständerwicklungen.

DE102005015658A1 beschreibt eine Schalteinrichtung zur Verknüpfung elektrischer Spannungsebenen in einem Kraftfahrzeug.

CH699364B1 beschreibt ein Drehstromantriebssystem mit motorintegriertem Hochfrequenz-Trafo zur bidirektionalen Kopplung der Versorgungsspannungen.

In Anbetracht dessen besteht der Wunsch, ein neuartiges Konzept zur Erzeugung einer Wechselspannung zu schaffen, das es ermöglicht, einen verbesserten Kompromiss aus Wirkungsgrad, Oberschwingungserzeugung, elektromagnetischer Verträglichkeit und Kosten zu schaffen.

Zusammenfassung der Erfindung

Ausführungsbeispiele gemäß der vorliegenden Erfindung werden durch die unabhängigen Ansprüche definiert. Optionale Verbesserung werden durch die abhängigen Ansprüche definiert.

Es sei darauf hingewiesen, dass hierin beschriebene Ausführungsformen, die nicht alle Merkmale eines unabhängigen Anspruchs, oder Äquivalente davon, enthalten, für das Verständnis der vorliegenden Erfindung hilfreich sind und hierin auch als Vergleichsbeispiele bezeichnet werden.

Ein Vergleichsbeispiel schafft eine Vorrichtung zur Erzeugung einer Wechselspannung, die zwischen einem ersten Ausgangsspannungsanschluss und einem zweiten Ausgangsspannungsanschluss anliegt. Die Vorrichtung zur Erzeugung einer Wechselspannung weist dabei einen Gleichspannungs-Gleichspannungs-Wandler auf, der ausgelegt ist, um basierend auf einer Eingangsspannung eine Ausgangsspannung zu erzeugen, wobei die Eingangsspannung zwischen einer Eingangsspannungszuführung und einem Bezugspotentialknoten anliegt.

Weiterhin ist der Gleichspannungs-Gleichspannungs-Wandler so ausgelegt, dass dieser die Ausgangsspannung so erzeugt, dass der erste Ausgangsspannungsanschluss zeitweise ein Potential aufweist, das positiver ist als das an der Eingangsspannungszuführung anliegende Potential, und dass der erste Ausgangsspannungsanschluss zeitweise ein Potential aufweist, das negativer ist als das an der Eingangsspannungszuführung anliegende Potential. Weiterhin ist der zweite Ausgangsspannungsanschluss mit der Eingangsspannungszuführung gekoppelt. Damit ist mit der Erfindung die Möglichkeit gegeben, eine Wechselspannung an den beiden Ausgangsspannungsanschlüssen, d. h. zwischen dem ersten Ausgangsspannungsanschluss und dem zweiten Ausgangsspannungsanschluss, zur Verfügung zu stellen.

Der Grundgedanke der Erfindung kann darin gesehen werden, dass ein festes Potential, das im Wesentlichen dem Potential der Eingangsspannung bzw. dem Potential der Eingangsspannungszuführung entspricht, als Bezugspotential der Ausgangsspannung genutzt werden kann. Dadurch ist es zum Beispiel möglich, mit einfachen Gleichspannungs-Gleichspannungs-Wandlern positive und negative Ausgangsspannungen zu erzeugen. Zudem ergeben sich durch die Festlegung des ausgangsseitigen Bezugspotentials im Hinblick auf z. B. Verschiebungsströme Verbesserungen.

Gemäß einem Vergleichsbeispiel der Vorrichtung zur Erzeugung einer Wechselspannung weist der leistungsübertragende Teil des Gleichspannungs-Gleichspannungs-Wandlers keine galvanische Trennung auf. Dies bietet den Vorteil, dass der erste Ausgangsspannungsanschluss gegenüber dem Bezugspotentialknoten nicht potentialfrei ("floatend") ist.

Gemäß einem weiteren Vergleichsbeispiel der Vorrichtung zur Erzeugung einer Wechselspannung ist der Gleichspannungs-Gleichspannungs-Wandler ausgelegt, um als Hochsetzsteller und als Tiefsetzsteller zu wirken. Dies besitzt den Vorteil, dass das Potential des ersten Ausgangsspannungsanschlusses in Bezug auf den zweiten Ausgangsspannungsanschluss positiver sein kann und dass das Potential des ersten Ausgangsspannungsanschlusses ebenfalls negativer sein kann als das Potential des zweiten Ausgangsspannungsanschlusses. Dies ermöglicht es, eine Ausgangswechselspannung zwischen dem ersten Ausgangsspannungsanschluss und dem zweiten Ausgangsspannungsanschluss bereitzustellen.

Gemäß einem weiteren Vergleichsbeispiel der Vorrichtung zur Erzeugung einer Wechselspannung ist der Gleichspannungs-Gleichspannungs-Wandler ausgelegt, um in einem ersten Zeitabschnitt einer Schwingungsperiode der Wechselspannung als Hochsetzsteller zu wirken und um in einem zweiten Zeitabschnitt der Schwingungsperiode der Wechselspannung als Tiefsetzsteller zu wirken. Dies besitzt den Vorteil, dass eine Wechselspannung zwischen dem ersten Ausgangsspannungsanschluss und dem zweiten Ausgangsspannungsanschluss bereitgestellt werden kann.

Gemäß einem weiteren Vergleichsbeispiel der Vorrichtung zur Erzeugung einer Wechselspannung wechselt das Potential des ersten Ausgangsspannungsanschlusses seine Polarität bezogen auf das Potential des zweiten Ausgangsspannungsanschlusses. Dies bietet den Vorteil, dass ebenfalls eine Wechselspannung, d. h. eine Spannung mit positiver und negativer Polarität, zwischen dem ersten Ausgangsspannungsanschluss und dem zweiten Ausgangsspannungsanschluss zur Verfügung gestellt werden kann.

Gemäß einem weiteren Vergleichsbeispiel der Vorrichtung zur Erzeugung einer Wechselspannung ist der Gleichspannungs-Gleichspannungs-Wandler so ausgelegt, dass der erste Ausgangsspannungsanschluss bezogen auf das Bezugspotential an dem Bezugspotentialknoten einen zeitveränderlichen Potentialverlauf aufweist. Dies bietet den Vorteil, dass die Ausgangsspannungsanschlüsse, d. h. der erste Ausgangsspannungsanschluss und der zweite Ausgangsspannungsanschluss, eine Wechselspannung zur Verfügung stellen können.

Gemäß einem weiteren Vergleichsbeispiel der Vorrichtung zur Erzeugung einer Wechselspannung ist der Gleichspannungs-Gleichspannungs-Wandler so ausgelegt, dass der erste Ausgangsspannungsanschluss einen zeitveränderlichen, sich periodisch wiederholenden Potentialverlauf aufweist. Dies bietet den Vorteil, dass die Ausgangsspannungsanschlüsse eine cosinusförmige/sinusförmige Ausgangsspannung zur Verfügung stellen können, die beispielsweise in Bezug auf eine Schaltungsmasse einen Mittelwert aufweist.

Gemäß einem weiteren Vergleichsbeispiel der Vorrichtung zur Erzeugung einer Wechselspannung ist der Gleichspannungs-Gleichspannungs-Wandler so ausgelegt, dass der erste Ausgangsspannungsanschluss in Bezug auf den zweiten Ausgangsspannungsanschluss einen zeitveränderlichen, sich periodisch wiederholenden, mittelwertfreien Potentialverlauf aufweist. Dies bietet den Vorteil, dass an den Anschlussklemmen eine Wechselspannungslast betrieben werden kann. Dabei ist die Wechselspannungslast dadurch gekennzeichnet, dass diese einen mittelwertfreien Potentialverlauf erfordert.

Gemäß einem weiteren Vergleichsbeispiel der Vorrichtung zur Erzeugung einer Wechselspannung unterscheidet sich der Mittelwert des Potentialverlaufs an dem ersten Ausgangsspannungsanschluss von dem Potential an der Eingangsspannungszuführung um höchstens 10 %. Dies bietet den Vorteil, dass an den Ausgangsspannungsanschlüssen eine Wechselspannungslast angeschlossen werden kann, die eine Wechselspannung ohne oder mit geringem Mittelwert erfordert.

Gemäß einem weiteren Vergleichsbeispiel der Vorrichtung zur Erzeugung einer Wechselspannung ist die Amplitude des Potentialverlaufs an dem ersten Ausgangsspannungsanschluss zumindest 30 % des Wertes der Eingangsspannung. Dies bietet den Vorteil, dass eine signifikante Wechselspannung an den Ausgangsspannungsanschlüssen anliegt. Weiterhin bietet dies den Vorteil, dass eine Wechselspannungslast, die zwischen dem Ausgangsknoten und der Eingangsspannungszuführung angebracht ist, die eine Wechselspannung in der Größenordnung der Eingangsspannung benötigt, betrieben werden kann.

Gemäß einem weiteren Vergleichsbeispiel der Vorrichtung zur Erzeugung einer Wechselspannung weist der Gleichspannungs-Gleichspannungs-Wandler entweder eine "Tief- und Hochsetzsteller-Schaltung" ("Non-Inverting Buck-Boost Converter") oder eine "Hoch- und Tiefsetzsteller-Schaltung" ("Non-inverting Boost-Buck Converter") oder eine "Unsymmetrischer-Wandler-mit-eingangsseitiger-Induktivität-Schaltung" (engl.: "single ended primary inductance converter", "SEPIC-Schaltung") oder eine "Zeta-Schaltung" auf. Dies bietet den Vorteil, dass eine der vorgenannten, bekannten Schaltungstopologien eingesetzt werden kann. Diesen bekannten Gleichspannungs-Gleichspannungs-Wandlertopologien können mit einer Vielzahl an Konzepten z. B. zur Verlustleistungsverringerung kombiniert werden. Weiterhin ist die erfindungsgemäße Lösung nicht auf die genannten Wandler beschränkt. Andere Wandlertopologien als die genannten können in Verbindung mit der Erfindung ebenfalls positive und/oder negative Ausgangsspannungen bereitstellen, wenn diese eine Hoch- und/oder Tiefsetzsteller-Funktion erfüllen, bevorzugt eine Hoch- und Tiefsetzsteller-Funktion. Ohne die erfindungsgemäße Lösung sind die Polaritäten der Ausgangsspannung von Gleichspannungs-Gleichspannungs-Wandlern hingegen im Allgemeinen auf eine Polarität festgelegt.

Gemäß einem weiteren Vergleichsbeispiel der Vorrichtung zur Erzeugung einer Wechselspannung weist der Gleichspannungs-Gleichspannungs-Wandler mindestens einen Leistungsschalter auf und der Gleichspannungs-Gleichspannungs-Wandler ist ausgelegt, den Leistungsschalter oder mindestens einen der Leistungsschalter weich zu schalten. Dies bietet den Vorteil, dass Schaltverluste, die bei dem Schalten eines Leistungsschalters entstehen, deutlich verringert werden können.

Gemäß einem weiteren Vergleichsbeispiel der Vorrichtung zur Erzeugung einer Wechselspannung weist der Gleichspannungs-Gleichspannungs-Wandler mindestens einen Leistungsschalter auf und weiterhin ist eine Schaltentlastungseinrichtung ausgelegt oder sind mehrere Schaltentlastungseinrichtungen ausgelegt, den Leistungsschalter oder mehrere der Leistungsschalter weich zu schalten. Dies bietet den Vorteil, dass zum Beispiel eine Verbesserung der elektromagnetischen Verträglichkeit erzielt werden kann.

Ein Vergleichsbeispiel schafft eine Schaltungsanordnung zur Erzeugung einer Ausgangswechselspannung für eine Energiesenke, wobei die Schaltungsanordnung zur Erzeugung einer Ausgangswechselspannung einen Gleichspannungs-Gleichspannungs-Wandler aufweist, der ausgelegt ist, um basierend auf einer Eingangsspannung eine Ausgangsspannung zu erzeugen. Die Eingangsspannung liegt dabei zwischen einer Eingangsspannungszuführung und einem Bezugspotentialknoten an.

Weiterhin ist der Gleichspannungs-Gleichspannungs-Wandler ausgelegt, um die Ausgangsspannung so zu erzeugen, dass ein Ausgangsknoten zeitweise ein Potential aufweist, das positiver ist als das an der Eingangsspannungszuführung anliegende Potential. Weiter ist der Gleichspannungs-Gleichspannungs-Wandler so ausgelegt, dass der Ausgangsknoten zeitweise ein Potential aufweist, das negativer ist als das an der Eingangsspannungszuführung anliegende Potential. Weiterhin ist die Energiesenke an den Ausgangsknoten und an die Eingangsspannungszuführung angekoppelt, so dass die Potentialdifferenz zwischen der Eingangsspannungszuführung und dem Ausgangsknoten einer an der Energiesenke anliegenden Spannung entspricht. Damit ist mit der Erfindung die Möglichkeit gegeben, dass ein Potential an dem Ausgangsknoten gegenüber dem Potential an der Eingangsspannungszuführung durch den Gleichspannungs-Gleichspannungs-Wandler zeitlich veränderlich eingestellt wird. Somit ist es möglich, eine Wechselspannungslast an den Ausgangsklemmen, d. h. der Eingangsspannungszuführung und dem Ausgangsknoten, zu betreiben.

Gemäß einem weiteren Vergleichsbeispiel der Schaltungsanordnung zur Erzeugung einer Ausgangswechselspannung weist der leistungsübertragende Teil des Gleichspannungs-Gleichspannungs-Wandlers keine galvanische Trennung auf. Dies bietet den Vorteil, dass der Ausgangsknoten gegenüber dem Bezugspotentialknoten nicht potentialfrei ("floatend") ist.

Gemäß einem weiteren Vergleichsbeispiel der Schaltungsanordnung zur Erzeugung einer Ausgangswechselspannung ist der Gleichspannungs-Gleichspannungs-Wandler ausgelegt, um als Hochsetzsteller und als Tiefsetzsteller zu wirken. Dies hat den Vorteil, dass der Ausgangsknoten in Bezug auf die Eingangsspannungszuführung ein positiveres oder ein negativeres Potential aufweisen kann. Weiterhin ist es möglich, das Potential im Betrieb laufend zu ändern.

Gemäß einem weiteren Vergleichsbeispiel der Schaltungsanordnung zur Erzeugung einer Ausgangswechselspannung ist der Gleichspannungs-Gleichspannungs-Wandler ausgelegt, um in einem ersten Zeitabschnitt einer Schwingungsperiode der Ausgangswechselspannung als Hochsetzsteller zu wirken und weiterhin ist der Gleichspannungs-Gleichspannungs-Wandler ausgelegt, um in einem zweiten Zeitabschnitt der Schwingungsperiode der Ausgangswechselspannung als Tiefsetzsteller zu wirken. Dies bietet den Vorteil, dass das Potential des Ausgangsknotens in einem ersten Zeitabschnitt einer Wechselspannungsperiode eine positive Halbschwingung (Halbwelle) beschreibt, und dass das Potential des Ausgangsknotens in einem zweiten Zeitabschnitt einer Wechselspannungsperiode eine negative Halbschwingung (Halbwelle) beschreibt, bezogen beispielsweise auf die Eingangsspannungszuführung. Dadurch ist es möglich, dass eine Wechselspannungslast, die an den Ausgangsknoten und an die Eingangsspannungszuführung gekoppelt ist, um diese Wechselspannungslast mit elektrischer Leistung zu versorgen.

Gemäß einem weiteren Vergleichsbeispiel der Schaltungsanordnung zur Erzeugung einer Ausgangswechselspannung wechselt das Potential des Ausgangsknotens seine Polarität bezogen auf das Potential der Eingangsspannungszuführung. Dies bietet den Vorteil, dass eine Wechselspannungslast zwischen dem Ausgangsknoten und der Eingangsspannungszuführung betrieben werden kann. Weiterhin besteht ein Vorteil darin, dass ein Bezugspotential der Wechselspannungslast durch die Eingangsspannungszuführung und deren Potential auf einem festen Niveau verharren kann.

Gemäß einem weiteren Vergleichsbeispiel der Schaltungsanordnung zur Erzeugung einer Ausgangswechselspannung ist der Gleichspannungs-Gleichspannungs-Wandler so ausgelegt, dass der Ausgangsknoten bezogen auf das Bezugspotential an dem Bezugspotentialknoten einen zeitveränderlichen Potentialverlauf aufweist. Dies bietet den Vorteil, dass eine Ausgangswechselspannung zwischen dem Ausgangsknoten und der Eingangsspannungszuführung abgegriffen werden kann.

Gemäß einem weiteren Vergleichsbeispiel der Schaltungsanordnung zur Erzeugung einer Ausgangswechselspannung ist der Gleichspannungs-Gleichspannungs-Wandler so ausgelegt, dass der Bezugspotentialknoten in Bezug auf die Eingangsspannungszuführung einen zeitveränderlichen, sich periodische wiederholenden Potentialverlauf aufweist. Dies bietet den Vorteil, dass die Wechselspannungslast mit einer sinusförmigen Ausgangsspannung in Bezug auf eine Schaltungsmasse beaufschlagt werden kann. Dabei kann ein zeitlicher Mittelwert der Ausgangswechselspannung z. B. in Höhe des Betrages der Eingangsspannung vorliegen.

Gemäß einem weiteren Vergleichsbeispiel der Schaltungsanordnung zur Erzeugung einer Ausgangswechselspannung ist der Gleichspannungs-Gleichspannungs-Wandler so ausgelegt, dass der Ausgangsknoten in Bezug auf die Eingangsspannungszuführung einen zeitveränderlichen, sich periodisch wiederholenden, mittelwertfreien Potentialverlauf aufweist. Dieses bietet den Vorteil, dass eine Wechselspannungslast, die zwischen dem Ausgangsknoten und der Eingangsspannungszuführung angeschlossen ist, die keinen Mittelwert der Eingangsspannung verträgt, betrieben werden kann.

Gemäß einem weiteren Vergleichsbeispiel der Schaltungsanordnung zur Erzeugung einer Ausgangswechselspannung unterscheidet sich ein Mittelwert des Potentialverlaufs an dem Ausgangsknoten von dem Potential an der Eingangsspannungszuführung um höchstens 10 % der Eingangsspannung. Dieses bietet den Vorteil, dass eine Wechselspannungslast, die keinen, beziehungsweise nur einen geringen, Gleichanteil der Eingangswechselspannung verträgt, an der Schaltungsanordnung zur Erzeugung einer Ausgangswechselspannung betrieben werden kann.

Gemäß einem weiteren Vergleichsbeispiel der Schaltungsanordnung zur Erzeugung einer Ausgangswechselspannung ist die Amplitude des Potentialverlaufs an dem Ausgangsknoten zumindest 30 % des Wertes der Eingangsspannung. Dies bietet den Vorteil, dass eine Wechselspannungslast, die zwischen dem Ausgangsknoten und der Eingangsspannungszuführung angebracht ist, die eine Wechselspannung in der Größenordnung der Eingangsspannung benötigt, betrieben werden kann.

Gemäß einem weiteren Vergleichsbeispiel der Schaltungsanordnung zur Erzeugung einer Ausgangswechselspannung weist der Gleichspannungs-Gleichspannungs-Wandler eine "Tief- und Hochsetzsteller-Schaltung" (Non-inverting Buck-Boost Converter) auf oder eine "Hoch- und Tiefsetzsteller-Schaltung" (Non-inverting Boost-Buck Converter) auf oder eine "Unsymmetrischer-Wandler-mit-eingangsseitiger-Induktivität-Schaltung" (engl.: "single ended primary inductance converter", "SEPIC-Schaltung") auf oder eine "Zeta-Schaltung" auf.

Gemäß einem weiteren Vergleichsbeispiel der Schaltungsanordnung zur Erzeugung einer Ausgangswechselspannung weist der Gleichspannungs-Gleichspannungs-Wandler mindestens einen Leistungsschalter auf und weiterhin ist der Gleichspannungs-Gleichspannungs-Wandler ausgelegt, den Leistungsschalter oder mindestens einen der Leistungsschalter weich zu schalten. Dies bietet den Vorteil, dass eine Verbesserung der elektromagnetischen Verträglichkeit der Schaltungsanordnung zur Erzeugung einer Ausgangswechselspannung erzielt werden kann.

Gemäß einem weiteren Vergleichsbeispiel der Schaltungsanordnung zur Erzeugung einer Ausgangswechselspannung weist der Gleichspannungs-Gleichspannungs-Wandler mindestens einen Leistungsschalter auf. Weiterhin ist eine Schaltentlastungseinrichtung ausgelegt oder es sind mehrere Schaltentlastungseinrichtungen ausgelegt, den Leistungsschalter oder mehrere der Leistungsschalter weich zu schalten. Dies bietet neben einer möglichen Verbesserung der elektromagnetischen Verträglichkeit den weiteren Vorteil, dass die Schaltverluste der Leistungsschalter verringert werden können.

Ein Vergleichsbeispiel schafft ein Verfahren zur Erzeugung einer Ausgangswechselspannung für eine Energiesenke, wobei das Verfahren Folgendes umfasst: Betreiben eines Gleichspannungs-Gleichspannungs-Wandlers, wobei eine Eingangsspannung zwischen einer Eingangsspannungszuführung und einem Bezugspotentialknoten anliegt und wobei eine Ausgangsspannung so erzeugt wird, dass ein Ausgangsknoten zeitweise ein Potential aufweist, das positiver ist als das an der Eingangsspannungszuführung anliegende Potential. Weiterhin wird die Ausgangsspannung so erzeugt, dass der Ausgangsknoten zeitweise ein Potential aufweist, das negativer ist als das an der Eingangsspannungszuführung anliegende Potential.

Weiterhin weist das Verfahren ein Abgreifen der Ausgangswechselspannung für die Energiesenke zwischen dem Ausgangsknoten und der Eingangsspannungszuführung auf, sodass die Potentialdifferenz zwischen der Eingangsspannungszuführung und dem Ausgangsknoten einer an der Energiesenke anliegenden Spannung entspricht.

Dieses Verfahren bietet den Vorteil, dass eine Wechselspannungslast an den Ausgangsklemmen, d. h. zwischen dem Ausgangsknoten und der Eingangsspannungszuführung, betrieben werden kann.

Ein weiteres Vergleichsbeispiel schafft einen Wechselrichter zur Erzeugung einer Wechselspannung aus einer Gleichspannung, wobei der Wechselrichter einen Eingangsgleichspannungsanschluss aufweist, der ausgelegt ist, um mit einer Eingangsgleichspannung beaufschlagt zu werden.

Weiterhin weist der Wechselrichter eine Vorrichtung zur Erzeugung einer Wechselspannung auf, wobei die Vorrichtung zur Erzeugung einer Wechselspannung einen Gleichspannungs-Gleichspannungs-Wandler aufweist, der ausgelegt ist, um basierend auf einer Eingangsspannung eine Ausgangsspannung zu erzeugen. Dabei liegt die Eingangsspannung zwischen einer Eingangsspannungszuführung und einem Bezugspotentialknoten an. Weiterhin ist der Gleichspannungs-Gleichspannungs-Wandler ausgelegt, um die Ausgangsspannung so zu erzeugen, dass ein erster Ausgangsspannungsanschluss zeitweise ein Potential aufweist, das positiver ist als das an der Eingangsspannungszuführung anliegende Potential, und so, dass der erste Ausgangsspannungsanschluss zeitweise ein Potential aufweist, das negativer ist als das an der Eingangsspannungszuführung anliegende Potential. Weiterhin ist ein zweiter Ausgangsspannungsanschluss mit der Eingangsspannungszuführung gekoppelt. Der Wechselrichter weist weiterhin einen Ausgangswechselspannungsanschluss auf, der ausgelegt ist, um eine Ausgangswechselspannung bereitzustellen.

Dabei sind die Eingangsspannungszuführung und der Bezugspotentialknoten der Vorrichtung zur Erzeugung einer Wechselspannung mit zwei Kontakten des Eingangsgleichspannungsanschlusses gekoppelt. Der erste Ausgangsspannungsanschluss und der zweite Ausgangsspannungsanschluss der Vorrichtung zur Erzeugung einer Wechselspannung sind weiterhin mit Kontakten des Ausgangswechselspannungsanschlusses gekoppelt. Diese Anordnung bietet den Vorteil, dass eine Wechselspannung zur Verfügung gestellt werden kann, wobei diese Wechselspannung aus einer Gleichspannung erzeugt wird.

Ein Vergleichsbeispiel schafft eine Energiespeicher-Vorrichtung zur Bereitstellung einer Wechselspannung unter Verwendung eines Gleichspannungsenergiespeichers, wobei die Energiespeicher-Vorrichtung einen Gleichspannungsenergiespeicher aufweist, der ausgelegt ist, Energie zu speichern und die Energie als Gleichspannung zur Verfügung zu stellen.

Weiterhin weist die Energiespeicher-Vorrichtung eine Vorrichtung zur Erzeugung einer Wechselspannung auf, wobei die Vorrichtung zur Erzeugung einer Wechselspannung einen Gleichspannungs-Gleichspannungs-Wandler aufweist, der ausgelegt ist, um basierend auf einer Eingangsspannung eine Ausgangsspannung zu erzeugen. Die Eingangsspannung liegt dabei zwischen einer Eingangsspannungszuführung und einem Bezugspotentialknoten an. Weiterhin ist der Gleichspannungs-Gleichspannungs-Wandler ausgelegt, um die Ausgangsspannung so zu erzeugen, dass ein erster Ausgangsspannungsanschluss zeitweise ein Potential aufweist, das positiver ist als das an der Eingangsspannungszuführung anliegende Potential, und so, dass der erste Ausgangsspannungsanschluss zeitweise ein Potential aufweist, das negativer ist als das an der Eingangsspannungszuführung anliegende Potential. Weiterhin ist ein zweiter Ausgangsspannungsanschluss mit der Eingangsspannungszuführung der Vorrichtung zur Erzeugung einer Wechselspannung gekoppelt.

Weiterhin weist die Energiespeicher-Vorrichtung einen Ausgangswechselspannungsanschluss auf, der ausgelegt ist, um eine Ausgangswechselspannung bereitzustellen. Der Gleichspannungsenergiespeicher ist hierbei mit der Eingangsspannungszuführung und dem Bezugspotentialknoten der Vorrichtung zur Erzeugung einer Wechselspannung gekoppelt und der erste Ausgangsspannungsanschluss und der zweite Ausgangsspannungsanschluss der Vorrichtung zur Erzeugung einer Wechselspannung sind mit Kontakten des Ausgangswechselspannungsanschlusses gekoppelt. Diese Energiespeicher-Vorrichtung zur Bereitstellung einer Wechselspannung unter Verwendung eines Gleichspannungsenergiespeichers bietet den Vorteil, dass aus einem Gleichspannungsenergiespeicher eine Wechselspannung erzeugt werden kann. Dies kann z. B. in Hybridfahrzeuge/Elektrofahrzeuge-Anwendungen Gebrauch finden.

Figurenkurzbeschreibung

Vergleichsbeispiele und Ausführungsbeispiele der vorliegenden Erfindung werden nachfolgend Bezug nehmend auf die beiliegenden Figuren näher erläutert. Es zeigen:

Fig. 1    eine schematische Darstellung einer Vorrichtung zur Erzeugung einer Wechselspannung gemäß einem ersten Vergleichsbeispiel;

Fig. 2    eine schematische Darstellung einer Schaltungsanordnung zur Erzeugung einer Ausgangswechselspannung gemäß einem zweiten Vergleichsbeispiel;

Fig. 3    eine schematische Darstellung einer Vorrichtung zur Erzeugung einer Wechselspannung und eine Darstellung von den Zeitverläufen dreier Spannungen gemäß einem dritten Vergleichsbeispiel;

Fig. 4    eine schematische Darstellung einer Vorrichtung zur Erzeugung einer Wechselspannung mit einer "Tief- und Hochsetzsteller-Schaltung" gemäß einem vierten Vergleichsbeispiel;

Fig. 5    eine schematische Darstellung einer Vorrichtung zur Erzeugung einer Wechselspannung mit einer "Hoch- und Tiefsetzsteller-Schaltung" gemäß einem fünften Vergleichsbeispiel;

Fig. 6    eine schematische Darstellung einer Vorrichtung zur Erzeugung einer Wechselspannung mit einer "Unsymmetrischer-Wandler-mit-eingangsseitiger-Induktivität-Schaltung" gemäß einem sechsten Vergleichsbeispiel;

Fig. 7    eine schematische Darstellung einer Vorrichtung zur Erzeugung einer Wechselspannung mit einer "Zeta-Schaltung" gemäß einem siebten Vergleichsbeispiel;

Fig. 8    ein Flussdiagramm eines Verfahrens gemäß einem Vergleichsbeispiel;

Fig. 9    eine schematische Darstellung eines Wechselrichters zur Erzeugung einer Wechselspannung aus einer Gleichspannung;

Fig. 10    eine schematische Darstellung einer Energiespeicher-Vorrichtung zur Bereitstellung einer Wechselspannung unter Verwendung eines Gleichspannungsenergiespeichers;

Fig. 11a-d vier schematische Darstellungen des Standes der Technik;

Fig. 12 eine schematische Darstellung eines dreiphasigen Wechselrichters gemäß einem achten Vergleichsbeispiel;

Fig. 13 eine schematische Darstellung eines dreiphasigen Wechselrichters mit einer "Tief- und Hochsetzsteller-Schaltung" gemäß einem neunten Vergleichsbeispiel;

Fig. 14 eine schematische Darstellung eines dreiphasigen Wechselrichters gemäß einem Ausführungsbeispiel der vorliegenden Erfindung;

Fig. 15a, b eine schematische Darstellung einer Vorrichtung zur Erzeugung einer Gleichspannung und eine Darstellung von den Zeitverläufen dreier Spannungen gemäß einem zehnten Vergleichsbeispiel;

Fig. 16a, b zwei schematische Darstellungen einer Vorrichtung zur Erzeugung einer Gleichspannung mit einer "Tief- und Hochsetzsteller-Schaltung" gemäß einem elften Vergleichsbeispiel;

Fig. 17 eine schematische Darstellung eines Dreiphasen-Gleichrichters gemäß einem zwölften Vergleichsbeispiel;

Fig. 18 eine schematische Darstellung eines Dreiphasen-Gleichrichters mit einer "Tief- und Hochsetzsteller-Schaltung" gemäß einem dreizehnten Vergleichsbeispiel; und

Fig. 19 eine schematische Darstellung eines Dreiphasen-Gleichrichters gemäß einem zweiten Ausführungsbeispiel der vorliegenden Erfindung.

Detaillierte Beschreibung der Vergleichsbeispiele und Ausführungsbeispiele

Nachfolgend werden verschiedene Vergleichsbeispiele und mögliche Ausführungsbeispiele gemäß der vorliegenden Erfindung aufgeführt, welche beispielsweise die Erfindung eines Konzepts zur Erzeugung einer Wechselspannung realisieren können.

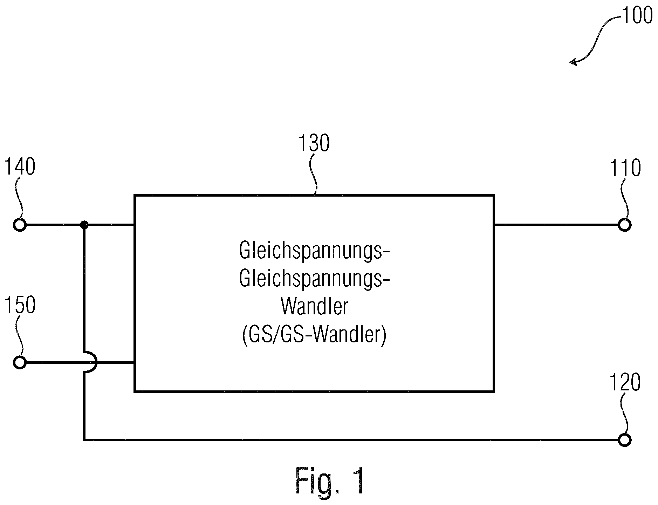

Vergleichsbeispiel gemäß Fig. 1

Fig. 1 zeigt eine schematische Darstellung einer Vorrichtung zur Erzeugung einer Wechselspannung 100, die einen ersten Ausgangsspannungsanschluss 110 aufweist und einen zweiten Ausgangsspannungsanschluss 120 aufweist. Weiterhin weist die Vorrichtung zur Erzeugung einer Wechselspannung 100 einen Gleichspannungs-Gleichspannungs-Wandler (GS-GS-Wandler, DC/DC-Wandler) 130 auf. Dieser Gleichspannungs-Gleichspannungs-Wandler 130 wird mit einer Eingangsspannung versorgt, die zwischen einer Eingangsspannungszuführung 140 und einem Bezugspotentialknoten 150 angelegt werden kann. Weiterhin ist die Eingangsspannungszuführung 140 mit dem zweiten Ausgangsspannungsanschluss 120 gekoppelt.

Diese Kopplung zwischen der Eingangsspannungszuführung 140 und dem zweiten Ausgangsspannungsanschluss 120 kann z. B. direkt, ohne schaltendes Bauteil und ohne taktend schaltendes Bauteil ausgeführt sein. Weiterhin kann es sinnvoll sein, dass die Kopplung zwischen der Eingangsspannungszuführung 140 und dem zweiten Ausgangsspannungsanschluss 120 niederinduktiv beziehungsweise niederimpedant ausgeführt ist. Weiterhin ist eine niederohmige Kopplung zwischen der Eingangsspannungszuführung 140 und dem zweiten Ausgangsspannungsanschluss 120, d. h. z. B. mit weniger als 5 $\Omega$, sinnvoll. Auch kann es sinnvoll sein, dass die Kopplung zwischen der Eingangsspannungszuführung 140 und dem zweiten Ausgangsspannungsanschluss 120 direkt, bzw. statisch ausgeführt ist.

Weiterhin ist es sinnvoll, dass die Kopplung zwischen der Eingangsspannungszuführung 140 und dem zweiten Ausgangsspannungsanschluss 120 so ausgeführt ist, dass die Potentialdifferenz zwischen der Eingangsspannungszuführung 140 und dem zweiten Ausgangsspannungsanschluss 120 kleiner als beispielsweise 10 % einer Amplitude der zwischen erstem Ausgangsspannungsanschluss 110 und zweitem Ausgangsspannungsanschluss 120 anliegenden Wechselspannung ist.

Der Gleichspannungs-Gleichspannungs-Wandler 130 kann so ausgeführt sein, dass dieser eine Ausgangsspannung so erzeugen kann, dass der erste Ausgangsspannungsanschluss zeitweise ein Potential aufweist, das positiver ist als das an der Eingangsspannungszuführung 140 anliegende Potential. Weiterhin kann der Gleichspannungs-Gleichspannungs-Wandler 130 so ausgeführt sein, dass dieser eine Ausgangsspannung erzeugen kann, sodass der erste Ausgangsspannungsanschluss 110 zeitweise ein Potential aufweist, das niedriger ist als das an der Eingangsspannungszuführung 140 anliegende Potential. Dies kann so gesehen werden, dass der Gleichspannungs-Gleichspannungs-Wandler 130 eine Aufwärts-Abwärts-Wandler-Funktion einnehmen kann.

Weiterhin ist es sinnvoll, dass das Potential an dem ersten Ausgangsspannungsanschluss 110 gegenüber dem Potential an dem Bezugspotentialknoten 150 durch den Gleichspannungs-Gleichspannungs-Wandler 130 zeitlich veränderlich eingestellt werden kann.

Der Gleichspannungs-Gleichspannungs-Wandler 130 kann dabei so ausgeführt sein, dass der leistungsübertragende Teil des Gleichspannungs-Gleichspannungs-Wandlers 130 keine galvanische Trennung aufweist. Dies kann so gesehen werden, dass der Gleichspannungs-Gleichspannungs-Wandler 130 nicht potentialgetrennt ist bzw. keine Potentialtrennung aufweist. Dies bezieht sich insbesondere auf den leistungsübertragenden Teil der Schaltung. Weiterhin kann dies so gesehen werden, dass der erste Ausgangsspannungsanschluss 110 gegenüber dem Bezugspotentialknoten 150 nicht potentialfrei (englisch (engl.): "floatend") ist.

Weiterhin ist es sinnvoll, dass der Gleichspannungs-Gleichspannungs-Wandler 130 so ausgelegt ist, dass dieser als Hochsetzsteller und als Tiefsetzsteller wirken kann. Der DC/DC-Wandler kann also Ausgangsspannungen erzeugen, die zeitweise kleiner und zeitweise größer als die Eingangsspannung sind, der DC/DC-Wandler muss hingegen aber nicht notwendigerweise die Topologie eines Hochsetzstellers oder eines Tiefsetzstellers haben. Vielmehr wird damit nur bezeichnet, dass der Gleichspannungs-Gleichspannungs-Wandler 130 ausgelegt ist, dass das Potential an dem ersten Ausgangsspannungsanschluss 110 positiver als das Potential der Eingangsspannungszuführung 140 sein kann und dass das Potential des ersten Ausgangsspannungsanschlusses 110 ebenfalls negativer als das Potential der Eingangsspannungszuführung 140 sein kann. Dies kann durch eine geeignete Schaltungstopologie erzielt werden.

Weiterhin ist es sinnvoll, dass der Gleichspannungs-Gleichspannungs-Wandler 130 ausgelegt ist, um in einem ersten Zeitabschnitt eine Schwingungsperiode der Wechselspannung als Hochsetzsteller zu wirken und in einem zweiten Zeitabschnitt der Schwingungsperiode der Wechselspannung als Tiefsetzsteller zu wirken. Auch hier ist wiederum nur die Wirkweise der höheren Ausgangsspannung bzw. niedrigeren Ausgangsspannung in Bezug auf eine Eingangsspannungszuführung 140 gemeint. Es werden nicht explizit die Topologien des Hochsetzstellers bzw. des Tiefsetzstellers darunter verstanden.

Der Gleichspannungs-Gleichspannungs-Wandler 130 kann wiederum so ausgelegt sein, dass das Potential des ersten Ausgangsspannungsanschlusses 110 seine Polarität bezogen auf das Potential des zweiten Ausgangsspannungsanschlusses 120 wechselt. Beispielsweise kann die Potentialdifferenz zwischen dem ersten Ausgangsspannungsanschluss 110 und dem zweiten Ausgangsspannungsanschluss 120 ihr Vorzeichen wechseln. Dafür kann insbesondere eine geeignete Ansteuerung des Gleichspannungs-Gleichspannungs-Wandlers 130 nötig sein. Eine steuernde Größe des Gleichspannungs-Gleichspannungs-Wandlers 130 kann weiterhin so ausgelegt sein, dass das Potential des ersten Ausgangsspannungsanschlusses 110 gegenüber dem zweiten Ausgangsspannungsanschluss 120 sein Vorzeichen wechselt. Weiterhin ist es möglich, dass die Verwendung des Gleichspannungs-Gleichspannungs-Wandlers 130 so gesehen werden kann, dass der erste Ausgangsspannungsanschluss 110 seine Polarität bezogen auf ein Potential der Eingangsspannungszuführung 140 ändert.

Weiterhin kann die Vorrichtung zur Erzeugung einer Wechselspannung 100 so ausgelegt sein, dass der Gleichspannungs-Gleichspannungs-Wandler 130 geeignet ist, dass dieser ein Potential an dem ersten Ausgangsspannungsanschluss 110 erzeugen kann, das einen zeitveränderlichen Verlauf aufweist. Dabei ist das Potential des ersten Ausgangsspannungsanschlusses 110 z. B. bezogen auf das Bezugspotential an dem Bezugspotentialknoten 150.

Weiterhin kann die Vorrichtung zur Erzeugung einer Wechselspannung 100 so ausgelegt sein, dass der Gleichspannungs-Gleichspannungs-Wandler 130 geeignet ist, dass ein zeitveränderliches, periodisch wiederholendes Potential an dem ersten Ausgangsspannungsanschluss 110 auftritt. Damit kann z. B. eine sinusförmige oder cosinusförmige Ausgangsspannung an dem ersten Ausgangsspannungsanschluss 110 erzeugt werden, wobei diese sinusförmige oder cosinusförmige Ausgangsspannung einen Mittelwert bezogen auf eine Schaltungsmasse aufweisen kann. Eine Schaltungsmasse kann dabei z. B. dem Potential eines Bezugspotentialknotens 150. Der Begriff "sinusförmig" und der Begriff "cosinusförmig" kann stets durch den jeweils anderen Betriff ersetzt werden, da diese sich nur durch einen Zeitversatz unterscheiden. Weiterhin mit sinusförmigen/cosinusförmigen Verlauf ein Verlauf bezeichnet, der näherungsweise sinusförmig/cosinusförmig ist. Z. B. kann damit eine Abweichung des realen Verlaufs von 10 % von einem mathematisch genauen Verlauf gemeint sein.

Die Vorrichtung zur Erzeugung einer Wechselspannung 100 kann weiterhin so ausgelegt sein, dass der erste Ausgangsspannungsanschluss 110 in Bezug auf den zweiten Ausgangsspannungsanschluss 120 ein zeitveränderliches, sich periodisch wiederholendes, mittelwertfreies Potential aufweist bzw. einen zeitveränderlichen, periodisch wiederholenden, mittelwertfreien Potentialverlauf aufweist. Dies kann so geschehen, dass die Ausgangsspannung an dem ersten Ausgangsspannungsanschluss 110 einen cosinusförmigen Potentialverlauf mit einem Mittelwert bezogen auf einen Bezugspotentialknoten 150 aufweist, wobei dieser Mittelwert betragsmäßig mit einer Toleranz von z. B. 10 % der Eingangsspannung, d. h. der Potentialdifferenz zwischen der Eingangsspannungszuführung 140 und dem Bezugspotentialknoten 150, entspricht.

Die Vorrichtung zur Erzeugung einer Wechselspannung 100 kann so ausgelegt sein, dass sich ein Mittelwert des Potentialverlaufs an dem ersten Ausgangsspannungsanschluss 110 von dem Potential an der Eingangsspannungszuführung 140 um höchstens 10 % der Eingangsspannung unterscheidet. Hierbei können die beiden Potentiale auf ein gemeinsames Potential bezogen sein. Dies kann z. B. das Potential des Bezugspotentialknotens 150 sein.

Weiterhin kann die Vorrichtung zur Erzeugung einer Wechselspannung 100 so ausgelegt sein, dass die Amplitude des Potentialverlaufs an dem ersten Ausgangsspannungsanschluss 110 zumindest 30 % des Wertes der Eingangsspannung, d. h. der Potentialdifferenz zwischen der Eingangsspannungszuführung 140 und dem Bezugspotentialknoten 150, ist.

Weiterhin ist es denkbar, dass die Vorrichtung zur Erzeugung einer Wechselspannung 100 so ausgelegt ist, dass der Gleichspannungs-Gleichspannungs-Wandler 130 einen Leistungsschalter aufweist. Dieser Leistungsschalter kann so angesteuert werden oder durch eine Schaltentlastungseinrichtung so beeinflusst werden, dass dieser weich schaltet. Dies kann eine Verbesserung der elektromagnetischen Verträglichkeit und/oder der Schaltverluste nach sich ziehen.

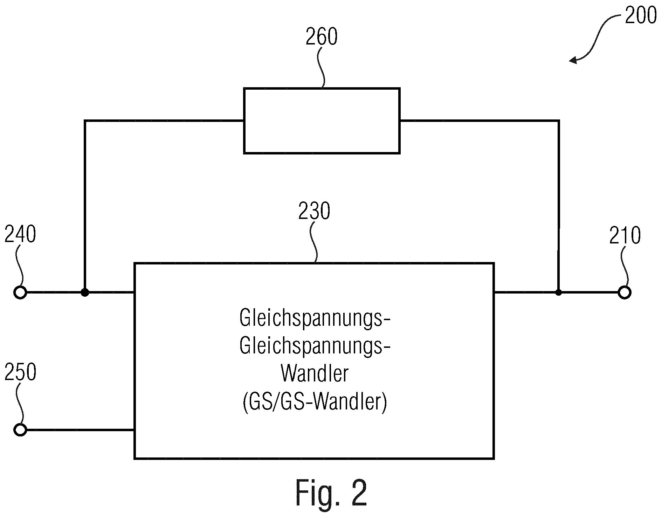

Vergleichsbeispielgemäß Fig. 2

Fig. 2 zeigt eine schematische Darstellung einer Schaltungsanordnung zur Erzeugung einer Ausgangswechselspannung 200 für eine Energiesenke 260. Dabei weist die Schaltungsanordnung zur Erzeugung einer Ausgangswechselspannung 200 einen Ausgangsknoten 210 auf. Weiterhin weist die Schaltungsanordnung zur Erzeugung einer Ausgangswechselspannung 200 einen Gleichspannungs-Gleichspannungs-Wandler 230 auf, der über zwei Eingangsklemmen, d. h. einer Eingangsspannungszuführung 240 und einem Bezugspotentialknoten 250, mit einer Eingangsspannung versorgt wird.

Weiterhin weist die Schaltungsanordnung zur Erzeugung einer Ausgangswechselspannung 200 eine Energiesenke 260 auf. Diese Energiesenke 260 kann beispielsweise einen Verbraucher darstellen, wie einen Motor oder sonstige Wechselspannungsverbraucher. Weiterhin kann unter der Energiesenke 260 eine Last verstanden werden, ebenfalls ist es denkbar, dass die Energiesenke 260 ein Netz darstellt. Die Energiesenke 260 ist dabei an den Ausgangsknoten 210 und an die Eingangsspannungszuführung 240 angekoppelt. Diese Ankopplung ist derart ausgeführt, dass die Potentialdifferenz zwischen der Eingangsspannungszuführung 240 und dem Ausgangsknoten 210 einer an der Energiesenke 260 anliegenden Spannung entspricht. Weiterhin ist der Gleichspannungs-Gleichspannungs-Wandler 230 so ausgelegt, dass das Potential an dem Ausgangsknoten 210 gegenüber dem Potential an dem Bezugspotentialknoten 250 durch den Gleichspannungs-Gleichspannungs-Wandler 230 zeitlich veränderlich eingestellt werden kann. Dies lässt sich auch so formulieren, dass der GS-GS-Wandler 230 ausgelegt ist, um die Ausgangsspannung so zu erzeugen, dass der Ausgangsknoten 210 zeitweise ein Potential aufweist, das positiver ist als das an der Eingangsspannungszuführung 240 anliegende Potential. Weiterhin ist der GS-GS-Wandler 230 so ausgeführt, dass der Ausgangsknoten 210 zeitweise ein Potential aufweist, das negativer ist als das an der Eingangsspannungszuführung 240 anliegende Potential.

Weiterhin kann der Gleichspannungs-Gleichspannungs-Wandler 230 so ausgeführt sein, dass der leistungsübertragende Teil des Gleichspannungs-Gleichspannungs-Wandlers 230 keine galvanische Trennung aufweist. Dies bedeutet, dass der Gleichspannungs-Gleichspannungs-Wandler 230 nicht potentialgetrennt ist bzw. keine Potentialtrennung aufweist. Auch kann dies so gesehen werden, dass der Ausgangsknoten 210 gegenüber dem Bezugspotentialknoten 250 nicht potentialfrei (engl.: "floatend") ist.

Weiterhin ist es denkbar, dass der Gleichspannungs-Gleichspannungs-Wandler so ausgeführt ist, dass dieser als Hochsetzsteller und als Tiefsetzsteller wirken kann. Dies bezeichnet wiederum nicht die Topologie des Hochsetzstellers oder die Topologie des Tiefsetzstellers, sondern eine Wirkweise des Gleichspannungs-Gleichspannungs-Wandlers 230, derart, dass der Ausgangsknoten 210 ein Potential aufweisen kann, das gegenüber dem Potential der Eingangsspannungszuführung 240 entweder höher oder niedriger liegen kann.

Weiterhin kann der Gleichspannungs-Gleichspannungs-Wandler 230 so ausgelegt sein, dass der Gleichspannungs-Gleichspannungs-Wandler 230 in einem ersten Zeitabschnitt einer Schwingungsperiode der Ausgangswechselspannung als Hochsetzsteller wirkt und dass der Gleichspannungs-Gleichspannungs-Wandler 230 in einem zweiten Zeitabschnitt der Ausgangswechselspannung als Tiefsetzsteller wirkt. Der DC/DC-Wandler kann also Ausgangsspannungen erzeugen, die zeitweise kleiner und zeitweise größer als die Eingangsspannung sind, der DC/DC-Wandler muss hingegen aber nicht notwendigerweise die Topologie eines Hochsetzstellers oder eines Tiefsetzstellers haben. Wiederum wird hierin vor allem beschrieben, dass das Potential des Ausgangsknotens 210 in dem ersten Zeitabschnitt positiver ist als das Potential der Eingangsspannungszuführung 240 und dass das Potential des Ausgangsknotens 210 in dem zweiten Abschnitt negativer ist als das Potential der Eingangsspannungszuführung 240.

Auch kann die Schaltungsanordnung zur Erzeugung einer Ausgangswechselspannung 200 so ausgelegt sein, dass das Potential des Ausgangsknotens 210 seine Polarität bezogen auf das Potential der Eingangsspannungszuführung 240 wechselt. Auch ist es möglich, dass das Potential des Ausgangsknotens 210, bezogen auf das Bezugspotential an dem Bezugspotentialknoten 250, einen zeitveränderlichen Potentialverlauf aufweist. Dieser zeitveränderliche Potentialverlauf kann auch so gestaltet sein, dass dieser sich periodisch wiederholt. Damit kann erreicht werden, dass die Schaltungsanordnung zur Erzeugung einer Ausgangswechselspannung 200 eine cosinusförmige Ausgangsspannung zwischen dem Ausgangsknoten 210 und der Eingangsspannungszuführung 240 an die Energiesenke 260 abgibt.

Diese cosinusförmige Ausgangsspannung kann in Bezug auf ein Potential des Bezugspotentialknotens 250 mit einem Mittelwert versehen sein. Die Schaltungsanordnung zur Erzeugung einer Ausgangswechselspannung 200 kann weiterhin so ausgelegt sein, dass der Gleichspannungs-Gleichspannungs-Wandler 230 so ausgelegt ist, dass der Ausgangsknoten 210 in Bezug auf die Eingangsspannungszuführung 240 ein zeitveränderliches, sich periodisch wiederholendes, mittelwertfreies Potential bzw. einen zeitveränderlichen, sich periodisch wiederholenden, mittelwertfreien Potentialverlauf aufweist. Dadurch kann eine Energiesenke 260 bzw. eine Last 260 betrieben werden, die eine mittelwertfreie (Wechsel- )Spannungsversorgung benötigt.

Die Schaltungsanordnung zur Erzeugung einer Ausgangswechselspannung 200 kann weiterhin so ausgeführt sein, dass der Mittelwert des Potentialverlaufs an dem Ausgangsknoten 210 von dem Potential an der Eingangsspannungszuführung 240 sich um höchstens 10 % der Eingangsspannung, d. h. der Potentialdifferenz zwischen der Eingangsspannungszuführung 240 und dem Bezugspotentialknoten 250, unterscheidet.

Weiterhin kann die Schaltungsanordnung zur Erzeugung einer Ausgangswechselspannung 200 so ausgeführt sein, dass eine Amplitude des Potentialverlaufs an dem Ausgangsknoten 210 zumindest 30 % des Wertes der Eingangsspannung, d. h. der Potentialdifferenz zwischen der Eingangsspannungszuführung 240 und dem Bezugspotentialknoten 250, ist.

Weiterhin kann die Schaltungsanordnung zur Erzeugung einer Ausgangswechselspannung 200 so ausgelegt sein, dass der Gleichspannungs-Gleichspannungs-Wandler (GS-GS-Wandler) 230 so ausgelegt ist, dass dieser mindestens einen Leistungsschalter aufweist und wobei dieser Leistungsschalter oder mehrere Leistungsschalter durch eine geeignete Ansteuerung oder durch eine geeignete Schaltentlastungsverschaltung weich geschaltet werden kann.

Weiterhin kann die Schaltungsanordnung zur Erzeugung einer Ausgangswechselspannung so entworfen sein, dass der Gleichspannungs-Gleichspannungs-Wandler eine "Tief- und Hochsetzsteller-Schaltung" (engl.: "Non-inverting Buck-Boost Converter") aufweist oder eine "Hoch- und Tiefsetzsteller-Schaltung" (engl.: "Non-inverting Boost-Buck Converter") aufweist oder eine "Unsymmetrischer-Wandler-mit-eingangsseitiger-Induktivität-Schaltung" ("SEPIC-Schaltung") aufweist oder eine "Zeta-Schaltung" aufweist.

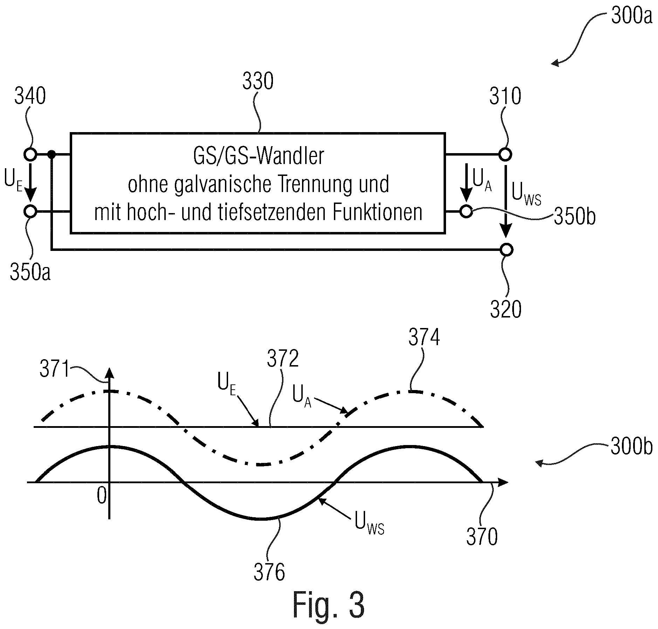

Vergleichsbeispielgemäß Fig. 3

Fig. 3 zeigt eine schematische Darstellung einer Vorrichtung zur Erzeugung einer Wechselspannung 300a und eine Darstellung 300b eines Zeitverlaufes von drei Spannungen 372, 374, 376. Die Vorrichtung zur Erzeugung einer Wechselspannung 300a weist dabei einen ersten Ausgangsspannungsanschluss 310 und einen zweiten Ausgangsspannungsanschluss 320 auf. Weiterhin weist die Vorrichtung zur Erzeugung einer Wechselspannung 300 einen Gleichspannungs-Gleichspannungs-Wandler 330 (GS/GS-Wandler) ohne galvanische Trennung und mit hoch- und tiefsetzender Funktion auf.

Der Gleichspannungs-Gleichspannungs-Wandler 330 wird dabei mit einer Eingangsspannung $U_E$ versorgt, die zwischen der Eingangsspannungszuführung 340 und dem Bezugspotentialknoten 350a anliegt. Der GS/GS-Wandler 330 beziehungsweise der Bezugspotentialknoten 350a weist keine galvanische Trennung auf und ist aus diesem Grund als zweiter Anschluss auf der Ausgangsseite des Bezugspotentialknotens mit der Bezeichnung 350b dargestellt, und kann beispielsweise als Bezugspotentialknoten für das an dem ersten Ausgangsspannungsanschluss 310 anliegende Potential angesehen werden (Spannung $U_A$)

Weiterhin weist die Vorrichtung zur Erzeugung einer Wechselspannung 300a eine Verschaltung auf, die die Eingangsspannungszuführung 340 mit dem zweiten Ausgangsspannungsanschluss 320 koppelt. Diese Kopplung kann so ausgeführt sein, dass diese die Eingangsspannungszuführung niederinduktiv und/oder niederohmig und/oder niederimpedant und/oder direkt und/oder ohne schaltendes Bauelement oder Ähnliches koppelt. Zweckmäßig kann es sein, die Kopplung so auszuführen, dass das Potential an der Eingangsspannungszuführung 340 näherungsweise dem Potential des zweiten Ausgangsspannungsanschlusses 320 entspricht. Es ist auch möglich, dass zwischen der Eingangsspannungszuführung 340 und dem zweiten Ausgangsspannungsanschluss 320 als parasitärer Effekt eine typischerweise kleine, konstante oder auch eine zeitveränderliche Potentialdifferenz auftritt.

Der Gleichspannungs-Gleichspannungs-Wandler 330 ist so ausgelegt, dass zwischen dem ersten Ausgangsspannungsanschluss 310 und dem Bezugspotentialknoten 350b auf der Ausgangsseite eine Ausgangsspannung $u_A$ entsteht. Diese Ausgangsspannung $u_A$ kann durch eine geeignete Steuergröße des Gleichspannungs-Gleichspannungs-Wandlers 330 beeinflusst werden.

Damit kann eine sinusförmige Ausgangsspannung

$$u_A = U_E + \hat{u} \cdot \cos(\omega t + \varphi)$$

mittels eines nicht potentialgetrennten GS/GS-Wandlers 330 (DC/DC-Wandlers) mit Hochsetz- und Tiefsetzfunktion generiert werden. Es kann also eine sinusförmige Ausgangsspannung nach der oben gezeigten Formel mittels eines nicht potentialgetrennten GS/GS-Wandlers 330 (DC/DC-Wandlers), d. h. eines GS/GS-Wandlers ohne galvanische Trennung, mit Hochsetz- und Tiefsetzfunktion generiert werden.

Hier ist $U_E$ die Eingangsspannung des DC/DC-Wandlers bezogen auf das Potential des Bezugspotentialknotens 350a, 350b. $\hat{u}$ ist die Amplitude der sinusförmigen Spannung und erfüllt die Bedingung $\hat{u} \leq U_E$. In

diesem Fall macht die Spannungsdifferenz zwischen dem Ausgang und dem Eingang des DC/DC-Wandlers 330 eine Wechselspannung $u_{WS}$ aus und

$$u_{WS} = u_A - U_E = \hat{u} \cdot \cos(\omega t + \varphi).$$

Die Gleichung zeigt dabei eine Abhängigkeit von der Eingangsspannung $U_E$ und einem Spitzenwert $\hat{u}$ eines zeitveränderlichen, cosinusförmigen Anteils der Spannung. Dieser zeitveränderliche Anteil kann durch den Gleichspannungs-Gleichspannungs-Wandler 330 eingestellt werden. Dabei erfüllt der Spitzenwert $\hat{u}$ des cosinusförmigen Anteils die Bedingung nach der Gleichung

$$\hat{u} \leq U_E.$$

Weiterhin kann über einen Maschenumlauf eine Wechselspannung $u_{WS}$ gefunden werden, die sich mit der Gleichung

$$u_{WS} = u_A - U_E = \hat{u} \cdot \cos(\omega t + \varphi)$$

beschreiben lässt.

Die drei vorgenannten Spannungen beziehungsweise die Zeitverläufe der Spannungen, d. h. der Eingangsspannung $U_E$, der Ausgangsspannung $u_A$ und der (Ausgangs-)Wechselspannung $u_{WS}$ sind in der grafischen Darstellung 300b schematisch dargestellt. Dabei weist die Darstellung eine Abszisse 370, die eine Zeitachse darstellt, eine Ordinate 371, die eine Spannungsachse darstellt, und Zeitverläufe der drei vorgenannten Spannungen auf. Die Eingangsspannung $U_E$ 372, die Ausgangsspannung $u_A$ 374 und die Wechselspannung $u_{WS}$ 376 sind in ihren Zeitverläufen schematisch dargestellt.

Dabei weist die Eingangsspannung $U_E$ 372 einen im Wesentlichen konstanten Zeitverlauf auf, die Ausgangsspannung $u_A$ 374 des Gleichspannungs-Gleichspannungs-Wandlers 330 weist einen cosinusförmigen Verlauf auf, der einen Mittelwert besitzt, der im Wesentlichen der Eingangsspannung $U_E$ 372 entspricht. Die Ausgangswechselspannung $u_{WS}$ 376 weist einen cosinusförmigen Verlauf auf, der im Wesentlichen einen Mittelwert von 0 Volt besitzt. Die Ausgangswechselspannung $u_{WS}$ 376 kann dabei als Differenz zwischen der Ausgangsspannung $u_A$ und der Eingangsspannung $U_E$ gesehen werden nach Gleichung

$$u_{WS} = u_A - U_E = \hat{u} \cdot \cos(\omega t + \varphi).$$

In den gezeigten Gleichungen ist $U_E$ die Eingangsspannung des GS/GS-Wandlers 330 (DC/DC-Wandlers). $\hat{u}$ ist die Amplitude der cosinusförmigen Spannung und erfüllt die Bedingung $\hat{u} \leq U_E$. In diesem Fall macht die Spannungsdifferenz zwischen dem Ausgang beispielsweise dem ersten Ausgangsspannungsanschluss 310 und dem Eingang beispielsweise der Eingangsspannungszuführung 340 des GS/GS-Wandlers 330 eine Wechselspannung $u_{WS}$ ($u_{AC}$) aus und es gilt die oben genannte Gleichung. Fig. 3 zeigt somit eine Methode zur Erzeugung einer Wechselspannung mittels DC/DC-Wandler (beispielsweise mittels DC/DC-Wandler ohne Polaritätsumkehr bzw. mittels eines DC/DC-Wandlers ohne invertierende Funktionalität).

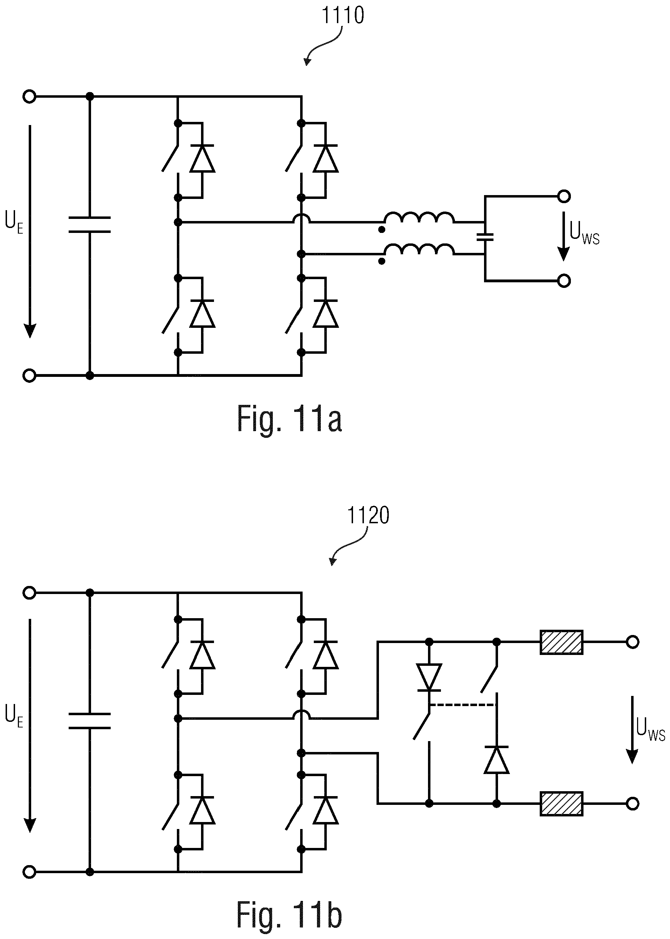

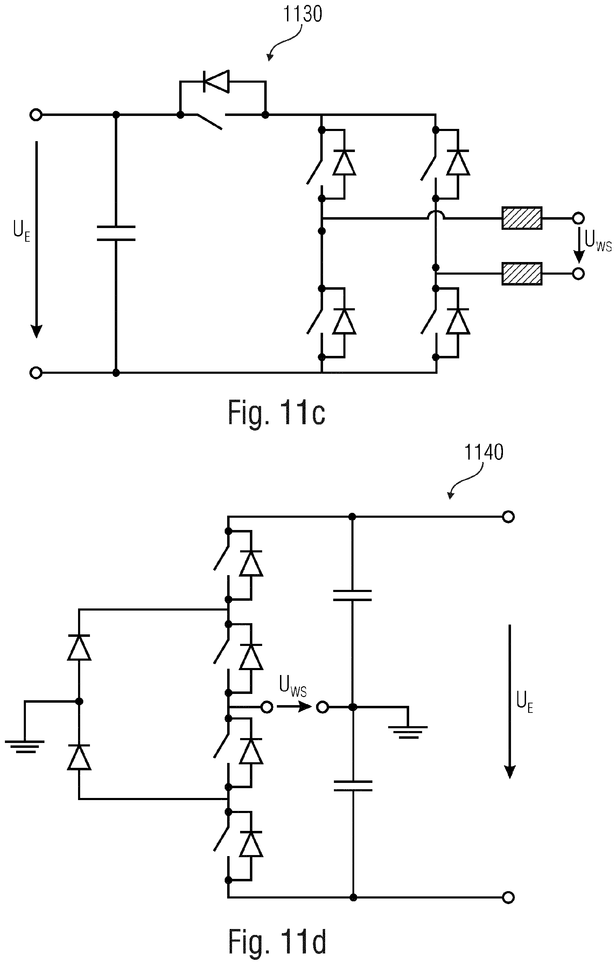

Die Lösung besitzt einige Vorteile gegenüber dem Stand der Technik beziehungsweise es weist der Stand der Technik einige Nachteile gegenüber der Lösung auf, z. B. dass in allen Topologien des Standes der Technik (Fig. 11a, Fig. 11b, Fig. 11c, Fig. 11d) die Leistungshalbleiter hart ein- und ausgeschaltet werden. Vollbrücken- oder Halbbrücken-Wechselrichter-Topologien können daher in einigen Arbeitspunkten einen guten Wirkungsgrad erreichen, jedoch diesen nicht über den gesamten Arbeitsbereich erzielen.

Höhere Wirkungsgrade können durch den Einsatz von SiC- oder GaN-Bauelementen (Siliziumkarbid- oder Galliumnitrid-Bauelementen) erzielt werden. Jedoch gibt es keine Möglichkeit, die Bauelemente weich zu schalten. Somit kann ein Vorteil der Lösung die Möglichkeit des weichen Schaltens der Leistungsschalter sein. Daraus ergeben sich Vorteile bezogen auf das EMV-Verhalten und die Schaltverluste.

Ein weiterer Nachteil des Standes der Technik sind die hohen Spannungswechsel an den Leistungshalbleitern und eine damit verbundene hohe Oberschwingungserzeugung, die große Ausgangsfilter nötig macht. Zur Reduktion der Oberschwingungen (Oberwellen) werden bei der Vollbrücke (Fig. 11a, 1110), der "HERIC-Schaltung" (Fig. 11b, 1120) ("Hocheffiziente und zuverlässige Wechselrichter-Schaltung", engl.: "High Efficient and Reliable Inverter Concept") und derH5-Schaltung" (Fig. 11c, 1130) ("Vollbrücke mit zusätzlichem Blockierschalter-Schaltung") die tiefseitigen Schalter bei der Grundfrequenz der Ausgangs(wechsel)spannung betrieben und die hochliegenden Schalter bei höherer Schaltfrequenz. Bei der "NPC1-Schaltung" (Fig. 11d, 1140) ("Neutralpunktverschaltete-Schaltung", engl.: "neutral point clamped", "NPC-Topologie") werden zur Reduktion der Oberschwingungen (Oberwellen) und Verringerung der Schaltverluste die inneren Schalter ebenfalls bei Grundfrequenz (der Ausgangswechselspannung) betrieben und die äußeren Schalter bei höherer Schaltfrequenz betrieben. Durch die Verwendung einer Schaltung nach der Lösung kann demnach eine verbesserte Oberschwingungsbelastung (Reduktion der Oberschwingungen) erzielt werden.

Ein zusätzlicher Nachteil der Topologien des Standes der Technik nach Fig. 11, beziehungsweise zum Beispiel der konventionellen einphasigen Wechselrichter ist, dass die Ausgangsmasse nicht auf konstantem Spannungsniveau verharrt und dadurch unerwünschte Verschiebungsstöme über aufwendigere Filter reduziert werden müssen. Damit ergibt sich für Ausführungen gemäß der Lösung der Vorteil, dass durch das feste Bezugspotential des Ausgangs d. h. z. B. das Potential des zweiten Ausgangsspannungsanschlusses 320, das z. B. näherungsweise dem Potential der Eingangsspannungszuführung 340 entsprechen kann, eine Verringerung bzw. Vermeidung von Verschiebungsströmen erreicht werden kann.

Das Vergleichsbeispielgemäß Fig. 3 kann um eine Energiesenke erweitert werden, die zwischen den ersten Ausgangsspannungsanschluss 310 und den zweiten Ausgangsspannungsanschluss 320 beziehungsweise zwischen den ersten Ausgangsspannungsanschluss 310 und die Eingangsspannungszuführung 340 geschaltet wird, sodass eine Spannung an der Energiesenke einem Wechselspannungsverlauf oder einem näherungsweise mittelwertfreien Wechselspannungsverlauf oder einem sinus-/cosinusförmigen, mittelwertfreien Wechselspannungsverlauf entspricht. Durch diese Änderung an dem Vergleichsbeispielgemäß Fig. 3 kann eine Anordnung entstehen, die der Schaltungsanordnung zur Erzeugung einer Ausgangswechselspannung 200 gemäß Fig. 2 grundsätzlich entsprechen kann.

In allen vorgenannten und nachfolgenden Vergleichsbeispielen und Ausführungsbeispielen ist es möglich, dass der Bezugspotentialknoten an der Ausgangsseite, d.h. z. B. 350b der Fig. 3, nicht als Kontakt ausgebildet ist. Dies ändert die Funktionsweise nicht grundsätzlich, eine Erzeugung einer Wechselspannung $u_{WS}$ ist dabei weiterhin möglich. Der Bezugspotentialknoten 350a, 350b kann demnach als Knoten ohne eine ausdrückliche Kontaktierungsmöglichkeit auf der Ausgangsseite des GS/GS-Wandlers 330 ausgeführt sein. Diese Anmerkung lässt sich auf die anderen Anwendungsbeispiele sinngemäß übertragen.

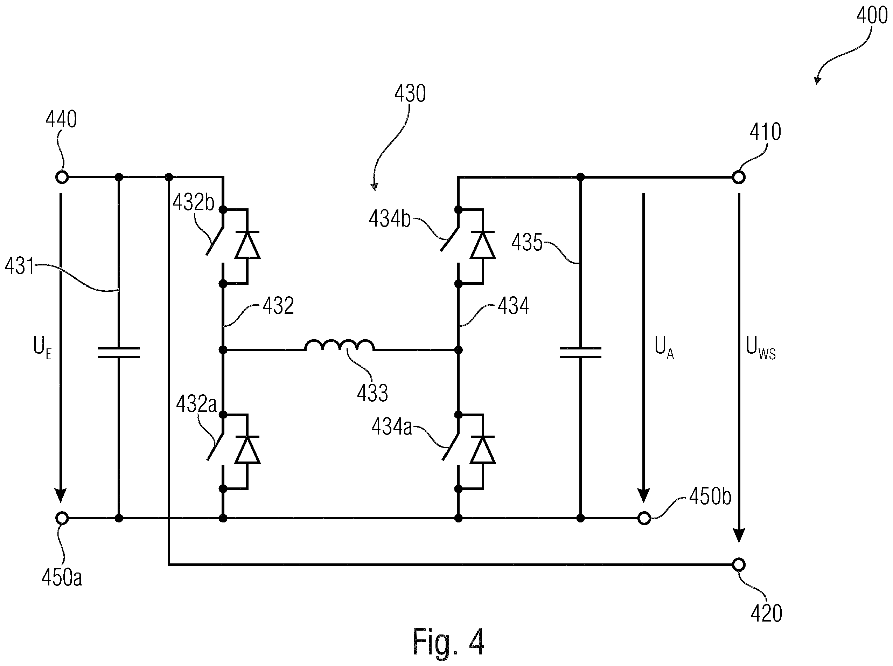

Vergleichsbeispielgemäß Fig. 4

Fig. 4 zeigt eine schematische Darstellung einer Vorrichtung zur Erzeugung einer Wechselspannung 400 mit einer "Tief- und Hochsetzsteller-Schaltung" 430. Die Vorrichtung zur Erzeugung einer Wechselspannung 400 weist dabei einen ersten Ausgangsspannungsanschluss 410 und einen zweiten Ausgangsspannungsanschluss 420 auf, der beispielsweise durch Ausgangsspannungsklemmen, Ausgangsspannungs-Steckerkontakte, Ausgangsspannungs-Schraubanschlüsse, Ausgangsspannungskontakte oder Ausgangsspannungsleiterbahnen gebildet sein kann. Zwischen den Ausgangsspannungsklemmen 410, 420 kann eine (Ausgangs-)Wechselspannung $u_{WS}$ entstehen. Weiterhin weist die Vorrichtung zur Erzeugung einer Wechselspannung 400 eine Eingangsspannungszuführung 440 und einen Bezugspotentialknoten 450a, 450b auf. Die Eingangsspannung $U_E$ wird dabei zwischen der Eingangsspannungszuführung 440 und dem Bezugspotentialknoten 450a, 450b angelegt. Weiterhin weist die Vorrichtung zur Erzeugung einer Wechselspannung 400 eine "Tief- und Hochsetzsteller-Schaltung" 430 auf.

Dieser Tief- und Hochsetzsteller 430 weist dabei eine Eingangskapazität 431 auf, die zwischen der Eingangsspannungszuführung 440 und den Bezugspotentialknoten 450a, 450b geschaltet (gekoppelt) ist. Parallel zu diesem Eingangskondensator 431 weist der Tief- und Hochsetzsteller 430 eine Halbbrückenschaltung 432 auf, die aus zwei in Serie geschalteten, aktiv zu schaltenden Leistungsschaltern 432a, 432b besteht. Jeder der beiden Schalter 432a, 432b der Halbbrückenschaltung 432 weist jeweils eine antiparallele Freilaufdiode auf. Aktive Leistungsschalter können u. a. z. B. Metall-Oxid-Halbleiter-Feldeffekttransistoren (MOSFET) oder Bipolar-Transistoren (BJT) oder Isolierter-Steueranschluss-Bipolar-Transistoren (IGBT) sein. Der Mittelpunkt der Halbbrückenschaltung 432 ist mit einem Mittelpunkt einer Halbbrückenschaltung 434 über eine Induktivität 433 (Speicherdrossel, Speicherinduktivität) verbunden. Die Halbbrückenschaltung 434 weist ebenfalls zwei aktiv zu schaltende Leistungsschalter 434a, 434b auf. Die beiden Leistungsschalter 434a, 434b der Halbbrückenschaltung 434 weisen jeweils eine antiparallele Freilaufdiode auf. Der negative Anschluss der Halbbrückenschaltung 434 ist dabei mit dem Bezugspotentialknoten 450a, 450b verbunden, der positive Anschluss der Halbbrückenschaltung 434 ist mit dem Ausgangsspannungsanschluss 410 verbunden. Parallel zu der Halbbrückenschaltung 434 ist ein Ausgangskondensator 435 zwischen den ersten Ausgangsspannungsanschluss 410 und den Bezugspotentialknoten 450a, 450b geschaltet. Über diesem Ausgangskondensator 435 liegt die Spannung $u_A$, d. h. die Ausgangsspannung des Tief- und Hochsetzstellers 430 an. Weiterhin weist die Vorrichtung zur Erzeugung einer Wechselspannung 400 eine Verschaltung bzw. eine Leitungsverbindung auf, die die Eingangsspannungszuführung 440 mit dem zweiten Ausgangsspannungsanschluss 420 verbindet.

Die Anoden der Freilaufdioden (Dioden, antiparallelen Freilaufdioden) der tiefliegenden Leistungsschalter 432a, 434a der Halbbrücken 432, 434 sind mit dem Bezugspotentialknoten 450a, 450b verbunden. Bei dem hochliegenden Leistungsschalter 432b ist die Kathode der Dioden mit der Eingangsspannungszuführung 440 verbunden. Die Kathode der Diode des hochliegenden Leistungsschalters 434b ist mit dem positiven Anschluss des Ausgangskondensators 435 und dem ersten Ausgangsspannungsanschluss 410 verbunden. Weiterhin sind die Kathoden der Dioden der tiefliegenden Schalter 432a, 434a und die Anoden der Dioden der hochliegenden Schalter 432b, 434b jeweils einer Halbbrücke 432, 434 miteinander und mit dem jeweiligen Mittelpunkt einer Halbbrücke 432, 434 verbunden.

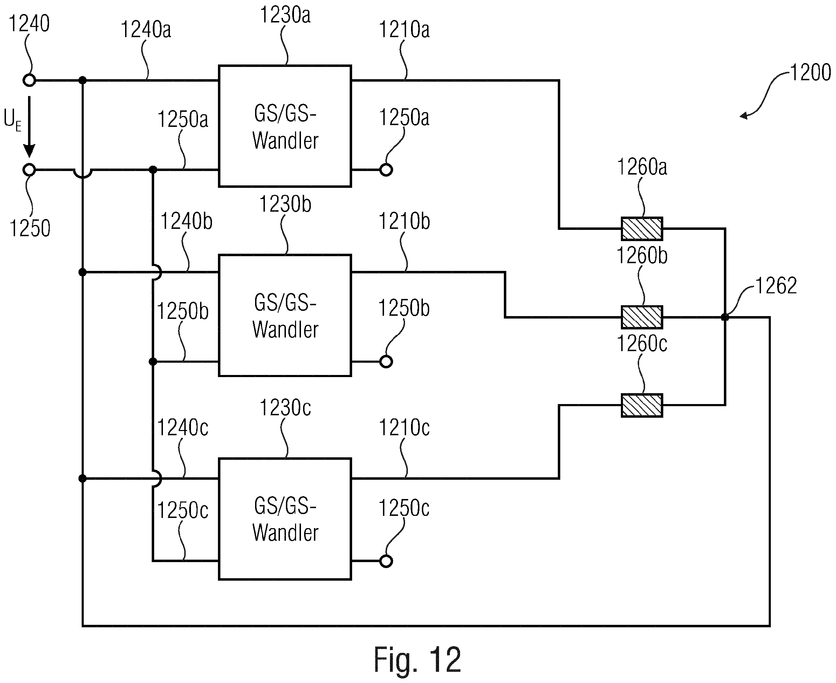

Durch den weichschaltenden Betrieb der Topologie (bei z. B. Eingangsspannung 400V und Ausgangsspannung 200V...600V erzeugt die Schaltung eine Sinus-Wechselspannung von ±200V mit dem Wirkungsgrad siehe Fig. 12b von DE102015219850) werden die Schaltverluste nahezu vermieden.

Große Spannungswechsel am Ausgang werden ebenfalls reduziert und damit die Oberschwingungsbelastung (Oberwellenbelastung) reduziert. Die Ausgangsmasse liegt nicht auf der Spannung 0 Volt bezogen auf den Bezugspotentialknoten 450a, 450b, jedoch auf einem konstanten Potential und vermeidet so Verschiebungsströme.

Durch eine geeignete Ansteuerung der aktiv zu schaltenden Leistungsschalter 432a, 432b, 434a, 434b der beiden Halbbrückenschaltungen 432, 434 kann die Ausgangsspannung $u_A$ derart eingestellt werden, dass die Ausgangsspannung einen cosinusförmigen Potentialverlauf zeigt, der wiederum einen Mittelwert aufweist. Dieser Mittelwert kann sinnvollerweise in der Größe der Eingangsspannung $U_E$ beispielsweise $\pm$ 10% gewählt sein. Durch diese Wahl der Zeitverläufe kann eine cosinus-/sinusförmige Ausgangsspannung $u_{WS}$ zwischen dem ersten Ausgangsspannungsanschluss 410 und dem zweiten Ausgangsspannungsanschluss 420 erzielt werden. Dieser sinusförmige Potentialverlauf bzw. Spannungsverlauf kann dabei einen sehr geringen Mittelwert aufweisen, beispielsweise kleiner als 10% der Amplitude des sinusförmigen Potentialverlaufs (Spannungsverlaufs). Dadurch ist die Vorrichtung zur Erzeugung einer Wechselspannung 400 geeignet, aus einer Gleichspannungsquelle einen Wechselspannungsverbraucher mit einer (näherungsweise) mittelwertfreien Wechselspannung zu versorgen.

Diese Überlegungen können auch auf die anderen Vergleichsbeispiele und Ausführungsbeispiele übertragen werden und die genannten Vorteile können auch bei den anderen Vergleichsbeispielen und Ausführungsbeispielen erzielt werden.

Ein Vorteil kann an Fig. 4 in anschaulicher Weise nachvollzogen werden. Wird die Ausgangsspannung $u_A$ betrachtet, deren Zählrichtung durch den korrespondierenden Pfeil angedeutet ist, kann gesehen werden, dass die beiden antiparallelen Freilaufdioden 434a, 434b der Halbbrücke 434 bei positiven Spannung in Sperrrichtung gepolt sind. Bei gleicher Zählweise der Ausgangsspannung $u_A$ aber nominell negativer Spannung, sind die Dioden 434a, 434b in Durchlassrichtung gepolt. Über dem Ausgangskondensator 435 kann somit keine signifikant negative Spannung anliegen. Somit kann mit einem einfachen GS/GS-Wandler nach Fig. 4 nur eine Ausgangsspannung $u_A$ einer Polarität erzeugt werden. Durch die Verwendung des zweiten Ausgangsspannungsanschlusses 420 als Bezugsknoten für die Ausgangswechselspannung ist es möglich, eine Spannung zu erzeugen, die bezogen den auf zweiten Ausgangsspannungsanschluss 420 sowohl positiv als auch negativ sein kann. Erst dadurch ist es möglich, eine Wechselspannung, d. h. eine Spannung mit positivem und negativem Anteil, zu erzeugen. Diese Möglichkeit lässt sich auch auf die anderen Vergleichsbeispiele und Ausführungsbeispiele übertragen.

Das Vergleichsbeispielgemäß Fig. 4 kann um eine Energiesenke erweitert werden, die zwischen den ersten Ausgangsspannungsanschluss 410 und den zweiten Ausgangsspannungsanschluss 420 beziehungsweise zwischen den ersten Ausgangsspannungsanschluss 410 und die Eingangsspannungszuführung 440 geschaltet wird, sodass eine Spannung an der Energiesenke einem Wechselspannungsverlauf oder einem näherungsweise mittelwertfreien Wechselspannungsverlauf oder einem sinus-/cosinusförmigen, mittelwertfreien Wechselspannungsverlauf entspricht. Durch diese Änderung an dem Vergleichsbeispielgemäß Fig. 4 kann eine Anordnung entstehen, die der Schaltungsanordnung zur Erzeugung einer Ausgangswechselspannung 200 gemäß Fig. 2 grundsätzlich entsprechen kann.

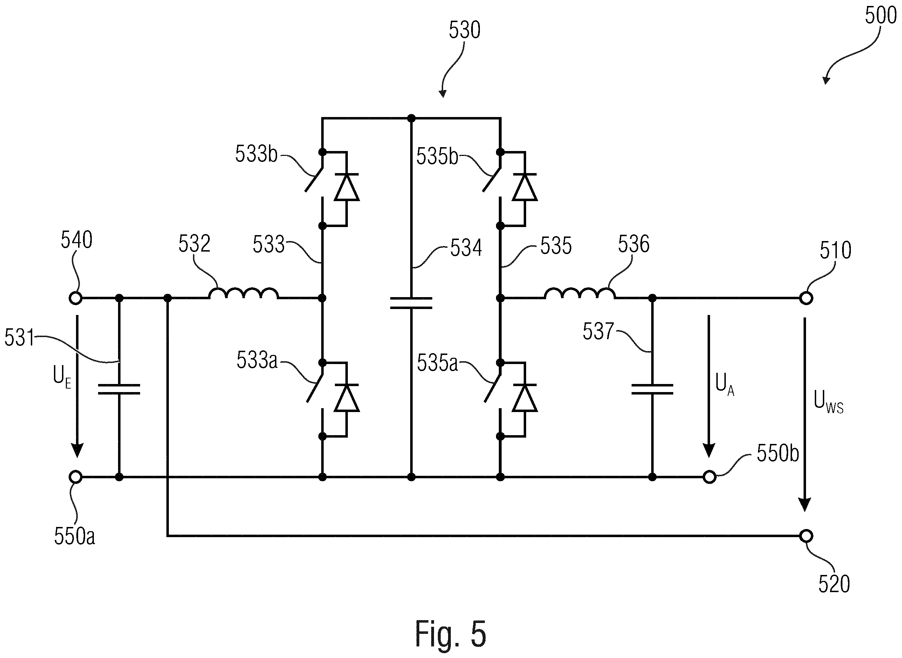

Vergleichsbeispielgemäß Fig. 5

Fig. 5 zeigt eine schematische Darstellung einer Vorrichtung zur Erzeugung einer Wechselspannung 500 mit einer "Hoch- und Tiefsetzsteller-Schaltung" 530. Die Vorrichtung zur Erzeugung einer Wechselspannung 500 weist dabei einen ersten Ausgangsspannungsanschluss 510 und einen zweiten Ausgangsspannungsanschluss 520 auf, zwischen welchen die Wechselspannung $u_{WS}$ anliegt. Weiterhin weist die Vorrichtung zur Erzeugung einer Wechselspannung 500 eine Eingangsspannungszuführung 540 und einen Bezugspotentialknoten 550a, 550b auf. Zwischen diesem Bezugspotentialknoten 550a, 550b und der Eingangsspannungszuführung 540 liegt die Eingangsspannung $U_E$ an, die somit ebenfalls über dem Eingangskondensator 531 anliegt.

Dieser Eingangskondensator 531 ist zwischen die Eingangsspannungszuführung 540 und den Bezugspotentialknoten 550a, 550b geschaltet. Eine eingangsseitige Spule 532 verbindet den positiven Anschluss des Eingangskondensators 531 (das heißt auch die Eingangsspannungszuführung 510) mit dem Mittelpunkt einer Halbbrückenschaltung 533. Die Halbbrückenschaltung 533 wiederum weist zwei in Serie geschaltete, aktiv zu schaltende Leistungsschalter 533a, 533b auf, die jeweils eine antiparallele Freilaufdiode besitzen. Parallel zu der Halbbrückenschaltung 533 ist eine Kapazität 534 (Koppelkondensator, Zwischenspeicherkondensator) geschaltet. Parallel zu dem Koppelkondensator 534 ist eine weitere Halbbrückenschaltung 535 geschaltet. Die Halbbrückenschaltung 535 wiederum weist ebenfalls zwei aktiv zu schaltende Leistungsschalter 535a, 535b auf. Jeder der aktiv zu schaltende Leistungsschalter 535a, 535b der Halbbrückenschaltung 535 weist wiederum eine antiparallele Freilaufdiode auf. An den Mittelpunkt der Halbbrückenschaltung 535 ist eine ausgangsseitige Induktivität 536 geschaltet, deren zweite Anschlussseite an einen positiven Anschluss eines Ausgangskondensators 537 geschaltet ist.

Dieser Ausgangskondensator 567 wiederum ist mit dem positiven Anschluss an den ersten Ausgangsspannungsanschluss 510 geschaltet und mit dem negativen Anschluss an den Bezugspotentialknoten 550a, 550b. Somit verbindet der Bezugspotentialknoten 550a, 550b den negativen Anschluss des Eingangskondensators 531, den negativen Anschluss der Halbbrückenschaltung 533, den negativen Anschluss des Koppelkondensators 534, den negativen Anschluss der weiteren Halbbrückenschaltung 535 und den negativen Anschluss des Ausgangskondensators 537. Weiterhin weist die Vorrichtung zur Erzeugung einer Wechselspannung 500 eine Verschaltung bzw. Leitungsverbindung auf, die die Eingangsspannungszuführung 540 mit dem zweiten Ausgangsspannungsanschluss 520 verbindet.

Die Anoden der Freilaufdioden (Dioden, antiparallelen Freilaufdioden) der tiefliegenden Leistungsschalter 533a, 535a der Halbbrücken 533, 535 sind mit dem Bezugspotentialknoten 550a, 550b verbunden. Bei den hochliegenden Leistungsschaltern 533b, 535b sind die Kathoden der Dioden mit dem positiven Anschluss der Koppelkapazität 534 verbunden. Weiterhin sind die Kathode der Diode des tiefliegenden Schalters 533a und die Anode der Diode des hochliegenden Schalters 533b miteinander und mit dem Mittelpunkt der Halbbrücke 533 bzw. mit dem zweiten Anschluss der eingangsseitigen Induktivität 532 verbunden. Die Kathode der Diode des tiefliegenden Schalters 535a und die Anode der Diode des hochliegenden Schalters 535b sind ebenfalls miteinander und mit dem Mittelpunkt der Halbbrücke 535 bzw. mit dem ersten Anschluss der Ausgangsseitigen Induktivität 536 verbunden.

Durch eine geeignete Ansteuerung der aktiv zu schaltenden Leistungsschalter 533a, 533b, 535a, 535b der beiden Halbbrückenschaltungen 533, 535 kann die Ausgangsspannung $u_A$ derart eingestellt werden, dass die Ausgangsspannung $u_A$ bezogen auf den Bezugspotentialknoten 550a, 550b einen cosinusförmigen Potentialverlauf zeigt, der wiederum einen Mittelwert aufweist. Dieser Mittelwert kann sinnvollerweise in der Größe der Eingangsspannung $U_E$ gewählt sein. Durch diese Wahl der Zeitverläufe kann eine sinusförmige Ausgangsspannung $u_{WS}$ zwischen dem ersten Ausgangsspannungsanschluss 510 und dem zweiten Ausgangsspannungsanschluss 520 erzielt werden. Dieser sinusförmige Potentialverlauf bzw. Spannungsverlauf (bezogen z. B, auf den zweiten Ausgangsspannungsanschluss 520) kann dabei einen sehr geringen Mittelwert, beispielsweise kleiner als 10% der Amplitude des sinusförmigen Potentialverlaufs bzw. Spannungsverlaufs, aufweisen. Dadurch ist die Vorrichtung zur Erzeugung einer Wechselspannung 500 geeignet, aus einer Gleichspannungsquelle einen Wechselspannungsverbraucher mit einer (näherungsweise) mittelwertfreien Wechselspannung zu versorgen. Mit Wechselspannung ist in dem Zusammenhang grundsätzlich eine Spannung gemeint, die in ihrem Zeitverlauf eine positive und eine negative Polarität aufweisen kann. Weiterhin kann die Wechselspannung sich aber auch periodisch widerholen oder gemittelt über eine oder mehrere Perioden mittelwertfrei sein. Die Mittelwertfreiheit kann auch nur näherungsweise erfüllt sein, durch z. B. Schalteffekte, Ansteuerfehler usw. Alle genannten Eigenschaften der Wechselspannung lassen sich auf die Wechselspannungen der anderen Vergleichsbeispiele und Ausführungsbeispiele sinngemäß übertragen.

Das Vergleichsbeispielgemäß Fig. 5 kann um eine Energiesenke erweitert werden, die zwischen den ersten Ausgangsspannungsanschluss 510 und den zweiten Ausgangsspannungsanschluss 520 beziehungsweise zwischen den ersten Ausgangsspannungsanschluss 510 und die Eingangsspannungszuführung 540 geschaltet wird, sodass eine Spannung an der Energiesenke einem Wechselspannungsverlauf oder einem näherungsweise mittelwertfreien Wechselspannungsverlauf oder einem sinus-/cosinusförmigen, mittelwertfreien Wechselspannungsverlauf entspricht. Durch diese Änderung an dem Vergleichsbeispielgemäß Fig. 5 kann eine Anordnung entstehen, die der Schaltungsanordnung zur Erzeugung einer Ausgangswechselspannung 200 grundsätzlich entsprechen kann.

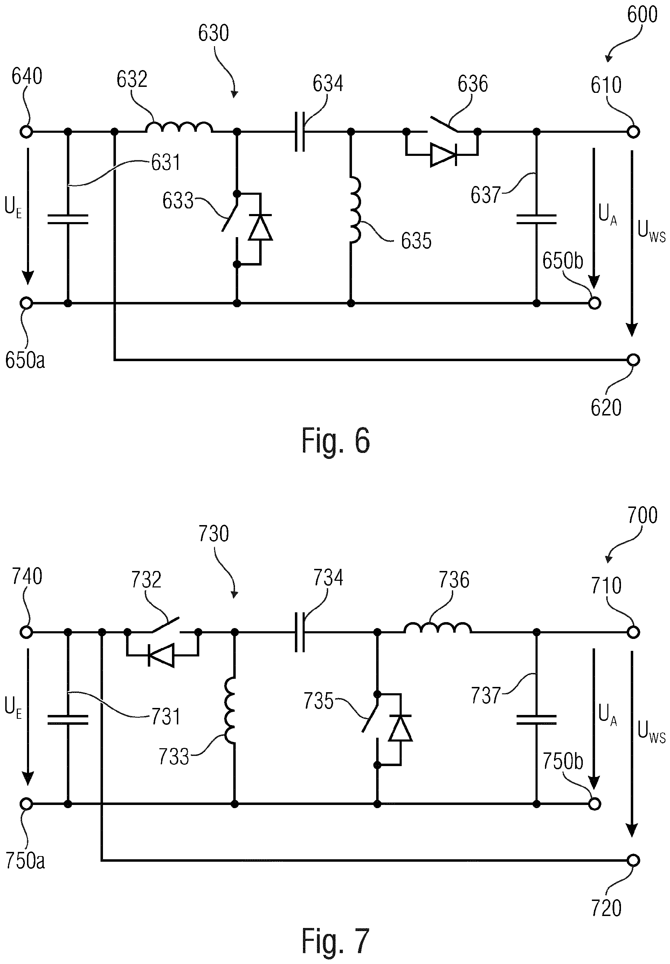

Vergleichsbeispielgemäß Fig. 6

Fig. 6 zeigt eine schematische Darstellung einer Vorrichtung zur Erzeugung einer Wechselspannung 600 mit einer "Unsymmetrischer-Wandler-mit-eingangsseitiger-Induktivität-Schaltung" 630 (engl.: "single ended primary inductance converter", "SEPIC-Schaltung"). Die Vorrichtung zur Erzeugung einer Wechselspannung 600 mit einer "SEPIC-Schaltung" 630 weist dabei einen ersten Ausgangsspannungsanschluss 610 und einen zweiten Ausgangsspannungsanschluss 620 auf. Die Potentialdifferenz zwischen diesen beiden Anschlüssen wird als Ausgangswechselspannung bzw. als Wechselspannung $u_{WS}$ bezeichnet. Weiterhin weist die Vorrichtung zur Erzeugung einer Wechselspannung 600 eine Eingangsspannungszuführung 640 und einen Bezugspotentialknoten 650a, 650b auf. Zwischen den Eingangsspannungsanschlüssen, d. h. der Eingangsspannungszuführung 640 und dem Bezugspotentialknoten 650a, 650b, liegt die Eingangsspannung $U_E$ an.

Weiterhin weist die Vorrichtung zur Erzeugung einer Wechselspannung 600 beziehungsweise die "SEPIC-Schaltung" 630 einen Eingangskondensator 631 auf, der zwischen der Eingangsspannungszuführung 640 und dem Bezugspotentialknoten 650a, 650b geschaltet ist. Der positive Anschluss des Eingangskondensators 631 ist mit einer Eingangsinduktivität 632 verbunden. Der zweite Anschluss der Eingangsinduktivität 632 ist wiederum mit einem aktiven Leistungsschalter 633 verbunden. Dieser aktive Leistungsschalter 633 besitzt eine antiparallele Freilaufdiode (Diode), die Kathode der Diode des Leistungsschalters 633 ist mit der Induktivität 632 und der Koppelkapazität 634 verbunden. Die Anode der Diode des Leistungsschalters 633 ist mit dem Bezugspotentialknoten 650a, 650b verbunden.

Ebenso ist der negative Anschluss des aktiven Leistungsschalters 633 mit dem Bezugspotentialknoten 650a, 650b verbunden. Der positive Anschluss des aktiven Leistungsschalters 633 und der zweite Anschluss der Eingangsinduktivität 632 sind mit einer Koppelkapazität 634 (Kondensator) verbunden.

Diese Koppelkapazität 634 ist wiederum mit dem ersten Anschluss einer Induktivität 635 verbunden, deren zweiter Anschluss wiederum mit dem Bezugspotentialknoten 650a, 650b verbunden ist. Der zweite Anschluss der Koppelkapazität 634 und der erste Anschluss der Induktivität 635 sind wiederum mit einem aktiven Leistungsschalter 636 verbunden. Dieser aktive Leistungsschalter 636 wiederum besitzt eine Diode (antiparallele Freilaufdiode). Die Anode der Diode des Leistungsschalters 636 ist dabei mit der Koppelkapazität 634 und der Induktivität 635 verbunden. Die Kathode des Leistungsschalters 636 ist mit dem positiven Anschluss des Ausgangskondensators 637 und dem Ausgangsspannungsanschluss 610 verbunden. Ebenso ist der zweite Anschluss des aktiven Leistungsschalters 636 mit einem positiven Anschluss einer Ausgangskapazität 637 verbunden. Die Ausgangskapazität 637 ist an ihren positiven Anschluss mit dem aktiven Leistungsschalter 636 und dem ersten Ausgangsspannungsanschluss 610 verbunden, der negative Anschluss der Ausgangskapazität 637 ist mit dem Bezugspotentialknoten 650a, 650b verbunden. Über dieser Ausgangskapazität 637 liegt die Ausgangsspannung $u_A$ an.

Weiterhin weist die Vorrichtung zur Erzeugung einer Wechselspannung 600 eine Verbindung/Verschaltung auf, die die Eingangsspannungszuführung 640 mit dem zweiten Ausgangsspannungsanschluss 620 verbindet.

Durch eine geeignete Ansteuerung des aktiven Leistungsschalters 633 und/oder des aktiven Leistungsschalters 636 kann die Ausgangsspannung $u_A$, die über der Ausgangskapazität 637 anliegt, zeitveränderlich eingestellt werden. Durch z. B. einen sinusförmigen Verlauf der Spannung (mit geeignetem Mittelwert) über der Ausgangskapazität 637 kann erreicht werden, dass ein sinusförmiger, mittelwertfreier Spannungsverlauf (beziehungsweise näherungsweise mittelwertfreier Spannungsverlauf) zwischen den Klemmen bzw. Anschlüssen 610, 620 anliegt. Dadurch kann erreicht werden, dass aus einer Gleichspannung $U_E$, die zwischen der Eingangsspannungszuführung 640 und dem Bezugspotentialknoten 650a, 650b anliegt, eine Wechselspannung $u_{WS}$ generiert wird, die zwischen dem ersten Ausgangsspannungsanschluss 610 und dem zweiten Ausgangsspannungsanschluss 620 anliegt.

Weiterhin ist es möglich, dass durch eine geeignete Ansteuerung der aktiven Leistungsschalter 633, 636 und/oder durch eine geeignete Schaltentlastungsverschaltung der aktiven Leistungsschalter 633, 636 eine Schaltentlastung erzielt wird. Durch diese Schaltentlastung kann ein weiches Ein- und Ausschalten der Leistungsschalter erzielt werden. Dadurch können sich die elektromagnetische Verträglichkeit und/oder die Schaltverlustleistung verbessern.

Das Vergleichsbeispiel gemäß Fig. 6 kann um eine Energiesenke erweitert werden, die zwischen den ersten Ausgangsspannungsanschluss 610 und den zweiten Ausgangsspannungsanschluss 620 beziehungsweise zwischen den ersten Ausgangsspannungsanschluss 610 und die Eingangsspannungszuführung 640 geschaltet wird, sodass eine Spannung an der Energiesenke einem Wechselspannungsverlauf oder einem näherungsweise mittelwertfreien Wechselspannungsverlauf oder einem sinus-/cosinusförmigen, mittelwertfreien Wechselspannungsverlauf entspricht. Durch diese Änderung an dem Vergleichsbeispiel gemäß Fig. 6 kann eine Anordnung entstehen, die der Schaltungsanordnung zur Erzeugung einer Ausgangswechselspannung 200 gemäß Fig. 2 grundsätzlich entsprechen kann.

Vergleichsbeispiel gemäß Fig. 7

Fig. 7 zeigt eine schematische Darstellung einer Vorrichtung zur Erzeugung einer Wechselspannung 700 mit einer "Zeta-Schaltung" 730. Die sogenannte "Zeta-Schaltung" 730 ist mit der in dem Vergleichsbeispiel gemäß Fig. 6 vorgestellten Gleichspannungs/Gleichspannungs-Wandler-Schaltung 630 verwandt.

Die Vorrichtung zur Erzeugung einer Wechselspannung 700 weist einen ersten Ausgangsspannungsanschluss 710 und einen zweiten Ausgangsspannungsanschluss 720 auf, über welchen die Wechselspannung bzw. Ausgangswechselspannung $u_{WS}$ anliegt. Weiterhin weist die Vorrichtung zur Erzeugung einer Wechselspannung 700 eine Eingangsspannungszuführung 740 und einen Bezugspotentialknoten 750a, 750b auf. Zwischen den Eingangsspannungsanschlüssen, d. h. der Eingangsspannungszuführung 740 und d Bezugspotentialknoten 750a, 750b, liegt die Eingangsspannung $U_E$ an. Weiterhin ist zwischen die Eingangsspannungszuführung 740 und den Bezugspotentialknoten 750a, 750b die Eingangskapazität 731 geschaltet. Über dieser Eingangskapazität 731 wiederum liegt die Eingangsspannung $U_E$ an. Der positive Anschluss der Eingangskapazität 731 ist mit einem aktiven Leistungsschalter 732 verbunden, der negative Anschluss der Eingangskapazität 731 ist mit dem Bezugspotentialknoten 750a, 750b verbunden.

Der aktive Leistungsschalter 732 ist an seinem zweiten Anschluss mit einer Induktivität 733 und einer Koppelkapazität 734 verbunden. Der aktive Leistungsschalter 732 weist eine Diode (antiparallele Freilaufdiode) auf. Die Kathode der Diode des Leistungsschalters 732 ist mit dem Eingangskondensator 731 und der Eingangsspannungszuführung 740 verbunden. Die Anode der Diode Leistungsschalters 732 ist mit der Induktivität 733 und der Koppelkapazität 734 verbunden. Die Induktivität 733 ist, wie bereits erwähnt, an ihrem ersten Anschluss mit dem aktiven Leistungsschalter 732 und dem ersten Anschluss der Koppelkapazität 734 (Koppelkondensator, Kondensator) verbunden. Der zweite Anschluss der Induktivität 733 ist mit dem Bezugspotentialknoten 750a, 750b verbunden. Der zweite Anschluss der Koppelkapazität 734 ist wiederum mit einem aktiven Leistungsschalter 735 und einer Induktivität 736 verbunden. Der aktive Leistungsschalter 735 ist an seinem negativen Anschluss mit dem Bezugspotentialknoten 750a, 750b verbunden und der Leistungsschalter 735 weist eine zugeordnete Diode (antiparallele Freilaufdiode) auf. Die Kathode der Diode Leistungsschalters 735 ist dabei mit der Koppelkapazität 734 und dem ersten Anschluss der Induktivität 736 verbunden, die Anode der zugeordneten Diode des Leistungsschalters 735 ist mit dem Bezugspotentialknoten 750a, 750b verbunden.

Die (Ausgangs-)Induktivität 736 ist, wie bereits erwähnt, mit der Koppelkapazität 734 und dem aktiven Leistungsschalter 735 an ihrem ersten Anschluss verbunden, der zweite Anschluss der Induktivität 736 ist mit der Ausgangskapazität 737 und dem ersten Ausgangsspannungsanschluss 710 verbunden. Die Ausgangskapazität 737 ist wiederum an ihrem positiven Anschluss mit dem ersten Ausgangsspannungsanschluss 710 und an ihrem negativen Anschluss mit dem Bezugspotentialknoten 750a, 750b verbunden. Über der Ausgangskapazität 737 liegt die Ausgangsspannung $u_A$ an. Weiterhin weist die Vorrichtung zur Erzeugung einer Wechselspannung 700 eine Verschaltung bzw. eine Leitungsverbindung bzw. eine Leiterverbindung auf, die die Eingangsspannungszuführung 740 mit dem zweiten Ausgangsspannungsanschluss 720 verbindet.

Durch eine geeignete Ansteuerung des aktiven Leistungsschalters 732 und/oder des aktiven Leistungsschalters 735 kann die Ausgangsspannung $u_A$, die über der Ausgangskapazität 737 anliegt, zeitveränderlich eingestellt werden. Durch z. B. einen sinusförmigen Verlauf der Spannung über der Ausgangskapazität 737 kann erreicht werden, dass ein sinusförmiger, mittelwertfreier Potentialverlauf an den Klemmen 710, 720 anliegt. Dadurch kann erreicht werden, dass aus einer Gleichspannung $U_E$, die zwischen der Eingangsspannungszuführung 740 und dem Bezugspotentialknoten 750a, 750b anliegt, eine Wechselspannung $u_{WS}$ generiert wird, die zwischen dem ersten Ausgangsspannungsanschluss 710 und dem zweiten Ausgangsspannungsanschluss 720 anliegt.

Bei dem Vergleichsbeispielgemäß Fig. 7 kann durch eine geeignete Ansteuerung der aktiven Leistungsschalter 732, 735 erzielt werden, dass die Ausgangsspannung $u_A$ einen sinusförmigen Verlauf annimmt. Dies kann erreicht werden mittels eines nicht potentialgetrennten GS/GS-Wandlers (DC/DC-Wandlers) mit Hochsetz- und Tiefsetzfunktion.

$$u_A = U_E + \hat{u} \cdot \cos(\omega t + \varphi)$$

In der Gleichung ist $U_E$ die Eingangsspannung des DC/DC-Wandlers. $\hat{u}$ ist die Amplitude der sinusförmigen Spannung und erfüllt die Bedingung $\hat{u} \leq U_E$. In dem genannten Fall macht die Spannungsdifferenz zwischen dem Ausgang des DC/DC-Wandlers, d. h. der Spannung $u_A$, und dem Eingang des DC/DC-Wandlers, d. h. die Spannung $U_E$, die Wechselspannung $u_{WS}$ aus.

Wie bereits bei den anderen Vergleichsbeispielenerwähnt, kann auch das Vergleichsbeispielgemäß Fig. 7 weich geschaltet werden. Durch den weichschaltenden Betrieb der Topologie werden die Schaltverluste nahezu vermieden. Große Spannungswechsel am Ausgang werden ebenfalls reduziert und damit eine Oberschwingungsbelastung (Oberwellenbelastung) reduziert. Die Ausgangsmasse liegt nicht auf der Spannung 0V, jedoch auf einem konstanten Potential, das näherungsweise dem Potential der Eingangsspannungszuführung entspricht, und vermeidet so Verschiebungsströme. Diese Verschiebungsströme müssten bei Vorhandensein durch aufwendigere Filter reduziert werden.

Damit ist ein Vorteil der vorgenannten Vorrichtungen zur Erzeugung einer Wechselspannung 100 bis 700 der, dass die Ausgangsmasse auf einem konstanten Spannungsniveau verharrt und dadurch unerwünschte Verschiebungsströme nicht durch aufwendige Filter reduziert werden müssen.

Ein weiterer Vorteil, die alle der vorgenannten Vorrichtungen zur Erzeugung einer Wechselspannung und der Schaltungsanordnung zur Erzeugung einer Ausgangswechselspannung 100 bis 700 aufweisen können, ist es, dass hohe Spannungswechsel an den Leistungshalbleitern vermieden werden können und eine damit verbundene hohe Oberschwingungserzeugung. Diese niedrige Oberschwingungserzeugung muss somit nicht durch große Ausgangsfilter verringert werden.

Die vorgenannten Vergleichsbeispiele können allesamt geeignet sein, in folgenden Beispiel-Anwendungsgebieten verwendet zu werden:

- Einphasige Wechselrichter
- Unterbrechungsfreie Stromversorgung
- Mehrphasige Wechselrichter
- Energiespeicher-Anbindung im Bereich Hybrid-/Elektrofahrzeuge

Das Vergleichsbeispielgemäß Fig. 7 kann um eine Energiesenke erweitert werden, die zwischen den ersten Ausgangsspannungsanschluss 710 und den zweiten Ausgangsspannungsanschluss 720 beziehungsweise zwischen den ersten Ausgangsspannungsanschluss 710 und die Eingangsspannungszuführung 740 geschaltet wird, sodass eine Spannung an der Energiesenke einem Wechselspannungsverlauf oder einem näherungsweise mittelwertfreien Wechselspannungsverlauf oder einem sinus-/cosinusförmigen, mittelwertfreien Wechselspannungsverlauf entspricht. Durch diese Änderung an dem Vergleichsbeispielgemäß Fig. 7 kann eine Anordnung entstehen, die der Schaltungsanordnung zur Erzeugung einer Ausgangswechselspannung 200 gemäß Fig. 2 grundsätzlich entsprechen kann.

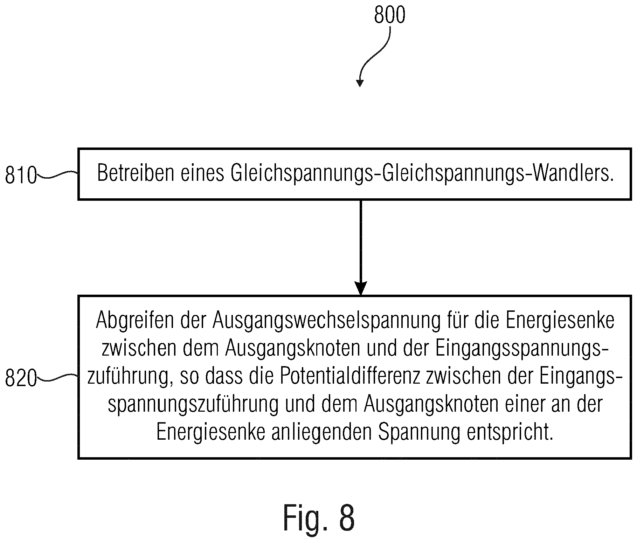

Vergleichsbeispielgemäß Fig. 8

Im Folgenden wird anhand der Fig. 8 ein Verfahren zur Erzeugung einer Ausgangswechselspannung für eine Energiesenke 800 erläutert: Das Verfahren 800 weist ein Betreiben 810 eines Gleichspannungs-Gleichspannungs-Wandlers auf. Bei dem Betreiben 810 eines Gleichspannungs-Gleichspannungs-Wandlers liegt eine Eingangsspannung zwischen einer Eingangsspannungszuführung und einem Bezugspotentialknoten an. Weiterhin wird bei dem Betreiben eine Ausgangsspannung des Gleichspannungs-Gleichspannungs-Wandlers so erzeugt, dass ein Ausgangsknoten zeitweise ein Potential aufweist, das positiver ist als das an der Eingangsspannungszuführung anliegende Potential. Weiterhin wird der Gleichspannungs-Gleichspannungs-Wandler so betrieben, dass der Ausgangsknoten zeitweise ein Potential aufweist, das negativer ist als das an der Eingangsspannungszuführung anliegende Potential.

Das Verfahren 800 weist ferner ein Abgreifen 820 der Ausgangswechselspannung für die Energiesenke zwischen dem Ausgangsknoten und der Eingangsspannungszuführung auf. Das Abgreifen 820 der Ausgangswechselspannung erfolgt derart, dass die Potentialdifferenz zwischen der Eingangsspannungszuführung und dem Ausgangsknoten einer an der Energiesenke anliegenden Spannung entspricht.

Mit diesem Betriebsverfahren 800 kann auch eine Erzeugung einer Ausgangswechselspannung für eine Energiesenke erreicht werden. Dieses Verfahren kann gleichwohl mit den Vergleichsbeispielengemäß Fig. 1 bis Fig. 7 vorgestellten Vorrichtungen zur Erzeugung einer Wechselspannung und Schaltungsanordnungen zur Erzeugung einer Ausgangswechselspannung 100 - 700 kombiniert werden. Weiterhin können auch die anderen, vorgenannten Vergleichsbeispiele mit dem Verfahren zur Erzeugung einer Ausgangswechselspannung kombiniert werden. Das Verfahren kann im Übrigen um die hierin in Bezug auf die erfindungsgemäßen Vorrichtungen erläuterten Merkmale und Funktionalitäten ergänzt werden.

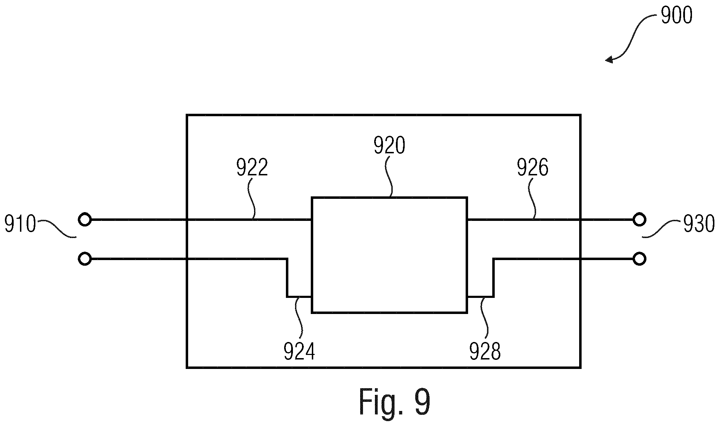

Vergleichsbeispielgemäß Fig. 9

Fig. 9 zeigt eine schematische Darstellung eines Wechselrichters 900 zur Erzeugung einer Wechselspannung aus einer Gleichspannung. Dabei weist der Wechselrichter einen Eingangsgleichspannungsanschluss 910 auf, der ausgelegt ist, um mit einer Eingangsgleichspannung beaufschlagt zu werden. Die Gleichspannung kann beispielsweise aus einer Gleichspannungsquelle stammen, wie zum Beispiel mehreren (beispielsweise in Reihe geschalteten) Photovoltaikzellen, einem Gleichspannungsenergiespeichers oder einer gleichgerichteten Wechselspannung.

Weiterhin weist der Wechselrichter eine Vorrichtung zur Erzeugung einer Wechselspannung 920 auf, wobei die Vorrichtung zur Erzeugung einer Wechselspannung 920 (z. B. wie bei den Vorrichtungen zur Erzeugung einer Wechselspannung 100, 300a, 400, 500, 600, 700, 1020) einen Gleichspannungs-Gleichspannungs-Wandler (z. B. wie die GS/GS-Wandler 130, 230, 330, 430, 530, 630, 730) aufweist. Der Gleichspannungs-Gleichspannungs-Wandler kann ausgelegt sein, um basierend auf einer Eingangsspannung eine Ausgangsspannung zu erzeugen. Die Eingangsspannung liegt dabei zwischen einer Eingangsspannungszuführung 922 und einem Bezugspotentialknoten 924 an. Weiterhin ist der Gleichspannungs-Gleichspannungs-Wandler ausgelegt, um die Ausgangsspannung so zu erzeugen, dass ein erster Ausgangsspannungsanschluss 926 zeitweise ein Potential aufweist, das positiver ist als das an der Eingangsspannungszuführung 922 anliegende Potential. Weiterhin ist der Gleichspannungs-Gleichspannungs-Wandler so ausgelegt, dass der erste Ausgangsspannungsanschluss 926 zeitweise ein Potential aufweist, das negativer ist als das an der Eingangsspannungszuführung 922 anliegende Potential. Weiterhin ist der zweite Ausgangsspannungsanschluss 928 mit der Eingangsspannungszuführung 922 gekoppelt.

Der Wechselrichter 900 weist weiterhin einen Ausgangswechselspannungsanschluss 930 auf, der ausgelegt ist, um eine Ausgangswechselspannung bereitzustellen.

Weiterhin ist der Wechselrichter derart gestaltet, dass die Eingangsspannungszuführung 922 und der Bezugspotentialknoten 924 der Vorrichtung zur Erzeugung einer Wechselspannung 920 z. B. niederimpedant mit zwei Kontakten des Eingangsgleichspannungsanschlusses 910 gekoppelt sind. Weiterhin sind der erste Ausgangsspannungsanschluss 926 und der zweite Ausgangsspannungsanschluss 928 der Vorrichtung zur Erzeugung einer Wechselspannung 920 mit Kontakten z. B. zum Anschluss einer Last des Aufgangswechselspannungsanschlusses 930 gekoppelt.

Der Wechselrichter 900 zur Erzeugung einer Wechselspannung aus einer Gleichspannung ist somit ausgelegt, eine Gleichspannung, die an dem Eingangsgleichspannungsanschluss 910 angeschlossen ist, in eine Ausgangswechselspannung zu wandeln, die an dem Ausgangswechselspannungsanschluss 930 bereitgestellt wird. Somit kann mit dem Wechselrichter 900 aus einer Gleichspannungsquelle eine Wechselspannungslast betrieben werden. Diese Wechselspannungslast kann dabei einen Verbraucher darstellen, eine Last oder ggf. auch ein elektrisches Versorgungsnetz. Im Allgemeinen lässt sich die Wechselspannungslast auch durch eine Energiesenke beschreiben.

Dieses System 900 kann mit den Vorrichtungen zur Erzeugung einer Wechselspannung und Schaltungsanordnungen zur Erzeugung einer Ausgangswechselspannung, die in den Vergleichsbeispielengemäß Fig. 1 bis Fig. 7 vorgestellt wurden, kombiniert werden. Weiterhin können auch die anderen, vorgenannten, in der Zusammenfassung der Erfindung vorgestellten Vergleichsbeispiele mit dem System 900 kombiniert werden. Das System kann im Übrigen um die hierin in Bezug auf die erfindungsgemäßen Vorrichtungen erläuterten Merkmale und Funktionalitäten ergänzt werden.

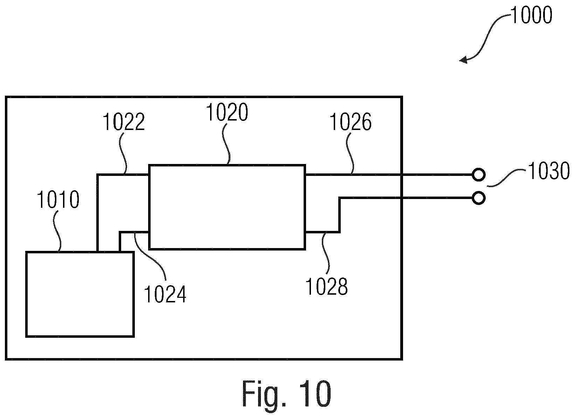

Vergleichsbeispielgemäß Fig. 10

Fig. 10 zeigt eine schematische Darstellung einer Energiespeicher-Vorrichtung 1000 zur Bereitstellung einer Wechselspannung unter Verwendung eines Gleichspannungsenergiespeichers 1010, wobei die Energiespeicher-Vorrichtung 1000 einen Gleichspannungsenergiespeicher 1010 aufweist, der ausgelegt ist, Energie zu speichern und die Energie als Gleichspannung zur Verfügung zu stellen. Dabei kann eine Abweichung der Gleichspannung von einem gewünschten Wert zum Beispiel bei Entnahme der Energie in einem beschränkten Maß auftreten.

Weiterhin weist die Energiespeicher-Vorrichtung 1000 eine Vorrichtung zur Erzeugung einer Wechselspannung 1020 (z. B. wie bei den Vorrichtungen zur Erzeugung einer Wechselspannung 100, 300a, 400, 500, 600, 700, 920) auf. Die Vorrichtung zur Erzeugung einer Wechselspannung 1020 weist dabei einen Gleichspannungs-Gleichspannungs-Wandler (z. B. wie die GS/GS-Wandler 130, 230, 330, 430, 530, 630, 730) auf, der ausgelegt ist, um basierend auf einer Eingangsspannung, beispielsweise der von der Gleichspannungsenergiespeicherquelle 1010 zur Verfügung gestellten Gleichspannung, eine Ausgangsspannung zu erzeugen, wobei die Eingangsspannung zwischen einer Eingangsspannungszuführung 1022 und einem Bezugspotentialknoten 1024 anliegt. Weiterhin ist der Gleichspannungs-Gleichspannungs-Wandler ausgelegt, um die Ausgangsspannung so zu erzeugen, dass ein erster Ausgangsspannungsanschluss 1026 zeitweise ein Potential aufweist, das positiver ist als das an der Eingangsspannungszuführung 1022 anliegende Potential. Weiterhin ist der Gleichspannungs-Gleichspannungs-Wandler ausgelegt, um die Ausgangsspannung so zu erzeugen, dass der erste Ausgangsspannungsanschluss 1026 zeitweise ein Potential aufweist, das negativer ist als das an der Eingangsspannungszuführung 1022 anliegende Potential. Weiterhin ist der zweite Ausgangsspannungsanschluss 1028 mit der Eingangsspannungszuführung 1022 beispielsweise direkt, statisch, niederohmig, niederimpedant, niederinduktiv gekoppelt.

Weiterhin weist die Energiespeicher-Vorrichtung 1000 einen Ausgangswechselspannungsanschluss 1030 auf, der ausgelegt ist, um eine Ausgangswechselspannung bereitzustellen. Der Gleichspannungsenergiespeicher 1010 ist in der Energiespeicher-Vorrichtung 1000 mit der Eingangsspannungszuführung 1022 und dem Bezugspotentialknoten 1024 der Vorrichtung zur Erzeugung einer Wechselspannung 1020 gekoppelt. Weiterhin sind der erste Ausgangsspannungsanschluss 1026 und der zweite Ausgangsspannungsanschluss 1028 der Vorrichtung zur Erzeugung einer Wechselspannung 1020 mit Kontakten z. B. zum Anschluss einer Last des Ausgangswechselspannungsanschlusses 1030 gekoppelt.

Diese Energiespeicher-Vorrichtung bzw. Energiespeicher-Anbindung 1000 kann beispielsweise im Bereich der Hybrid-/Elektrofahrzeuge Verwendung finden. Der Gleichspannungsenergiespeicher 1010 kann beispielsweise durch eine chemische Gleichspannungsenergiequelle wie einen Akkumulator verwirklicht sein. Weiterhin sind auch andere Anordnungen von Gleichspannungsenergiespeichern denkbar, die eine gespeicherte Energie in Gleichspannungsform abgeben können.

Der Gleichspannungsenergiespeicher kann die gespeicherte Energie, die beispielsweise in chemischer Form oder als Rotationsenergie gespeichert sein kann, in Form elektrischer Energie beziehungsweise in Form elektrischer Leistung über einen Zeitraum abgeben. Dabei kann die elektrische Spannung beispielsweise innerhalb einer Hochfrequenzperiode des GS/GS-Wandlers oder einiger Hochfrequenzperioden des GS/GS-Wandlers nur in vernachlässigbarem Maß von einer mittleren Spannung abweichen. Es kann die Energiequelle somit als näherungsweise Konstantspannungsquelle beziehungsweise Gleichspannungsquelle beziehungsweise Gleichspannungsenergiespeicher angesehen werden.

Dieses System 1000 kann mit den Vorrichtungen zur Erzeugung einer Wechselspannung und Schaltungsanordnungen zur Erzeugung einer Ausgangswechselspannung, die in den Vergleichsbeispielen gemäß Fig. 1 bis Fig. 7 vorgestellt wurden, kombiniert werden. Weiterhin können auch die anderen, vorgenannten, in der Zusammenfassung der Erfindung vorgestellten Vergleichsbeispiele mit dem System 100 kombiniert werden. Das System kann im Übrigen um die hierin in Bezug auf die erfindungsgemäßen Vorrichtungen erläuterten Merkmale und Funktionalitäten ergänzt werden.

Mit den hierin beschriebenen erfindungsgemäßen Lösungen und den Vergleichsbeispielen ist ein Konzept ausführlich beschrieben, das vorteilhafte Wechselrichter bzw. vorteilhafte Anordnungen zur Erzeugung von Wechselspannung gegenüber dem Stand der Technik erschafft. Herkömmliche Gleichspannungs-Gleichspannungs-Wandler können in Kombination mit der erfindungsgemäßen Lösung eine Vielzahl an verbesserten Wechselrichtern ergeben, die u. a. z. B. in ihrem Wirkungsgrad oder ihrem EMV-Verhalten oder in ihren Kosten deutliche Vorteile gegenüber dem Stand der Technik besitzen können.

Vergleichsbeispiele und Ausführungsbeispiele dreiphasiger Wechselrichter

Fig. 12, Fig. 13 und Fig. 14 zeigen zwei weitere Vergleichsbeispiele sowie ein Ausführungsbeispiel der erfindungsgemäßen Lösung. Das Ausführungsbeispiel zeigt hierbei eine mögliche Ausführung eines dreiphasigen Wechselrichters, die auf der erfindungsgemäßen Lösung basiert.

Fig. 12 zeigt eine Darstellung eines dreiphasigen Wechselrichters 1200 gemäß einem Vergleichsbeispiel. Dabei weisen die Suffixe a, b, c die jeweiligen Elemente einer der drei Phasen zu, die somit als Phase a, Phase b und Phase c bezeichnet werden können. Der dreiphasige Wechselrichter 1200 weist drei GS/GS-Wandler 1230a, 1230b, 1230c auf. Jedem dieser GS/GS-Wandler 1230a, 1230b, 1230c ist eine Eingangsspannungszuführung 1240a, 1240b, 1240c zugeordnet. Diese Eingangsspannungszuführungen 1240a, 1240b, 1240c sind zu der (übergeordneten) Eingangsspannungszuführung 1240 zusammengeschaltet. Weiterhin weist der dreiphasige Wechselrichter 1200 drei Bezugspotentialknoten 1250a, 1250b, 1250c auf. Diese Bezugspotentialknoten 1250a, 1250b, 1250c können auch mit dem (übergeordneten) Bezugspotentialknoten 1250 zu einem "großen" Bezugspotentialknoten zusammengefasst werden. Um auf die fehlende galvanische Trennung der GS/GS-Wandler 1230a, 1230b, 1230c hinzuweisen sind die Bezugspotentialknoten auch auf der "Ausgangsseite" der GS/GS-Wandler 1230a, 1230b, 1230c als die Bezugspotentialknoten 1250a, 1250b, 1250c dargestellt.

Die GS/GS-Wandler 1230a, 1230b, 1230c sind dabei beispielsweise so ausgelegt, dass diese in einem jeweiligen ersten Zeitabschnitt eine positive Ausgangsspannung (bezogen auf den jeweiligen Bezugspotentialknoten 1250a, 1250b, 1250c) an dem Ausgangsknoten 1210a, 1210b, 1210c zur Verfügung stellen und so dass diese in einem jeweiligen zweiten Zeitabschnitt eine negative Ausgangsspannung (bezogen auf den jeweiligen Bezugspotentialknoten 1250a, 1250b, 1250c) an dem Ausgangsknoten 1210a, 1210b, 1210c zur Verfügung stellen.

Weiterhin ist zwischen den jeweiligen Ausgangsknoten 1210a, 1210b, 1210c und einen Sternpunkt 1262 (beziehungsweise damit zwischen den jeweiligen Ausgangsknoten 1210a, 1210b, 1210c und die Eingangsspannungszuführung 1240) eine Last 1260a, 1260b, 1260c geschaltet. Diese Last kann im Allgemeinen eine Energiesenke sein, auch wäre ein dreiphasiges Netz an dieser Stelle denkbar, oder ein dreiphasiger Motor. Es sind hierbei die gleichen Möglichkeiten gegeben, die z. B. in Bezug auf das Vergleichsbeispiel gemäß Fig. 2 und die Energiesenke 260 genannt wurden. Die Anschlüsse der dreiphasigen Energiesenke 1260a, 1260b, 1260c können beispielweise auf einer Anschlussseite in einem Sternpunkt 1262 zusammengeführt sein, der wiederum mit der Eingangsspannungszuführung 1240 gekoppelt ist. Alternativ können mehrere einphasige Energiesenken auch getrennt an die (übergeordnete) Eingangsspannungszuführung 1240 gekoppelt sein. Auf wäre es möglich, diese mit den Eingangsspannungszuführungen 1240a, 1240b, 1240c zu koppeln.

Durch eine geeignete Ansteuerung der GS/GS-Wandler 1230a, 1230b, 1230c kann wiederum die hoch- und tiefsetzende Funktion erzielt werden. Dabei kann z. B. auch eine phasenversetzte Ansteuerung der GS/GS-Wandler 1230a, 1230b, 1230c sinnvoll sein. Dabei wäre es z. B. eine vorteilhafte Ausführung, durch eine geeignete Ansteuerung einen Phasenversatz von 120° zu erzielen. Dadurch kann bei (näherungsweise) sinusförmigen Ausgangsspannungen erzielt werden, dass die Summe der an die Phasen der Energiesenke 1260a, 1260b, 1260c abgegebenen Leistung näherungsweise konstant ist.

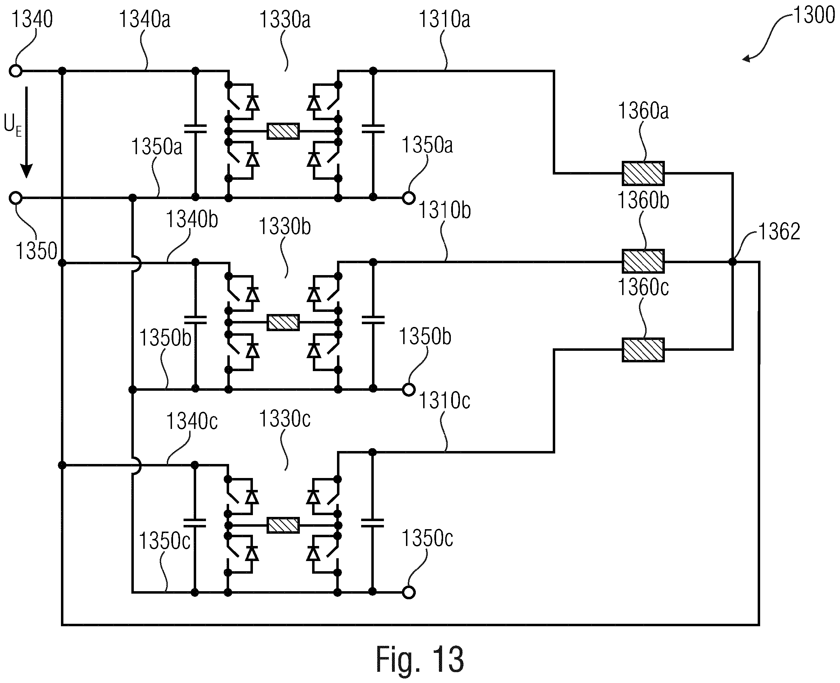

In Fig. 13 ist ein dreiphasiger Wechselrichter 1300 dargestellt, der einen vergleichbaren Aufbau wie der Wechselrichter 1200 aufweist. Dabei wurde ein jeweiliger "allgemeiner" GS/GS-Wandler 1230a, 1230b, 1230c durch ein "konkretes" Beispiel einer "Tief- und Hochsetzsteller-Schaltung" 1330a, 1330b, 1330c ersetzt, die anderen Topologien der vorgenannten (einphasigen) Vergleichsbeispiele (wie z. B. die "Hoch- und Tiefsetzsteller-Schaltung", die "SEPIC-Schaltung" usw.) können ebenfalls verwendet werden. Analog zu dem Wechselrichter 1200 sind beispielsweise die Eingangsspannungszuführungen 1340, 1340a, 1340b, 1340c und die Bezugspotentialknoten 1350, 1350a, 1350b, 1350c ausgeführt. Ebenfalls entspricht die Energiesenke 1360a, 1360b, 1360c der Energiesenke 1260a, 1260b, 1260c. Auch der Sternpunkt 1362 entspricht im Grundsatz dem Sternpunkt 1262. Wichtig ist wiederum die Tatsache, dass die Energiesenke 1360a, 1360b, 1360c zwischen einen jeweiligen Ausgangsknoten 1310a, 1310b, 1310c und die Eingangsspannungszuführung 1340 geschaltet ist. Dadurch ist es möglich, die Gleichspannung, die zwischen der Eingangsspannungszuführung 1340 und dem Bezugspotentialknoten 1350 anliegt, in eine (dreiphasige) Wechselspannung, die (näherungsweise) an den jeweiligen Phasen der Energiesenke 1360a, 1360b, 1360c anliegt, zu wandeln.

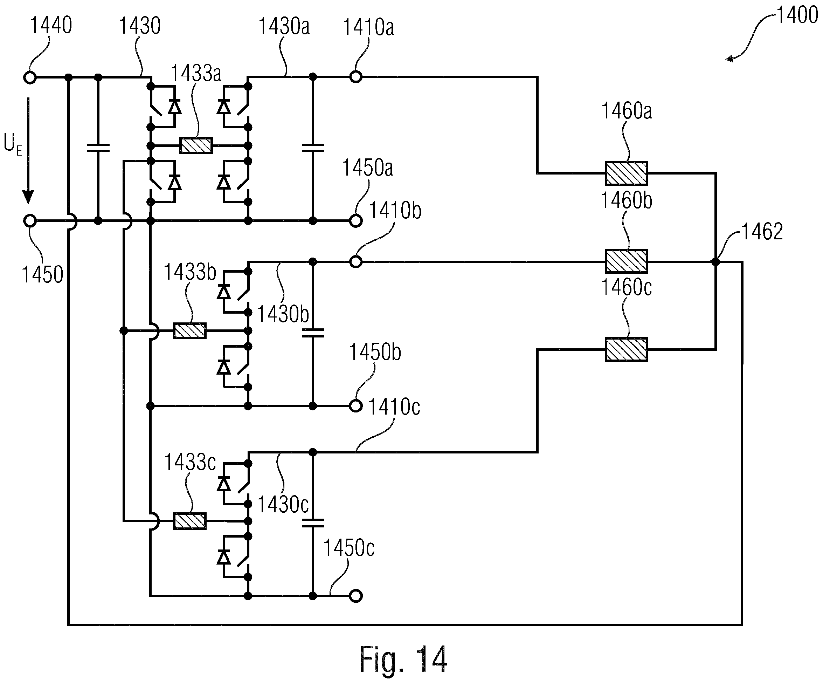

In Fig. 14 ist ein Ausführungsbeispiel der Erfindung dargestellt, das einen dreiphasigen Wechselrichter 1400 verwirklicht. Dabei kann durch eine geschickte Schaltungsanordnung eine Verringerung der benötigten Schaltungselemente erzielt werden. Dadurch können z. B. Kosten eingespart werden, weiterhin ist es auch möglich, dass dadurch die Ansteuerung weniger komplex ausgeführt werden kann.

Der Wechselrichter 1400 weist dabei eine Anordnung auf, die von dem Vergleichsbeispiel gemäß Fig. 13 abgeleitet sein kann. Die Phasen der Energiesenke 1460a, 1460b, 1460c ist wie in den vorherigen Vergleichsbeispielen zwischen einen jeweiligen Ausgangsknoten 1410a, 1410b, 1410c und die Eingangsspannungszuführung 1440 geschaltet. Es ist bei geeigneter Ansteuerung möglich, diesen Phasen der Energiesenke 1460a, 1460b, 1460c eine sinusförmige Wechselspannung zur Verfügung zu stellen, die auch beispielsweise einen Phasenversatz zwischen den jeweiligen Wechselspannungen aufweist, vorteilhafterweise z. B. einen Phasenversatz von 120° aufweist.

Die GS/GS-Wandler können in dem Ausführungsbeispiel aus einer Kombination eines vorderen (eingangsseitigen) Schaltungsteils 1330 mit den drei hinteren (ausgangsseitigen) Schaltungsteilen 1330a, 1330b, 1330c gebildet sein. Den Induktivitäten 1333a, 1333b, 1333c (Spulen, Drosseln) kann in dem Ausführungsbeispiel auch eine entkoppelnde Funktion zwischen den drei Phasen zukommen. Ebenfalls kann eine Taktung bzw. eine Taktfrequenz des vorderen Schaltungsteils 1330 deutlich höher gewählt sein als eine Taktung der drei hinteren Schaltungsteile 1330a, 1330b, 1330c. Beispielsweise kann eine Taktfrequenz des vorderen Schaltungsteils 1330 gewählt werden, die näherungsweise dem dreifachen Wert der Taktfrequenz der drei hinteren Schaltungsteile 1330a, 1330b, 1330c entspricht.

Angemerkt werden kann hier, dass der vordere Schaltungsteil 1330 beispielsweise als Tiefsetzsteller genutzt werden kann und dass die drei hinteren Schaltungsteile 1330a, 1330b, 1330c z. B. als Hochsetzsteller genutzt werden können. Es wären aber auch andere Funktionalitäten denkbar, die beispielsweise durch eine geeignete Ansteuerung oder Wahl der Bauteilwerte erzielt werden kann.

In den vorgenannten Vergleichsbeispielen bzw. Ausführungsbeispielen der dreiphasigen Wechselrichter sind jeweils Energiesenken (1260a, 1260b, 1260c; 1360a, 1360b, 1360c; 1460a, 1460b, 1460c) als Bestandteile dargestellt. Diese Energiesenken können funktionell entbehrlich sein und stellen somit nur ein Beispiel einer möglichen Ausführung dar. Dementsprechend wären daraus abgeleitete Ausführungsbeispiele denkbar, die keine Energiesenken aufweisen, sondern an mehreren Anschlussklemmen ein dreiphasiges Wechselspannungssystem (z. B. ein symmetrisches, dreiphasiges Wechselspannungssystem (Wechselstromsystem), z. B. mit einem Phasenversatz von 120°) zur Verfügung stellen. Die Anschlussklemmen können unterschiedliche Ausführungen aufweisen. Denkbar wären beispielsweise Schraubverbindungen oder Steckverbindungen oder Klemmverbindungen oder auch eine mechanische Verbindung und eine elektrische Kontaktierung, die durch jeweils unterschiedliche Einrichtungen verwirklicht wird.

Die in den vorangegangenen Abschnitten, z. B. zu den Vergleichsbeispielen gemäß den Figen. 1 bis 10, genannten Eigenschaften, Ausführungsformen usw. können sinngemäß auch auf die Vergleichsbeispiele bzw. Ausführungsbeispiele der dreiphasigen Wechselrichter übertragen werden. Weiterhin ist festzustellen, dass eine beliebige Phasenanzahl, d. h. auch eine Phasenanzahl größer als drei, aber auch zwei Phasen, auf Grundlage der erfindungsgemäßen Lösung verwirklicht werden kann.

Weiterhin kann angemerkt werden, dass es bei einem symmetrischen Dreiphasenwechselspannungssystem möglich ist, dass eine Sternpunktkontaktierung nicht nötig ist, da sich die Summe der Ströme der drei Phasen (hier beispielsweise der Phasen a, b und c) zu 0 ergeben. Damit ist es möglich, die Kopplung des Sternpunktes nicht mehr beispielsweise als Leitung auszuführen, sondern die Kopplung des Sternpunktes kann durch eine der anderen der drei Phasen verwirklicht sein. Der Sternpunkt kann also derart gekoppelt sein, dass das Potential des Sternpunktes näherungsweise dem Potential der Eingangsspannungszuführung entspricht. Die Kopplung kann damit auch durch einen der anderen GS-GS-Wandler verwirklicht sein, diese soll sich vorteilhafterweise aber so ausbilden, dass der Sternpunkt (oder ein entsprechender Anschluss oder entsprechende Anschlüsse der (dreiphasigen) Energiesenke) eine Potential aufweist, das näherungsweise dem Potential der Eingangsspannungszuführung entspricht.

Vergleichsbeispiele Einphasen-Gleichrichterschaltungen

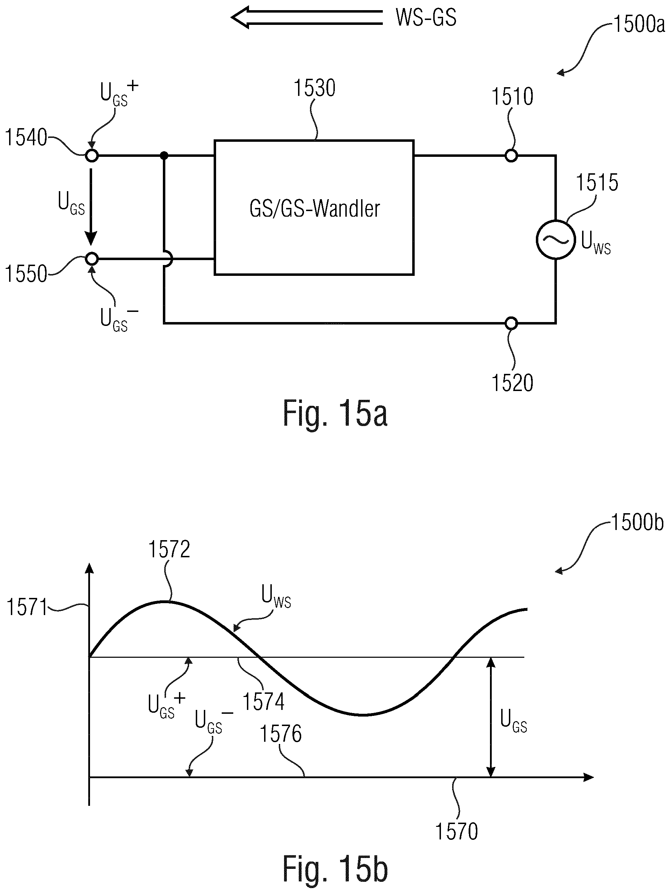

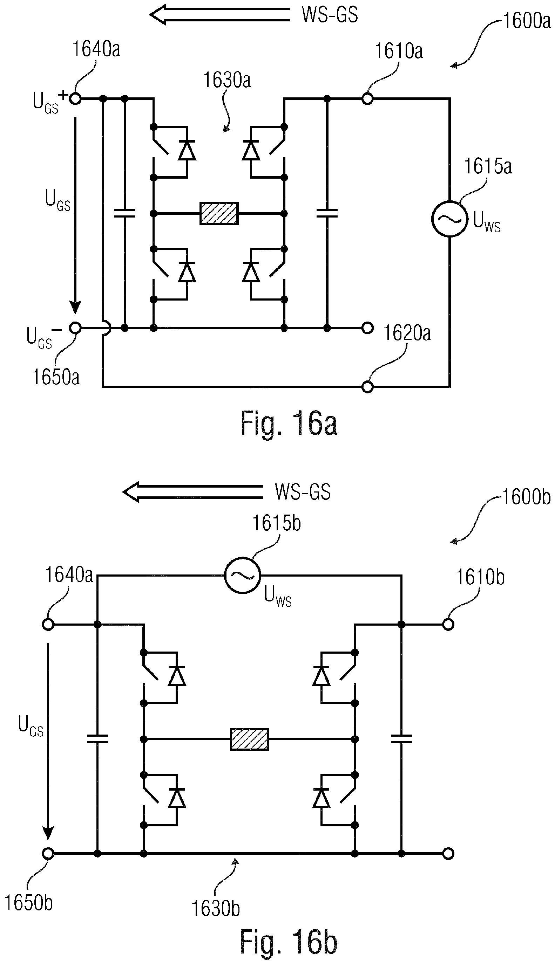

Fig. 15a, Fig. 16a und Fig. 16b zeigen drei unterschiedliche Vergleichsbeispiele . Alle verdeutlichen dabei das Konzept, die erfindungsgemäße Lösung zur Gleichrichtung einer Wechselspannung zu verwenden. Fig. 15b zeigt die (schematischen, beispielhaften) Zeitverläufe dreier Spannungen, die ebenfalls das Konzept der Verwendung der erfindungsgemäßen Lösung als Gleichrichterschaltung verdeutlichen.

Fig. 15a zeigt eine Darstellung einer Schaltung zur Erzeugung einer Gleichspannung 1500a aus einer Wechselspannungsquelle 1515, wobei die Schaltung z. B. mit der Schaltung 300a in Fig. 3 vergleichbar ist. Die Schaltung zur Erzeugung einer Gleichspannung 1500a weist eine Wechselspannungszuführung 1510, 1520 auf, die von den beiden Anschlüssen (Kontaktierungen o. ä.), dem erste (Eingangs-)Wechselspannungsanschluss 1510 und dem zweiten (Eingangs-)Wechselspannungsanschluss 1520 gebildet wird. Diese Kontaktierungen/Verbindungen/Anschlüsse können auf unterschiedliche Art gebildet sein. Dabei können Schraub-, Klemm-, Steckverbindungen ebenso denkbar sein wie Quetschverbindungen. Es kann verallgemeinert gesagt werden, dass neben einer elektrischen Kontaktierung zumeist eine mechanische Befestigung gewünscht ist. Die tatsächliche Ausführung kann dabei sehr unterschiedlich ausfallen.

Die Wechselspannungszuführung 1510, 1520 wird beispielsweise mit einer sinusförmigen Wechselspannung versorgt, die durch eine Wechselspannungsquelle 1515 symbolisiert ist. Diese (Eingangs-)Wechselspannung kann dabei einen Mittelwert aufweisen, der ungleich null ist. Weiterhin weist die Schaltung zur Erzeugung einer Wechselspannung 1500a einen Gleichspannungs-Gleichspannungs-Wandler 1530 (GS/GS-Wandler, DC/DC-Wandler) auf. Dieser GS-GS-Wandler 1530 kann dabei so ausgelegt sein, dass dieser zwischen einem ersten (Ausgangs-)Gleichspannungsanschluss 1540 und einem zweiten (Ausgangs- )Gleichspannungsanschluss 1550 eine Gleichspannung erzeugt, wobei der GS-GS-Wandler 1530 so ausgelegt ist, dass dieser die Höhe der Gleichspannung $U_{GS}$ beispielsweise so erzeugt, dass diese näherungsweise dem Mittelwert der (Eingangs-)Wechselspannung 1515 entspricht. Als Unterschied zu den vorgenannten Vergleichsbeispielen, die eine Wechselspannung aus einer Gleichspannung erzeugen, ist die Energieflussrichtung zu nennen. Die Leistungsflussrichtung (Energieflussrichtung) ist in dem Vergleichsbeispiel gemäß Fig. 15a von rechts nach links zu sehen und mit einem Pfeil, der mit WS/GS beschriftet ist, angedeutet. Mit der Lösung kann es somit möglich sein, eine Energieflussrichtung einzustellen, d. h. dieselbe Ausführung der Lösung zur Gleichrichtung und auch zur Wechselrichtung zu verwenden.

Fig. 15b zeigt eine schematische Darstellung 1500b des Zeitverlaufs der drei Spannungen $u_{WS}$ 1572, $U_{GS+}$ 1574 und $U_{Gs-}$ 1576. Die Darstellung 1500b weist eine Abszisse 1570, die eine Zeitachse darstellt, und weiterhin eine Ordinate 1571 auf, die eine Spannungsachse darstellt. Weiterhin zeigt die Darstellung 1500b die drei Spannungen, die (Eingangs- )Wechselspannung 1572 ($u_{WS}$), die positive (Ausgangs-)Gleichspannung 1574 (bzw. das positive (Ausgangs-)Potential) ($U_{GS+}$) und die negative Ausgangsgleichspannung 1576 (bzw. das negative (Ausgangs-)Potential) ($U_{GS-}$). An den Zeitverläufen kann damit das Konzept der erfindungsgemäßen Lösung nachvollzogen werden. Ein Potential der Wechselspannung $u_{WS}$, beispielsweise das Potential des zweiten Wechselspannungsanschlusses 1520, wird auf den ersten (Ausgangs-)Gleichspannungsanschluss 1540 gekoppelt. Das dafür gewählte Potential der Wechselspannung $u_{WS}$ kann vorteilhafterweise so sein, dass das Potential gegenüber einer (elektrischen) Masse bzw. gegenüber einer Erde ein näherungsweise statisches (zeitunveränderliches, festes, festgelegtes) Potential ($u_{GS+}$) aufweist. Der GS-GS-Wandler 1530 ist so ausgelegt, dass dieser das (zeitveränderliche) Potential, das an dem ersten Wechselspannungsanschluss 1510 anliegt, so wandelt, dass der zweite Ausgangsgleichspannungsanschluss 1550, der einem Bezugspotentialknoten 1550 des GS-GS-Wandlers 1530 entsprechen kann, ein näherungsweise zeitunveränderliches Potential ($u_{GS-}$) aufweist. Damit kann zwischen dem ersten Ausgangsgleichspannungsanschluss 1540 und dem zweiten Ausgangsgleichspannungsanschluss 1550 eine Gleichspannung $U_{GS}$ zur Verfügung gestellt werden. In der Darstellung 1500b ist zu sehen, dass der Zeitverlauf der Wechselspannung $u_{WS}$ 1572 sinusförmig ist und (bezogen auf das Potential $U_{GS-}$) einen Mittelwert aufweist, der nicht gleich null ist. Der Zeitverlauf der (Ausgangsgleich-)Spannung (bzw. des Potentials) $U_{GS+}$ 1574 ist (bezogen auf das Potential $U_{GS-}$) näherungsweise konstant und entspricht (näherungsweise) dem Mittelwert der der Wechselspannung $u_{WS}$. Der Zeitverlauf des Potentials $u_{GS-}$ ist in der Darstellung ebenfalls (näherungsweise) konstant und als (näherungsweise) null dargestellt. Somit ergibt sich die Ausgangsgleichspannung $U_{GS}$. Diese Ausgangsgleichspannung ist damit die Potentialdifferenz zwischen $U_{GS+}$ und $U_{GS-}$. Somit kann eine Ausgangsgleichspannung mit der erfindungsgemäßen Lösung aus einer Wechselspannungsquelle erzeugt werden.

Die Schaltung 1500 kann auch so verstanden werden, dass der Gleichspannungs-Gleichspannungs-Wandler 1530 eine Spannung $U_{GS}$ zwischen dem ersten Eingangsspannungsanschluss 1540 und dem zweiten Eingangsspannungsanschluss 1550 erzeugt bzw. ausregelt. Indem ein erster Anschluss der Wechselspannungsquelle 1515 mit dem ersten Wechselspannungsanschluss 1510 verbunden wird, und indem ein zweiter Anschluss der Wechselspannungsquelle 1515 mit dem zweiten Wechselspannungsanschluss 1520 verbunden wird, kann (beispielsweise durch geeignete Dimensionierung) erreicht werden, dass in einem stationären Betrieb der Schaltung 1500a das Potential an dem ersten Wechselspannungsanschluss stets positiv (in anderen Ausführungsformen stets negativ) gegenüber dem Potential an dem zweiten Ausgangsgleichspannungsanschluss ist, also das "Bezugspotential" des Gleichspannungs-Gleichspannungs-Wandlers nicht kreuzt". Damit wird die Eingangsspannung des Gleichspannungs-Gleichspannungs-Wandlers, bezogen auf das Bezugspotential des Gleichspannungs-Gleichspannungs-Wandlers (also bezogen auf das Potential der Potentialschiene, die sowohl mit der Eingangsschaltung des Gelichspannungs-Gleichspannungs-Wandlers als auch mit der Ausgangsschaltung des Gleichspannungs-Gleichspannungs-Wandlers niederohmig gekoppelt ist), zu keinem Zeitpunkt zu Null. Somit kann der Gleichspannungs-Gleichspannungs-Wandler im eingeschwungenen Betrieb (beispielsweise nach einer Anlaufphase) zu jedem Zeitpunkt (beispielsweise während einer gesamten Periode der Wechselspannung) eine Eingangsspannung erhalten, die von Null verschieden ist. Somit kann der Gleichspannungs-Gleichspannungs-Wandler zu jeder Zeit (beispielsweise während einer gesamten Periode der Wechselspannung) eine Leistungsübertragung erzielen.

Fig. 16a und Fig. 16b zeigen zwei weitere Vergleichsbeispiele , ebenfalls zur Erzeugung einer Gleichspannung $U_{GS}$ aus einer Wechselspannungsquelle 1615 a, 1615b. In den Vergleichsbeispielen der Fig. 16a und Fig. 16b ist die Lösung mit einer "Tief- und Hochsetzsteller-Schaltung" ausgeführt. Die Schaltung zur Erzeugung einer Gleichspannung 1600a aus einer Wechselspannungsquelle 1615a weist einen ersten Wechselspannungsanschluss 1610a und einen zweiten Wechselspannungsanschluss 1620a auf. An diesen Wechselspannungskontakten 1610a, 1620a ist die Wechselspannungsquelle 1615a angeklemmt, bzw. es kann über die Wechselspannungsanschlüsse 1610a, 1620a die Schaltung zu Erzeugung einer Gleichspannung 1600a mit einer Wechselspannung ($u_{WS}$) versorgt werden. Analog zu den vorherigen Vergleichsbeispielen, beispielweise analog gemäß Fig. 4 oder entsprechend gemäß Fig. 15a, ist ein Anschluss der Wechselspannungsquelle 1615a an den ersten Wechselspannungsanschluss 1610a gekoppelt. Ein weiterer Anschluss der Wechselspannungsquelle 1615a ist an den zweiten Wechselspannungsanschluss 1620a gekoppelt. Dieser zweite Wechselspannungsanschluss 1620a ist wiederum mit dem ersten (Ausgangs-)Gleichspannungsanschluss 1640a gekoppelt. Dies kann z. B. statisch, direkt, niederohmig geschehen. Von Bedeutung ist, dass die Kopplung so ausgeführt ist, dass das Potential des gekoppelten Anschlusses der Wechselspannungsquelle 1615a näherungsweise dem Potential des ersten (Ausgangs-)Gleichspannungsanschlusses 1640a entspricht. Weiterhin weist die Schaltung zur Erzeugung einer Gleichspannung 1600a einen GS-GS-Wandler 1630a auf, der in dem dargestellten Vergleichsbeispiel einer "Tief- und Hochsetzsteller-Schaltung" entspricht. Dieser erste Ausgangs-Gleichspannungsanschluss ist von dem durchgehenden Bezugspotential bzw. Bezugspotentialknoten des Gleichspannungs-Gleichspannungs-Wandlers getrennt bzw. mit dem durchgehenden Bezugspotential des Gleichspannungs-Gleichspannungs-Wandlers über einen oder mehrere Schalter, aber nicht unmittelbar verbunden. Ein Bezugspotentialknoten des GS-GS-Wandlers 1630a kann vielmehr dem zweiten (Ausgangs-)Gleichspannungsanschluss 1650a entsprechen. Dieser kann beispielsweise ein festes, zeitunveränderliches Potential aufweisen, das in der Darstellung mit $U_{GS-}$ bezeichnet ist. Mit dem Potential des ersten (Ausgangs-)Gleichspannungsanschlusses 1640a $U_{GS+}$ wird damit eine Gleichspannung $U_{GS}$ zur Verfügung gestellt. Diese Gleichspannung $U_{GS}$ entspricht damit einer Potentialdifferenz zwischen den beiden (Ausgangs-)Gleichspannungsanschlüssen 1640a, 1650a. Auch in diesen Vergleichsbeispielen kann der GS/GS-Wandler 1630a so ausgelegt sein, dass der GS/GS-Wandler 1630a keine galvanische Trennung aufweist, bzw. dass zumindest der leistungsübertragende Teil keine galvanische Trennung aufweist (Eingangsschaltung und Ausgangsschaltung sind beide mit dem Bezugspotentialknoten niederohmig verbunden).

Zwischen den beiden Vergleichsbeispielen der Schaltung zur Erzeugung einer Gleichspannung 1600a und 1600b ist der Unterschied zu sehen, dass die Schaltung 1600a einen ersten Eingangswechselspannungsanschluss 1610a und einen "expliziten" zweiten Eingangswechselspannungsanschluss 1620a aufweist, der wiederum z. B. mit einer Leitung mit dem ersten Ausgangsgleichspannungsanschluss 1640a verbunden sein kann. Bei der Schaltung 1600b ist die Wechselspannungsquelle 1615b zwischen zwei Knoten (bzw. einen Knoten und einen Anschluss) geschaltet. Auf der einen Seite an einen ersten Eingangswechselspannungsknoten 1610b und auf der anderen Seite an den Knoten des ersten Ausgangsgleichspannungsanschlusses (bzw. an den Ausgangsgleichspannungsanschluss 1540b). Die beiden unterschiedlichen Vergleichsbeispiele basieren auf der Idee der erfindungsgemäßen Lösung. Auch in den Vergleichsbeispielen 1600a und 1600b kann gesehen werden, dass es möglich ist, eine Leistungsflussrichtung (bzw. Energieflussrichtung) unter Verwendung der erfindungsgemäßen Lösung zu erzielen. Beispielsweise in den Vergleichsbeispielen 1600a, 1600b ist die Leistungsflussrichtung von einer Wechselspannungsquelle 1615a, 1615b zu einem (möglichen) Gleichspannungsverbraucher gewählt, demgegenüber ist in dem entsprechenden Vergleichsbeispiel 400 eine Leistungsflussrichtung von einer Gleichspannungsquelle zur einer (möglichen) Wechselspannungslast gewählt. Die erfindungsgemäße Lösung lässt somit beide Funktionalitäten zu. Diese Leistungsflussrichtung ist durch jeweils einen Pfeil, der mit WS-GS beschriftet ist, angedeutet.

Somit kann verallgemeinert gesagt werden, dass das Vergleichsbeispiel eine Vorrichtung zur Erzeugung einer Gleichspannung 1500, 1600a aus einer Eingangswechselspannung ist. Die Gleichspannung liegt zwischen einem ersten Ausgangsgleichspannungsanschluss 1540, 1640a und einem zweiten Ausgangsgleichspannungsanschluss 1550, 1650a an. Die Vorrichtung weist dabei einen Gleichspannungs-Gleichspannungs-Wandler 1530, 1630a auf, der ausgelegt ist, um basierend auf einem ersten Potential der Eingangswechselspannung und auf einem Potential des zweiten Ausgangsgleichspannungsanschlusses 1550, 1650a (bzw. basierend auf der zeitveränderlichen Potentialdifferenz) die Gleichspannung zu erzeugen.

Das erste Potential der Eingangswechselspannung liegt an einem ersten Eingangswechselspannungsanschluss 1510, 1610a an, und das zweite Potential der Eingangswechselspannung liegt an einem zweiten Eingangswechselspannungsanschluss 1520, 1620a an. Der Gleichspannungs-Gleichspannung-Wandler 1530, 1630a ist weiterhin ausgelegt, um die Gleichspannung so zu erzeugen, dass der erste Ausgangsgleichspannungsanschluss 1540, 1640a bezogen auf den zweiten Ausgangsgleichspannungsanschluss 1550, 1650a ein Potential aufweist, das näherungsweise konstant ist. Dabei ist der zweite Eingangswechselspannungsanschluss 1520, 1620a mit dem ersten Ausgangsgleichspannungsanschluss 1540, 1640a gekoppelt.

Das Vergleichsbeispiel der Schaltungsanordnung zur Erzeugung einer Ausgangsgleichspannung 1600b aus einer Wechselspannungsquelle 1615b weist einen ersten Ausgangsgleichspannungsanschluss 1640b und einen zweiten Ausgangsgleichspannungsanschluss 1650b auf, zwischen denen die Ausgangsgleichspannung anliegt. Weiterhin weist die Schaltungsanordnung zur Erzeugung einer Ausgangsgleichspannung einen Gleichspannungs-Gleichspannungs-Wandler 1630b auf. Der Gleichspannungs-Gleichspannungs-Wandler 1630b ist ausgelegt, um basierend auf einem ersten Potential der Wechselspannungsquelle 1615b und einem Potential des zweiten Ausgangsgleichspannungsanschlusses 1650b die Ausgangsgleichspannung zu erzeugen.

Weiterhin ist der Gleichspannungs-Gleichspannungs-Wandler 1630b ausgelegt, um die Ausgangsgleichspannung so zu erzeugen, dass der erste Ausgangsgleichspannungsanschluss 1640b bezogen auf den zweiten Ausgangsgleichspannungsanschluss 1650b ein Potential aufweist, das näherungsweise konstant ist. Weiterhin liegt das erste Potential der Wechselspannungsquelle 1615b an einem Eingangswechselspannungsknoten 1610b an und ein zweites Potential der Wechselspannungsquelle 1615b liegt an dem ersten Ausgangsgleichspannungsanschluss 1640b an, sodass die Potentialdifferenz zwischen dem ersten Ausgangsgleichspannungsanschluss 1640b und dem Eingangswechselspannungsknoten 1610b einer von der Wechselspannungsquelle 1615b abgegebenen Spannung entspricht.

Mit einem annäherungsweise konstanten Potential (bzw. konstanter Spannung bzw. konstanter Potentialdifferenz) kann beispielsweise eine größte Abweichung von 5% von dem Mittelwert des Potentials (bzw. der Spannung bzw. der Potentialdifferenz) gemeint sein.

Vergleichsbeispiele und Ausführungsbeispiel Dreiphasen-Gleichrichterschaltungen

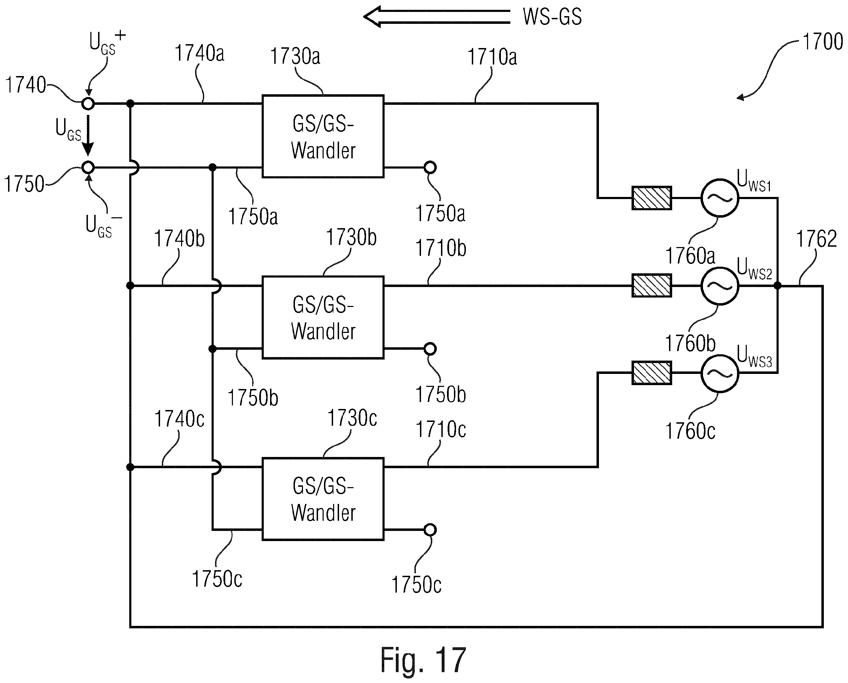

Fig. 17, Fig. 18 und Fig. 19 zeigen Vergleichsbeispiele und ein Ausführungsbeispiel der erfindungsgemäßen Lösung zur Erzeugung einer Gleichspannung aus einer dreiphasigen Wechselspannung (zum Beispiel einem dreiphasigen Wechselspannungssystem, oder auch einem symmetrischen, dreiphasigen Wechselspannungssystem). Dabei kann die Schaltung zur Erzeugung einer Gleichspannung 1700 aus einer dreiphasigen Wechselspannung wie in Fig. 17 dargestellt ausgeführt werden. Die Schaltung zur Erzeugung einer Gleichspannung 1700 kann dabei als in drei Phasen bzw. Schaltungspfade aufgeteilt angesehen werden, bzw. es kann die Schaltung zur Erzeugung einer Gleichspannung 1700 aus drei Einphasen-Gleichrichtern, wie z. B. in Fig. 15 oder Fig. 16 dargestellt, zusammengesetzt werden.

Die drei Phasen a, b und c sind dabei vergleichbar zueinander aufgebaut. Die (dreiphasige) Wechselspannungsquelle 1760a, 1760b, 1760c ist an ihren drei Phasen an die entsprechenden (Eingangs-)Wechselspannungsanschlüsse 1710a, 1710b, 1710c der GS/GS-Wandler 1730a, 1730b, 1730c angeschlossen. In dem dargestellten Vergleichsbeispiel sind die drei Phasen der dreiphasigen Wechselspannungsquelle an ihrer anderen Anschlussseite in einem Sternpunkt 1762 zusammengeführt. Der Sternpunkt 1762 ist mit einem ersten (Ausgangs-)Gleichspannungsanschluss 1740 gekoppelt. Hier kann es zum Beispiel bei einem symmetrischen Wechselspannungssystem (d.h. der dreiphasigen Wechselspanungsquelle 1760a, 1760b, 1760c) möglich sein, diese Kopplung mit Hilfe der anderen Phasen bzw. mit Hilfe der anderen GS/GS-Wandler 1730a, 1730b, 1730c zu erzielen. Es kann dabei eine Steuerung und/oder Regelung so ausgelegt sein, dass das Potential des Sternpunkts 1762 näherungsweise dem Potential des ersten Ausgangsgleichspannungsanschlusses 1740 entspricht. Zwischen dem ersten (Ausgangs-)Gleichspannungsanschluss 1740 und einem zweiten (Ausgangs-)Gleichspannungsanschluss 1750 (der den Bezugspotentialknoten 1750a, 1750b, 1750c der GS/GS-Wandler 1730a, 1730b, 1730c entsprechen kann bzw. zu dem die Bezugspotentialknoten 1750a, 1750b, 1750c zusammengefasst werden können) wird die Ausgangsgleichspannung $U_{GS}$ zur Verfügung gestellt.

Durch den Pfeil, der mit WS/GS beschriftet ist, ist eine Energieflussrichtung angedeutet. Diese Energieflussrichtung ist nicht alleine durch die Schaltung vorgegeben, sondern kann Folge der (dreiphasigen) Wechselspannungsquelle 1760a, 1760b, 1760c sein. Wird die Wechselspannungsquelle 1760a, 1760b, 1760c durch eine (dreiphasige) Last ersetzt und wird den (Ausgangs-)Gleichspannungsanschlüssen 1740, 1750 eine Gleichspannung beaufschlagt (z. B. durch eine Gleichspannungsquelle), kann die Schaltung auch als (dreiphasiger) Wechselrichter verwendet werden.

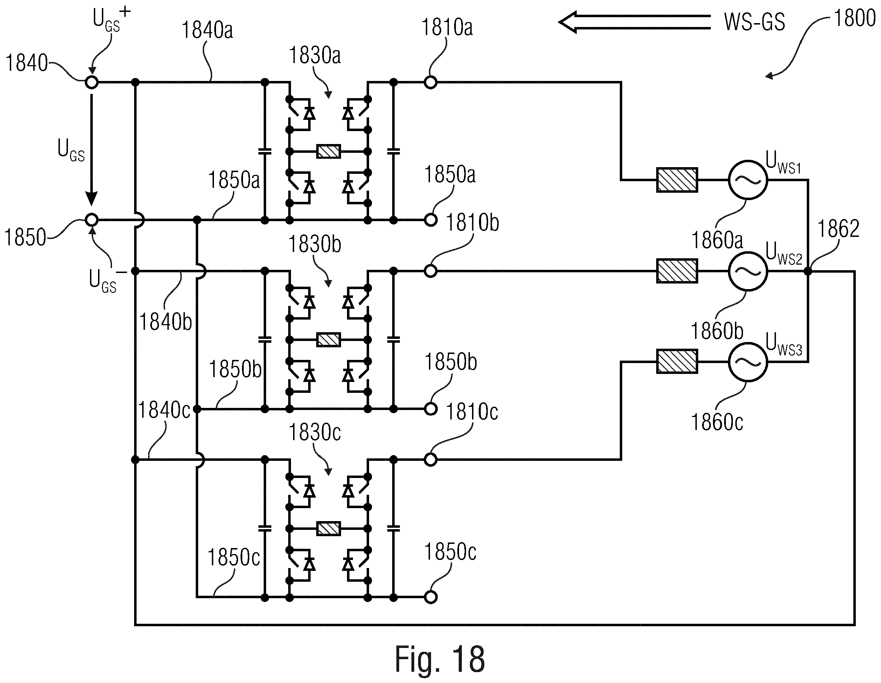

In Fig. 18 ist ein Dreiphasen-Gleichrichter 1800 dargestellt, der z. B. auf dem Konzept des Dreiphasen-Gleichrichters 1700 basieren kann. Die GS-GS-Wandler 1830a, 1830b, 1830c sind dabei als "Tief- und Hochsetzsteller-Schaltungen" aufgebaut. Viele Elemente des Gleichrichters 1700 können in dem Gleichrichter 1800 wiedergefunden werden. Auch hierbei stellt eine dreiphasige Wechselspannungsquelle 1860a, 1860b, 1860c ein dreiphasiges (symmetrisches) Wechselspannungssystem (z. B. mit einem Phasenversatz zwischen den einzelnen Phasen von 120°) zur Verfügung. Die jeweilige erste Anschlussseite der drei Phasen der dreiphasigen Wechselspannungsquelle 1860a, 1860b, 1860c ist mit einem jeweiligen ersten (Eingangs-)Wechselspannungsanschluss 1810a, 1810b, 1810c der GS/GS-Wandler 1830a, 1830b, 1830c gekoppelt. Die zweiten Anschlussseiten der drei Phasen der dreiphasigen Wechselspannungsquelle 1860a, 1860b, 1860c sind zu einem Sternpunkt 1862 verschaltet. Der Sternpunkt 1862 ist mit einem ersten Ausgangsgleichspannungsanschluss 1840, bzw. mit einem jeweiligen ersten (Ausgangs-)Gleichspannungsanschluss 1840a, 1840b, 1840c der GS/GS-Wandler 1830a, 1830b, 1830c gekoppelt. Weiterhin sind die Bezugspotentialknoten 1850a, 1850b, 1850c der GS/GS-Wandler 1830a, 1830b, 1830c ebenfalls miteinander gekoppelt bzw. verbunden und bilden einen gemeinsamen Bezugspotentialknoten 1850, der beispielsweise auch der zweiten (Ausgangs-)Gleichspannungsanschluss 1850 sein kann. In dem dargestellten Vergleichsbeispiel kann bei einem symmetrischen Wechselspannungssystem der dreiphasigen Wechselspannungsquelle 1860a, 1860b, 1860c eine Verbindung des Sternpunktes 1862 mit dem ersten (Ausgangs-)Wechselspannungsanschluss 1840 weggelassen werden. Die Kopplung des Sternpunktes 1862 (bzw. der dreiphasigen Wechselspannungsquellen 1860a 1860b, 1860c) mit dem ersten (Ausgangs-)Gleichspannungsanschluss 1840 kann dabei über eine der Phasen verwirklich sein. Gleichwohl kann es vorteilhaft sein, dass das Potential des Sternpunktes 1862 näherungsweise dem Potential des ersten Ausgangsgleichspannungsanschlusses 1840 entspricht.

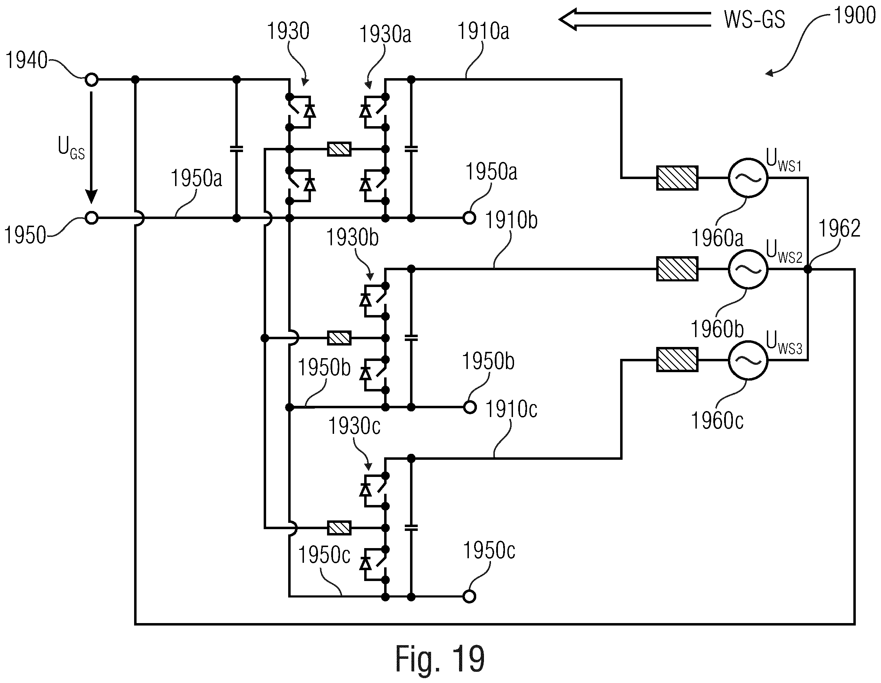

In Fig. 19 ist ein Dreiphasen-Gleichrichter 1900 dargestellt. Dieser Dreiphasen-Gleichrichter 1900 weist eine Reihe von Gemeinsamkeiten mit dem Dreiphasen-Gleichrichter 1700 und dem Dreiphasen-Gleichrichter 1800 auf. Alle drei Gleichrichter werden von einer dreiphasige Wechselspannungsquelle (in Fig. 19: die dreiphasige Wechselspannungsquelle 1960a, 1960b, 1960c) versorgt. Weiterhin finden sich die Entsprechungen der ersten (Eingangs-)Wechselspannungsanschlüsse 1910a, 1910b, 1910c, des Sternpunktes 1962, des ersten (Ausgangs-)Gleichspannungsanschlusses 1940 und des zweiten (Ausgangs)Gleichspannungsanschlusses 1950. Auch hier kann der zweite Ausgangsgleichspannungsanschluss 1950 einem Bezugspotentialknoten einer (oder mehrerer) GS-GS-Wandler 1930, 1930a, 1930b, 1930c entsprechen.

Als Unterschied zu Fig.18 und dem Vergleichsbeispiel des Gleichrichters 1800 können in dem Dreiphasen-Gleichrichter 1900 die GS/GS-Wandler 1930, 1930a, 1930b, 1930c der GS-GS-Wandler hierin nicht "konkret" als "klassische" "Tief- und Hochsetzsteller-Schaltung" identifiziert werden. Gleichwohl sollen die GS-GS-Wandler 1930, 1930a, 1930b, 1930c (oder Kombinationen der GS/GS-Wandler) eine Aufwärts- und Abwärtswandlung beherrschen können, um eine gewünschte Gleichspannung beispielsweise in Höhe eines Mittelwerts der Wechselspannung an den (Ausgangs-)Gleichspannungsanschlüssen 1940, 1950 zur Verfügung zu stellen.

Wichtig ist in diesem Ausführungsbeispiel wiederum die Kopplung der dreiphasigen Wechselspannungsquelle 1960a, 1960b, 1960c mit dem ersten (Ausgangs-)Gleichspannungsanschluss 1940 (der nicht unmittelbar mit dem Bezugspotentialknoten der GS/GS-Wandler gekoppelt ist). Diese Kopplung kann entweder über eine Leitung (direkt, statisch, niederimpedant usw.) verwirklicht sein, aber auch eine Kopplung, die über eine der Phasen verwirklicht ist, ist hierbei denkbar. Die Gleichrichterschaltung 1900 kann, wie auch die anderen vorgenannten Beispiele, eine Leistungsflussrichtung von einer Wechselspannungsquelle zu einer Gleichspannungslast, aber auch von einer Gleichspannungsquelle zu einer Wechselspanungslast ermöglichen. Bei einer (dreiphasigen) Wechselspannungsquelle 1960a, 1960b, 1960c ist die Leistungsflussrichtung sinnvollerweise von der Quelle zu einer (möglichen) Last vorgegeben. Die Last kann an den Ausgangsgleichspannungsanschlüssen 1940, 1950 angeschlossen sein und somit von einer (dreiphasigen) Wechselspannungsquelle 1960a, 1960b, 1960c versorgt werden.

Zusammenfassend lässt sich somit sagen, dass mit der erfindungsgemäßen Lösung eine Dreiphasen-Gleichrichtervorrichtung zur Erzeugung einer Gleichspannung 1700, 1800, 1900, die zwischen einem ersten Ausgangsgleichspannungsanschluss 1740, 1740a, 1740b, 1740c, 1840, 1840a, 1840b, 1840c, 1940, 1940a, 1940b, 1940c und einem zweiten Ausgangsgleichspannungsanschluss 1750, 1750a, 1750b, 1750c, 1850, 1850a, 1850b, 1850c, 1950, 1950a, 1950b, 1950c anliegt, geschaffen werden kann. Dabei weist die Dreiphasen-Gleichrichtervorrichtung 1700, 1800, 1900 mehrere Gleichspannungs-Gleichspannungs-Wandler 1730a, 1730b, 1730c, 1830a, 1830b, 1830c, 1930, 1930a, 1930b, 1930c auf, die ausgelegt sind, um basierend auf einem ersten Potential einer jeweiligen Phase einer dreiphasigen Wechselspannung und einem Potential des zweiten Ausgangsgleichspannungsanschlusses 1750, 1750a, 1750b, 1750c, 1850, 1850a, 1850b, 1850c, 1950, 1950a, 1950b, 1950c eine jeweilige Ausgangsspannung zu erzeugen.

Dabei liegt das erste Potential der jeweiligen Phase der dreiphasigen Wechselspannung an einem jeweiligen Eingangswechselspannungsanschluss 1710a, 1710b, 1710c, 1810a, 1810b, 1810c, 1910a, 1910b, 1910c und ein zweites Potential der jeweilige Phase der dreiphasigen Wechselspannung an einem Sternpunkt 1762, 1862, 1962 an. Die Gleichspannungs-Gleichspannungs-Wandler 1730a, 1730b, 1730c, 1830a, 1830b, 1830c, 1930, 1930a, 1930b, 1930c sind ausgelegt, um die jeweilige Ausgangsspannung so zu erzeugen, dass der erste Ausgangsgleichspannungsanschluss 1740, 1740a, 1740b, 1740c, 1840, 1840a, 1840b, 1840c, 1940, 1940a, 1940b, 1940c in Bezug auf den zweiten Ausgangsgleichspannungsanschluss 1750, 1750a, 1750b, 1750c, 1850, 1850a, 1850b, 1850c, 1950, 1950a, 1950b, 1950c ein Potential aufweist, das (zumindest in einem eingeschwungenen Betrieb) näherungsweise konstant ist.

Weiterhin ist der Sternpunkt 1762, 1862, 1962 mit dem ersten Ausgangsgleichspannungsanschluss 1740, 1740a, 1740b, 1740c, 1840, 1840a, 1840b, 1840c, 1940, 1940a, 1940b, 1940c gekoppelt. Mit diesem Ausführungsbeispiel ist eine weitere, mögliche Ausgestaltung der erfindungsgemäßen Lösung gezeigt, eine andere Ausgestaltung wird im Folgenden erklärt.

Hierin wird auf Grundlage der erfindungsgemäßen Lösung eine Dreiphasen-Gleichrichterschaltung zur Erzeugung einer Ausgangsgleichspannung 1700, 1800, 1900, die zwischen einem ersten Ausgangsgleichspannungsanschluss 1740, 1740a, 1740b, 1740c, 1840, 1840a, 1840b, 1840c, 1940, 1940a, 1940b, 1940c und einem zweiten Ausgangsgleichspannungsanschluss 1750, 1750a, 1750b, 1750c, 1850, 1850a, 1850b, 1850c, 1950, 1950a, 1950b, 1950c anliegt, aus einer dreiphasigen Wechselspannungsquelle 1760a, 1760b, 1760c, 1860a, 1860b, 1860c, 1960a, 1960b, 1960c zur Verfügung gestellt.

Die Dreiphasen-Gleichrichterschaltung 1700, 1800, 1900 weist dabei mehrere Gleichspannungs-Gleichspannungs-Wandler 1730a, 1730b, 1730c, 1830a, 1830b, 1830c, 1930, 1930a, 1930b, 1930s auf, die ausgelegt sind, um basierend auf einem ersten Potential einer jeweiligen Phase der dreiphasigen Wechselspannungsquelle 1760a, 1760b, 1760c, 1860a, 1860b, 1860c, 1960a, 1960b, 1960c und einem Potential des jeweiligen zweiten Ausgangsgleichspannungsanschlusses 1750, 1750a, 1750b, 1750c, 1850, 1850a, 1850b, 1850c, 1950, 1950a, 1950b, 1950c eine jeweilige Ausgangsspannung zu erzeugen.

Die Gleichspannungs-Gleichspannungs-Wandler 1730a, 1730b, 1730c, 1830a, 1830b, 1830c, 1930, 1930a, 1930b, 1930c sind ausgelegt, um die jeweilige Ausgangsspannung so zu erzeugen, dass der jeweilige erste Ausgangsgleichspannungsanschluss 1740, 1740a, 1740b, 1740c, 1840, 1840a, 1840b, 1840c, 1940, 1940a, 1940b, 1940c in Bezug auf den jeweiligen zweiten Ausgangsgleichspannungsanschluss 1750, 1750a, 1750b, 1750c, 1850, 1850a, 1850b, 1850c, 1950, 1950a, 1950b, 1950c ein Potential aufweist, das (zumindest in einem eingeschwungenen Betrieb, also nach Ende einer Anlaufphase) näherungsweise konstant ist.

Dabei sind die dreiphasigen Wechselspannungsquellen 1760a, 1760b, 1760c, 1860a, 1860b, 1860c, 1960a, 1960b, 1960c an den ersten Ausgangsgleichspannungsanschluss 1740, 1740a, 1740b, 1740c, 1840, 1840a, 1840b, 1840c, 1940, 1940a, 1940b, 1940c angekoppelt, sodass die Potentialdifferenz zwischen einem jeweiligen Eingangswechselspannungsknoten 1710a, 1710b, 1710c, 1810a, 1810b, 1810c, 1910a, 1910b, 1910c und dem jeweiligen ersten Ausgangsgleichspannungsanschluss 1740, 1740a, 1740b, 1740c, 1840, 1840a, 1840b, 1840c, 1940, 1940a, 1940b, 1940c einer von der jeweiligen Phase der dreiphasigen Wechselspannungsquelle 1760a, 1760b, 1760c, 1860a, 1860b, 1860c, 1960a, 1960b, 1960c abgegebenen Spannung entspricht.

Mit einem annäherungsweise konstanten Potential (bzw. konstanter Spannung bzw. konstanter Potentialdifferenz) kann beispielsweise eine größte Abweichung von 5% von dem Mittelwert des Potentials (bzw. der Spannung bzw. der Potentialdifferenz) gemeint sein.

## Patentansprüche

1. Dreiphasige Wechselrichtervorrichtung (1400) zur Erzeugung eines dreiphasigen Wechselspannungssystems, das zwischen mehreren ersten Ausgangsspannungsanschlüssen (1410a; 1410b; 1410c) und einem Sternpunkt (1462) anliegt, mit folgenden Merkmalen:

   drei Gleichspannungs-Gleichspannungs-Wandlern (1430; 1430a; 1430b; 1430c), die ausgelegt sind, um basierend auf einer Eingangsspannung eine jeweilige Ausgangsspannung zu erzeugen; und
   wobei die Eingangsspannung zwischen einer Eingangsspannungszuführung (1440) und einem Bezugspotentialknoten (1450; 1450a; 1450b; 1450c) anliegt; und
   wobei die Gleichspannungs-Gleichspannungs-Wandler (1430; 1430a; 1430b; 1430c) ausgelegt sind, um die jeweilige Ausgangsspannung so zu erzeugen, dass der jeweilige erste Ausgangsspannungsanschluss (1410a; 1410b; 1410c) zeitweise ein Potential aufweist, das positiver ist als das an der Eingangsspannungszuführung (1440) anliegende Potential, und so zu erzeugen, dass der jeweilige erste Ausgangsspannungsanschluss (1410a; 1410b; 1410c) zeitweise ein Potential aufweist, das negativer ist als das an der Eingangsspannungszuführung (1440) anliegende Potential; und
wobei der Sternpunkt (1462) mit der Eingangsspannungszuführung (1440) gekoppelt ist;
wobei der erste Gleichspannungs-Gleichspannungs-Wandler eine Tief- und Hochsetzsteller-Schaltung aufweist;
wobei die Tief- und Hochsetzsteller-Schaltung eine erste Halbbrückenschaltung (1430) aufweist, die zwischen die Eingangsspannungszuführung (1440) und den Bezugspotentialknoten (1450) geschaltet ist, und die zwei in Serie geschaltete aktiv zu schaltende Leistungsschalter aufweist, wobei jeder der Schalter der ersten Halbbrückenschaltung jeweils eine antiparallele Freilaufdiode aufweist,
wobei ein Mittelpunkt der ersten Halbbrückenschaltung (1430) über eine erste Induktivität (1433a) mit einem Mittelpunkt einer zweiten Halbbrückenschaltung (1430a) verbunden ist,
wobei die zweite Halbbrückenschaltung (1430a) zwei aktiv zu schaltende Leistungsschalter aufweist,
wobei die Leistungsschalter der zweiten Halbbrückenschaltung (1430a) jeweils eine antiparallele Freilaufdiode aufweisen,
wobei ein negativer Anschluss der zweiten Halbbrückenschaltung (1430a) mit dem Bezugspotentialknoten (1450) verbunden ist, und
wobei ein positiver Anschluss der zweiten Halbbrückenschaltung (1430a) mit dem ersten Ausgangsspannungsanschluss (1410a) des ersten Gleichspannungs-Gleichspannungs-Wandlers (1430, 1430a) verbunden ist;
wobei der zweite Gleichspannungs-Gleichspannungs-Wandler (1430,1430b) eine dritte Halbbrückenschaltung (1430b) aufweist,
wobei ein Mittelpunkt der dritten Halbbrückenschaltung (1430b) über eine zweite Induktivität (1433b) mit dem Mittelpunkt der ersten Halbbrückenschaltung (1430) verbunden ist,
wobei ein negativer Anschluss der dritten Halbbrückenschaltung (1430b) mit dem Bezugspotentialknoten (1450) verbunden ist,
wobei ein positiver Anschluss der dritten Halbbrückenschaltung mit dem ersten Ausgangsspannungsanschluss (1410b) des zweiten Gleichspannungs-Gleichspannungs-Wandlers (1430,1430b) verbunden ist;

wobei der dritte Gleichspannungs-Gleichspannungs-Wandler (1430,1430c) eine vierte Halbbrückenschaltung (1430c) aufweist,

wobei ein Mittelpunkt der vierten Halbbrückenschaltung (1430c) über eine Induktivität (1433c) mit dem Mittelpunkt der ersten Halbbrückenschaltung (1430) verbunden ist,

wobei ein negativer Anschluss der vierten Halbbrückenschaltung (1430c) mit dem Bezugspotentialknoten (1450) verbunden ist,

wobei ein positiver Anschluss der vierten Halbbrückenschaltung (1430c) mit dem ersten Ausgangsspannungsanschluss des dritten Gleichspannungs-Gleichspannungs-Wandlers (1430, 1430c) verbunden ist.

wobei die dreiphasige Wechselrichtervorrichtung ausgelegt ist, um an den Ausgangsspannungsanschlüssen ein dreiphasiges Wechselspannungssystem zur Verfügung zu stellen.

2. Dreiphasige Wechselrichtervorrichtung ( 1400) gemäß Anspruch 1,
wobei eine Taktfrequenz des eingangsseitigen Schaltungsteils (1430) höher gewählt ist als eine Taktfrequenz der drei ausgangsseitigen Schaltungsteile (1430a, 1430b, 1430c).

3. Dreiphasige Wechselrichtervorrichtung ( 1400) gemäß einem der Ansprüche 1 bis 2,
wobei die dreiphasige Wechselrichtervorrichtung ausgelegt ist, um an den Ausgangsspannungsanschlüssen ein symmetrisches, dreiphasiges Wechselspannungssystem mit einem Phasenversatz von 120 Grad zur Verfügung zu stellen.

4. Dreiphasige Wechselrichtervorrichtung ( 1400) gemäß einem der Ansprüche 1 bis 3,
wobei die dreiphasige Wechselrichtervorrichtung ausgelegt ist, um an den Ausgangsspannungsanschlüssen eine sinusförmige Wechselspannung zur Verfügung zu stellen.

5. Dreiphasige Wechselrichtervorrichtung ( 1400) gemäß einem der Ansprüche 1 bis 4,

wobei die Gleichspannungs-Gleichspannungs-Wandler ( 1430; 1430a; 1430b; 1430c) ausgelegt sind, um die jeweilige Ausgangsspannung so zu erzeugen,

dass sich ein Mittelwert eines jeweiligen Potentialverlaufs an einem jeweiligen Ausgangsspannungsanschluss von einem Potential an der Eingangsspannungszuführung um höchstens 10% der Eingangsspannung unterscheidet,

und so zu erzeugen, dass eine Amplitude eines Potentialverlaufs an einem jeweiligen Ausgangsspannungsanschluss zumindest 30% eines Wertes der Eingangsspannung ist,

und so zu erzeugen, dass ein jeweiliger Ausgangsspannungsanschluss in Bezug auf die Eingangsspannungszuführung einen zeitveränderlichen, sich periodisch wiederholenden, mittelwertfreien Potentialverlauf aufweist,

und so zu erzeugen, dass ein Phasenversatz zwischen den jeweiligen Ausgangsspannungen besteht

6. Dreiphasen-Gleichrichterschaltung (1900) zur Erzeugung einer Ausgangsgleichspannung ($U_{GS}$), die zwischen einem ersten Ausgangsgleichspannungsanschluss (1940) und einem zweiten Ausgangsgleichspannungsanschluss (1950) anliegt, aus einer dreiphasigen Wechselspannungsquelle (1960a; 1960b; 1960c), mit folgenden Merkmalen:

drei Gleichspannungs-Gleichspannungs-Wandlern (1930; 1930a; 1930b; 1930c), die ausgelegt sind, um basierend auf einer Potentialdifferenz zwischen einem ersten Potential einer jeweiligen Phase der dreiphasigen Wechselspannungsquelle (1960a; 1960b; 1960c) und einem Potential des zweiten Ausgangsgleichspannungsanschlusses (1950) eine Ausgangsspannung ($U_{GS}$) zu erzeugen; und

wobei die Gleichspannungs-Gleichspannungs-Wandler (1930; 1930a; 1930b; 1930c) ausgelegt sind, um die Ausgangsspannung so zu erzeugen, dass der erste Ausgangsgleichspannungsanschluss (1940) in Bezug auf den zweiten Ausgangsgleichspannungsanschluss (1950) ein Potential aufweist, das näherungsweise konstant ist; und

wobei die dreiphasige Wechselspannungsquelle (1960a; 1960b; 1960c) an den ersten Ausgangsgleichspannungsanschluss (1940) angekoppelt ist, sodass die Potentialdifferenz zwischen einem jeweiligen Eingangswechselspannungsknoten (1910a; 1910b; 1910c) und dem ersten Ausgangsgleichspannungsanschluss (1940) einer von der jeweiligen Phase der dreiphasigen Wechselspannungsquelle (1960a; 1960b; 1960c) abgegebenen Spannung entspricht;

wobei der erste Gleichspannungs-Gleichspannungs-Wandler (1930, 1930a) eine Tief- und Hochsetzsteller-Schaltung aufweist;

wobei die Tief- und Hochsetzsteller-Schaltung eine erste Halbbrückenschaltung (1930a) aufweist, die zwischen einen ersten Eingangswechselspannungsknoten (1910a) und den zweiten Ausgangsgleichspannungsanschluss (1950) geschaltet ist, wobei jeder der Schalter der ersten Halbbrückenschaltung (1930a) jeweils eine antiparallele Freilaufdiode aufweist, wobei ein Mittelpunkt der ersten Halbbrückenschaltung (1930a) über eine Induktivität mit ei-

nem Mittelpunkt einer zweiten Halbbrücken-schaltung (1930) verbunden ist,

wobei die Leistungsschalter der zweiten Halb-brückenschaltung (1930) jeweils eine antiparal-lele Freilaufdiode aufweisen,

wobei ein negativer Anschluss der zweiten Halbbrückenschaltung (1930) mit dem zweiten Ausgangsgleichspannungsanschluss (1950) verbunden ist, und

wobei ein positiver Anschluss der zweiten Halbbrückenschaltung (1930) mit dem ersten Aus-gangsgleichspannungsanschluss (1940) ver-bunden ist;

wobei der zweite Gleichspannungs-Gleichspannungs-Wandler (1930,1930b) eine dritte Halbbrückenschaltung (1930b) aufweist, die zwischen einen zweiten Eingangswechselspannungsknoten (1910b) und den zweiten Aus-gangsgleichspannungsanschluss (1950) ge-schaltet ist, wobei jeder der Schalter der dritten Halbbrückenschaltung (1930b) jeweils eine antiparallele Freilaufdiode aufweist,

wobei ein Mittelpunkt der dritten Halbbrückenschaltung (1930b) über eine zweite Induktivität mit dem Mittelpunkt der zweiten Halbbrückenschaltung (1930) verbunden ist,

wobei ein negativer Anschluss der dritten Halbbrückenschaltung (1930b) mit dem zweiten Ausgangsgleichspannungsanschluss (1950) verbunden ist,

wobei der dritte Gleichspannungs-Gleichspannungs-Wandler (1930,1930c) eine vierte Halb-brückenschaltung (1930c) aufweist, die zwi-schen einen dritten Eingangswechselspan-nungsknoten (1910c) und den zweiten Aus-gangsgleichspannungsanschluss (1950) ge-schaltet ist, wobei jeder der Schalter der vierten Halbbrückenschaltung (1930c) jeweils eine antiparallele Freilaufdiode aufweist;

wobei ein Mittelpunkt der vierten Halbbrückenschaltung (1930c) über eine Induktivität mit dem Mittelpunkt der zweiten Halbbrückenschaltung (1930) verbunden ist,

wobei ein negativer Anschluss der vierten Halbbrückenschaltung (1930c) mit dem zweiten Aus-gangsgleichspannungsanschluss (1950) ver-bunden ist.

## Claims

1. Three-phase inverter device (1400) for generating a three-phase AC voltage system applied between several first output voltage terminals (1410a; 1410b; 1410c) and a neutral point (1462), comprising:

   three DC-DC voltage converters (1430; 1430a; 1430b; 1430c) configured to generate a respective output voltage on the basis of an input voltage; and

wherein the input voltage is applied between an input voltage feed (1440) and a reference potential node (1450; 1450a; 1450b; 1450c); and

wherein the DC-DC voltage converters (1430; 1430a; 1430b; 1430c) are configured to generate the respective output voltage such that the respective first output voltage terminal (1410a; 1410b; 1410c) temporarily comprises a potential that is more positive than the potential applied at the input voltage feed (1440), and to generate the same such that the respective first output voltage terminal (1410a; 1410b; 1410c) temporarily comprises a potential that is more negative than the potential applied at the input voltage feed (1440); and

wherein the neutral point (1462) is coupled to the input voltage feed (1440);

wherein the first DC-DC voltage converter comprises a step-down and step-up converter circuit;

wherein the step-down and step-up converter circuit comprises a first half bridge circuit (1430) connected between the input voltage feed (1440) and the reference potential node (1450), and comprising two serially-connected power switches to be actively switched, wherein each of the switches of the first half bridge circuit comprises an anti-parallel free-wheeling diode,

wherein a center point of the first half bridge circuit (1430) is connected to a center point of a second half bridge circuit (1430a) via a first inductor (1433a),

wherein the second half bridge circuit (1430a) comprises two power switches to be actively switched,

wherein the power switches of the second half bridge circuit (1430a) each comprise an anti-parallel free-wheeling diode,

wherein a negative terminal of the second half bridge circuit (1430a) is connected to the reference potential node (1450), and

wherein a positive terminal of the second half bridge circuit (1430a) is connected to the first output voltage terminal (1410a) of the first DC-DC voltage converter (1430, 1430a);

wherein the second DC-DC voltage converter (1430, 1430b) comprises a third half bridge circuit (1430b),

wherein a center point of the third half bridge circuit (1430b) is connected to the center point of the first half bridge circuit (1430) via a second inductor (1433b),

wherein a negative terminal of the third half bridge circuit (1430b) is connected to the reference potential node (1450),

wherein a positive terminal of the third half bridge circuit is connected to the first output voltage terminal (1410b) of the second DC-DC voltage converter (1430, 1430b);
wherein the third DC-DC voltage converter (1430, 1430c) comprises a fourth half bridge circuit (1430c),
wherein a center point of the fourth half bridge circuit (1430c) is connected to the center point of the first half bridge circuit (1430) via an inductor (1433c),
wherein a negative terminal of the fourth half bridge circuit (1430c) is connected to the reference potential node (1450),
wherein a positive terminal of the fourth half bridge circuit (1430c) is connected to the first output voltage terminal of the third DC-DC voltage converter (1430, 1430c),
wherein the three-phase inverter device is configured to provide a three-phase AC voltage system at the output voltage terminals.

2. Three-phase inverter device (1400) according to claim 1,
wherein a clock frequency of the input-side circuit part (1430) is selected to be higher than a clock frequency of the three output-side circuit parts (1430a, 1430b, 1430c).

3. Three-phase inverter device (1400) according to any of claims 1 to 2,
wherein the three-phase inverter device is configured to provide a symmetrical three-phase AC voltage system with a phase offset of 120 degrees at the output voltage terminals.

4. Three-phase inverter device (1400) according to any of claims 1 to 3,
wherein the three-phase inverter device is configured to provide a sinusoidal AC voltage at the output voltage terminals.

5. Three-phase inverter device (1400) according to any of claims 1 to 4,

wherein the DC-DC voltage converters (1430, 1430a, 1430b, 1430c) are configured to generate the respective output voltage such that
a mean value of a respective potential progression at a respective output voltage terminal differs from a potential at the input voltage feed by up to 10% of the input voltage,
and to generate the same such that an amplitude of a potential progression at a respective output voltage terminal is at least 30% of a value of the input voltage,
and to generate the same such that, with respect to the input voltage feed, a respective output voltage terminal comprises a time-variable periodically repeating zero-mean potential progression,
and to generate the same such that there is a phase offset between the respective output voltages.

6. Three-phase inverter circuit (1900) for generating an output DC voltage ($U_{GS}$) applied between a first output DC voltage terminal (1940) and a second output DC voltage terminal (1950) from a three-phase AC voltage source (1960a, 1960b, 1960c), comprising:

three DC-DC voltage converters (1930, 1930a, 1930b, 1930c) configured to generate an output voltage ($U_{GS}$) on the basis of a potential difference between a first potential of a respective phase of the three-phase AC voltage source (1960a, 1960b, 1960c) and a potential of the second output DC voltage terminal (1950); and
wherein the DC-DC voltage converters (1930, 1930a, 1930b, 1930c) are configured to generate the output voltage such that, with respect to the second output DC voltage terminal (1950), the first output DC voltage terminal (1940) comprises a potential that is approximately constant; and
wherein the three-phase AC voltage source (1960a, 1960b, 1960c) is coupled to the first output DC voltage terminal (1940) so that the potential difference between a respective input AC voltage node (1910a, 1910b 1910c) and the first output DC voltage terminal (1940) corresponds to a voltage output by the respective phase of the three-phase AC voltage source (1960a, 1960b, 1960c);
wherein the first DC-DC voltage converter (1930, 1930a) comprises a step-down and step-up converter circuit;
wherein the step-down and step-up converter circuit comprises a first half bridge circuit (1930a) connected between a first input AC voltage node (1910a) and the second output DC voltage terminal (1950), wherein each of the switches of the first half bridge circuit (1930a) comprises an anti-parallel free-wheeling diode each,
wherein a center point of the first half bridge circuit (1930a) is connected to a center point of a second half bridge circuit (1930) via an inductor,
wherein the power switches of the second half bridge circuit (1930) comprise an anti-parallel free-wheeling diode each,
wherein a negative terminal of the second half bridge circuit (1930) is connected to the second output DC voltage terminal (1950), and
wherein a positive terminal of the second half bridge circuit (1930) is connected to the first output DC voltage terminal (1940);

wherein the second DC-DC voltage converter (1930, 1930b) comprises a third half bridge circuit (1930b) connected between a second input AC voltage node (1910b) and the second output DC voltage terminal (1950), wherein each of the switches of the third half bridge circuit (1930b) comprises an anti-parallel free-wheeling diode each,

wherein a center point of the third half bridge circuit (1930b) is connected to the center point of the second half bridge circuit (1930) via a second inductor,

wherein a negative terminal of the third half bridge circuit (1930b) is connected to the second output DC voltage terminal (1950),

wherein the third DC-DC voltage converter (1930, 1930c) comprises a fourth half bridge circuit (1930c) connected between a third input AC voltage node (1910c) and the second output DC voltage terminal (1950), wherein each of the switches of the fourth half bridge circuit (1930c) comprises an anti-parallel free-wheeling diode each;

wherein a center point of the fourth half bridge circuit (1930c) is connected to the center point of the second half bridge circuit (1930) via an inductor,

wherein a negative terminal of the fourth half bridge circuit (1930c) is connected to the second output DC voltage terminal (1950).

## Revendications

1. Dispositif onduleur triphasé (1400) pour générer un système de tension alternative triphasée qui est présent entre plusieurs premières connexions de tension de sortie (1410a; 1410b; 1410c) et un point neutre (1462), aux caractéristiques suivantes:

   trois convertisseurs de tension continue-tension continue (1430; 1430a; 1430b; 1430c) qui sont configurés pour générer, sur base d'une tension d'entrée, une tension de sortie respective; et
   dans lequel la tension d'entrée est présente entre une alimentation en tension d'entrée (1440) et un noeud de potentiel de référence (1450; 1450a; 1450b; 1450c); et
   dans lequel les convertisseurs de tension continue-tension continue (1430; 1430a; 1430b; 1430c) sont conçus pour générer la tension de sortie respective de sorte que la première connexion de tension de sortie respective (1410a; 1410b; 1410c) présente temporairement un potentiel qui est plus positif que le potentiel présent sur l'alimentation en tension d'entrée (1440), et pour la générer de sorte que la première connexion de tension de sortie respective (1410a;

1410b; 1410c) présente temporairement un potentiel qui est plus négatif que le potentiel présent sur l'alimentation en tension d'entrée (1440); et
dans lequel le point neutre (1462) est couplé à l'alimentation en tension d'entrée (1440);
dans lequel le premier convertisseur de tension continue-tension continue présente un circuit abaisseur et élévateur de tension;
dans lequel le circuit abaisseur et élévateur de tension présente un premier circuit en demi-pont (1430), qui est connecté entre l'alimentation en tension d'entrée (1440) et le noeud de potentiel de référence (1450), et qui présente deux interrupteurs de puissance connectés en série à commuter activement, où chacun des interrupteurs du premier circuit en demi-pont présente une diode de roue libre antiparallèle,
dans lequel un point central du premier circuit en demi-pont (1430) est connecté à un point central d'un deuxième circuit en demi-pont (1430a) par l'intermédiaire d'une première inductance (1433a),
dans lequel le deuxième circuit en demi-pont (1430a) présente deux interrupteurs de puissance à commuter activement,
dans lequel les interrupteurs de puissance du deuxième circuit en demi-pont (1430a) présentent, chacun, une diode de roue libre antiparallèle,
dans lequel une connexion négative du deuxième circuit en demi-pont (1430a) est connectée au noeud de potentiel de référence (1450), et
dans lequel une connexion positive du deuxième circuit en demi-pont (1430a) est connectée à la première connexion de tension de sortie (1410a) du premier convertisseur de tension continue-tension continue (1430, 1430a);
dans lequel le deuxième convertisseur de tension continue-tension continue (1430, 1430b) présente un troisième circuit en demi-pont (1430b),
dans lequel un point central du troisième circuit en demi-pont (1430b) est connecté au point central du premier circuit en demi-pont (1430) par l'intermédiaire d'une deuxième inductance (1433b),
dans lequel une connexion négative du troisième circuit en demi-pont (1430b) est connectée au noeud de potentiel de référence (1450),
dans lequel une connexion positive du troisième circuit en demi-pont est connectée à la première connexion de tension de sortie (1410b) du deuxième convertisseur de tension continue-tension continue (1430, 1430b);
dans lequel le troisième convertisseur de tension continue-tension continue (1430, 1430c) présente un quatrième circuit en demi-pont (1430c),
dans lequel un point central du quatrième circuit en demi-pont (1430c) est connecté au point central du premier circuit en demi-pont (1430) par l'intermédiaire d'une inductance (1433c),
dans lequel une connexion négative du quatrième circuit en demi-pont (1430c) est connectée au nœud de potentiel de référence (1450),
dans lequel une connexion positive du quatrième circuit en demi-pont (1430c) est connectée à la première connexion de tension de sortie du troisième convertisseur de tension continue-tension continue (1430, 1430c),
dans lequel le dispositif onduleur triphasé est conçu pour fournir un système de tension alternative triphasé aux connexions de tension de sortie.

2.  Dispositif onduleur triphasé (1400) selon la revendication 1,
dans lequel une fréquence d'horloge de la partie de circuit (1430) du côté de l'entrée est sélectionnée supérieure à une fréquence d'horloge des trois parties de circuit (1430a, 1430b, 1430c) du côté de la sortie.

3.  Dispositif onduleur triphasé (1400) selon l'une des revendications 1 à 2,
dans lequel le dispositif onduleur triphasé est conçu pour fournir un système de tension alternative triphasé symétrique avec un déphasage de 120 degrés aux connexions de tension de sortie.

4.  Dispositif onduleur triphasé (1400) selon l'une des revendications 1 à 3,
dans lequel le dispositif onduleur triphasé est conçu pour fournir une tension alternative sinusoïdale aux connexions de tension de sortie.

5.  Dispositif onduleur triphasé (1400) selon l'une des revendications 1 à 4,

dans lequel les convertisseurs de tension continue-tension continue (1430; 1430a; 1430b; 1430c) sont conçus pour générer la tension de sortie respective de sorte que
une valeur moyenne d'une courbe de potentiel respective à une connexion de tension de sortie respective diffère d'un potentiel à l'alimentation en tension d'entrée de tout au plus 10% de la tension d'entrée,
et pour la générer de sorte qu'une amplitude d'une courbe de potentiel à une connexion de tension de sortie respective soit d'au moins 30% d'une valeur de la tension d'entrée,
et pour la générer de sorte qu'une connexion de tension de sortie respective présente une courbe de potentiel sans moyenne variable dans le temps et se répétant périodiquement par rapport à l'alimentation en tension d'entrée,
et pour la générer de sorte qu'il existe un déphasage entre les tensions de sortie respectives.

6.  Circuit redresseur triphasé (1900) pour générer une tension continue de sortie ($U_{GS}$) qui est présente entre une première connexion de tension continue de sortie (1940) et une deuxième connexion de tension continue de sortie (1950), à partir d'une source de tension alternative triphasée (1960a; 1960b; 1960c), aux caractéristiques suivantes:

trois convertisseurs de tension continue-tension continue (1930; 1930a; 1930b; 1930c) qui sont conçus pour générer, sur base d'une différence de potentiel entre un premier potentiel d'une phase respective de la source de tension alternative triphasée (1960a; 1960b; 1960c) et un potentiel de la deuxième connexion de tension continue de sortie (1950), une tension de sortie ($U_{GS}$); et
dans lequel les convertisseurs de tension continue-tension continue (1930; 1930a; 1930b; 1930c) sont conçus pour générer la tension de sortie de sorte que la première connexion de tension continue de sortie (1940) présente, par rapport à la deuxième connexion de tension continue de sortie (1950), un potentiel qui est approximativement constant; et
dans lequel la source de tension alternative triphasée (1960a; 1960b; 1960c) est couplée à la première connexion de tension continue de sortie (1940) de sorte que la différence de potentiel entre un nœud de tension alternative d'entrée respectif (1910a; 1910b; 1910c) et la première connexion de tension continue de sortie (1940) corresponde à une tension délivrée par la phase respective de la source de tension alternative triphasée (1960a; 1960b; 1960c);
dans lequel le premier convertisseur de tension continu-tension continu (1930, 1930a) présente un circuit abaisseur et élévateur de tension;
dans lequel le circuit abaisseur et élévateur abaisseur présente un premier circuit en demi-pont (1930a) qui est connecté entre un premier nœud de tension alternative d'entrée (1910a) et la deuxième connexion de tension continue de sortie (1950), où chacun des interrupteurs du premier circuit en demi-pont (1930a) présente respectivement une diode de roue libre antiparallèle,
dans lequel un point central du premier circuit en demi-pont (1930a) est connecté à un point central d'un deuxième circuit en demi-pont (1930) par l'intermédiaire d'une inductance,
dans lequel les interrupteurs de puissance du deuxième circuit en demi-pont (1930) présentent, chacun, une diode de roue libre antiparallèle,

dans lequel une connexion négative du deuxième circuit en demi-pont (1930) est connectée à la deuxième connexion de tension continue de sortie (1950), et

dans lequel une connexion positive du deuxième circuit en demi-pont (1930) est connectée à la première connexion de tension continue de sortie (1940);

dans lequel le deuxième convertisseur de tension continue-tension continue (1930, 1930b) présente un troisième circuit en demi-pont (1930b) qui est connecté entre un deuxième noeud de tension alternative d'entrée (1910b) et la deuxième connexion de tension continue de sortie (1950), dans lequel chacun des interrupteurs du troisième circuit en demi-pont (1930b) présente respectivement une diode de roue libre antiparallèle,

dans lequel un point central du troisième circuit en demi-pont (1930b) est connecté au point central du deuxième circuit en demi-pont (1930) par l'intermédiaire d'une deuxième inductance,

dans lequel une connexion négative du troisième circuit en demi-pont (1930b) est connectée à la deuxième connexion de tension continue de sortie (1950),

dans lequel le troisième convertisseur de tension continue-tension continue (1930, 1930c) présente un quatrième circuit en demi-pont (1930c) qui est connecté entre un troisième noeud de tension alternative d'entrée (1910c) et la deuxième connexion de tension continue de sortie (1950), dans lequel chacun des interrupteurs du quatrième circuit en demi-pont (1930c) présente respectivement une diode de roue libre antiparallèle;

dans lequel un point central du quatrième circuit en demi-pont (1930c) est connecté au point central du deuxième circuit en demi-pont (1930) par l'intermédiaire d'une inductance,

dans lequel une connexion négative du quatrième circuit en demi-pont (1930c) est connectée à la deuxième connexion de tension continue de sortie (1950).

EP 3 455 932 B1

140 150 130 110 120 100

Gleichspannungs-
Gleichspannungs-
Wandler
(GS/GS-Wandler)

Fig. 1

Fig. 2

Fig. 3

Fig. 4

Fig. 5

EP 3 455 932 B1

Fig. 6

Fig. 7

800

810 — | Betreiben eines Gleichspannungs-Gleichspannungs-Wandlers. |

820 — | Abgreifen der Ausgangswechselspannung für die Energiesenke zwischen dem Ausgangsknoten und der Eingangsspannungs-zuführung, so dass die Potentialdifferenz zwischen der Eingangsspannungszuführung und dem Ausgangsknoten einer an der Energiesenke anliegenden Spannung entspricht. |

Fig. 8

900

922        920        926

910 ○————————————————————————————○ 930
    ○——————┐  ┌──────┐  ┌——————○

924        928

Fig. 9

Fig. 10

1110

Fig. 11a

1120

Fig. 11b

1130

Fig. 11c

1140

Fig. 11d

Fig. 12

Fig. 13

EP 3 455 932 B1

Fig. 14

WS-GS ← 1500a

$U_{GS}^+$

1540  1530  1510

1515

$U_{GS}$  GS/GS-Wandler  $U_{WS}$

1550

$U_{GS}^-$

1520

## Fig. 15a

1500b

1572

1571  $U_{WS}$

$U_{GS}^+$  1574

$U_{GS}^-$  1576  $U_{GS}$

1570

## Fig. 15b

WS-GS ⟵

1600a

1640a

1630a

1610a

$U_{GS}^+$

$U_{GS}$

1615a

$U_{WS}$

$U_{GS}^-$

1650a

1620a

## Fig. 16a

WS-GS ⟵

1600b

1615b

1640a

$U_{WS}$

1610b

$U_{GS}$

1650b

1630b

## Fig. 16b

Fig. 17

Fig. 18

EP 3 455 932 B1

Fig. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2015372615 A
- JP 2011130571 A
- US 2010019705 A1
- WO 2010051812 A1
- US 2014334213 A1
- DE 10205024465 A1
- US 20140078802 A1

- WO 2015193003 A1
- EP 1168593 A2
- EP 2048774 A2
- DE 102005015658 A1
- CH 699364 B1
- DE 102015219850